# EUROPEAN PATENT APPLICATION

(11) **EP 1 847 767 A1**
(43) Date of publication of application: **24.10.2007**
(21) Application number: 06713197.9
(22) Date of filing: 07.02.2006
(51) Int. Cl.: F21V 8/00, F21S 2/00, G02F 1/13357, G02B 6/00, F21Y 103/00

(54) **LIGHT GUIDE PLATE, AND PLANAR LIGHTING DEVICE AND LIQUID CRYSTAL DISPLAY DEVICE USING SUCH LIGHT GUIDE PLATE**

(30) Priority: 08.02.2005 JP 2005032231; 17.02.2005 JP 2005041398; 20.04.2005 JP 2005122368; 18.08.2005 JP 2005237508; 23.01.2006 JP 2006013873
(71) Applicant: FUJIFILM Corporation, Minato-ku Tokyo 106-8620 (JP)
(72) Inventor: IWASAKI, Osamu, i-ashigara-shi, Kanagawa, 250-0193 (JP); MATSUSHITA, Motohiko, i-ashigara-shi, Kanagawa, 250-0193 (JP); OKUMURA, Takamitsu, i-ashigara-shi, Kanagawa, 250-0193 (JP); ENDO, Toshiaki, gawa, 250-0134 (JP)
(74) Representative: Klunker . Schmitt-Nilson . Hirsch
(86) International application number: PCT/JP2006/302054
(87) International publication number: WO 2006/085526

(57) **Abstract**

A parallel groove of a light guide place for accommodating a light source has, in a perpendicular cross section, a shape composed of a pair of contour lines that approach each other toward a light emitting plane, cross at a peak, and has a part where an inclination angle to a line vertical to the light emitting plane changes, and the inclination angle at a base end side far from the peak is sharper than that at a tip end side close to the peak. Thus, uniform and high brightness light can be emitted.

## Description

### TECHNICAL FIELD

The present invention relates to a transparent light guide plate for diffusing light admitted from rod-type light sources in a direction substantially parallel to a light emitting plane and emitting an illumination light with an enhanced uniformity from the light emitting plane and a planar lighting device and a liquid crystal display device using said light guide plate.

### BACKGROUND ART

A liquid crystal display device uses a backlight unit to illuminate its liquid crystal panel (LCD) from the rear side of the liquid crystal panel.
Currently, large liquid crystal display televisions predominantly use a backlight unit of a type called a direct illumination type (see JP 05-4133 U, for example). A backlight unit of direct illumination type has a plurality of cold cathode tubes provided behind the rear side of the liquid crystal panel as light sources to illuminate the liquid crystal panel; the inside of a housing in which the cold cathode tubes are arranged is constituted by white reflecting surfaces. To achieve an even light amount distribution with this type of backlight unit, however, the liquid crystal panel needs to have a thickness of about 30 mm in a direction perpendicular to the panel as dictated by the principle.
Recent years have been seeing demands for thinner liquid crystal display devices, liquid crystal display devices consuming less power, or larger liquid crystal display devices. However, there was a limit to how thin a liquid crystal display device could be made because of unevenness in light amount distribution that occurred when the thickness of a backlight unit of the direct illumination type mentioned above used therein was reduced to 10 mm or less.
Among backlight units that permit thinning is a backlight unit of a so-called tandem type, which is composed of a plurality of units each provided with a light guide plate beside an illumination light source (see JP 11-288611 A, for example). A conventional backlight unit of this type could be made thin by admitting light from lateral sides of each light guide plate. However, this conventional type had a shortcoming of lower light use efficiency than the backlight unit of the direct illumination type and therefore entailed more power consumption in order to emit sufficient light to achieve high brightness.
Thus, light guide plates of various configurations have been proposed to achieve thinner liquid crystal display devices, liquid crystal display devices consuming less power, or larger liquid crystal display devices (see JP 09-304623 A, JP 08-62426 A, JP 10-133027 A, JP 05-249320 A, JP 2001-42327 A, and JP 2002-75036 A).

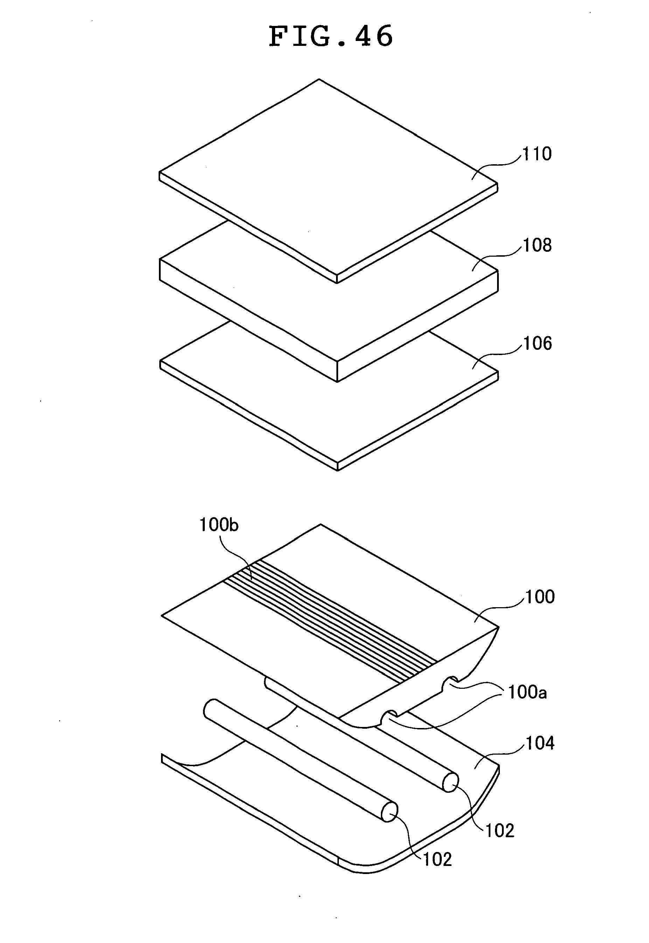

Fig. 46 is a schematic cross-sectional view of a planar light source device having a light guide plate 100 disclosed in JP 09-304623 A.
The planar light source device (backlight unit) illustrated in that drawing is so formed that after fluorescent lamps 102 are accommodated in a light guide plate 100, a reflective sheet 104 is disposed on the rear surface of the light guide plate 100, and the light guide plate is provided on its light emitting plane with a transmitted light amount correction sheet 106, a light diffusion plate 108, and a prism sheet 110.
The light guide plate 100 has a substantially rectangular shape and is made of a resin into which fine particles functioning to diffuse illumination light are dispersed. The light guide plate 100 has a flat upper surface that serves as the light emitting plane. Grooves 100a each having a U shape in cross section are formed in the rear surface (surface opposite from the light emitting plane) of the light guide plate to accommodate the respective fluorescent lamps 102. A light amount correction surface 100b to facilitate the emission of illumination light is formed on the light emitting plane of the light guide plate 100, except in the areas just above the fluorescent lamps 102.
Thus, JP 09-304623 A discloses that the fine particles are mixed into the resin to form the light guide plate 100, and the emission of the illumination light is facilitated by the light amount correction surface 100b formed on part or all of the light emitting plane except in the areas just above the fluorescent lamps, reducing the total thickness and unnatural unevenness in brightness of the emitted light.

JP 08-62426 A discloses a light guide plate comprising a rectangular illumination plane, a groove having a rectangular cross section that is formed at the center of the shorter sides and parallel to the longer sides to accommodate a light source, and rear surfaces formed such that a plate thickness gradually decreases from the groove toward both lateral end surfaces on the longer sides to provide a backlight unit for a liquid crystal display device which enables reduction in size, weight, and thickness of the liquid crystal display device as well as reduction in manufacturing costs and power consumption without reducing the amount of illumination provided by the backlight unit.
JP 10-133027 A describes a light guide member (light guide plate) having a groove of a parabolic shape in cross section parallel to a widthwise direction of a recess for accommodating a light source formed in the light guide member, the major axis of the parabolic shape lying in the direction of depth of the recess, in order to obtain a backlight unit that, with a high light use efficiency and, hence, high brightness, makes it possible to provide a liquid crystal display device with a thinned frame and a reduced thickness.

JP 05-249320 A describes a light guide plate in which sheet-shaped light waveguide layers are laminated on symmetrically inclined high-reflectance layers such that refractive indices increase successively, to illuminate light diffusing layers with light emitted from light emitting end surfaces of the reflective layers, in order to keep brightness on a display surface of a display panel uniform and illuminate with high brightness. The recess for accommodating a light source is triangular.

JP 2001-42327 A describes a large-area, high-brightness rear illumination with high uniformity using light guide plates arranged in juxtaposition and a given number of linear light sources provided between the light guide plates to achieve an improved liquid crystal backlight unit to provide large liquid crystal display surface in wall-mounted televisions.

JP 2002-75036 A discloses a lighting device comprising a plurality of linear or rod-type light sources arranged in parallel, a light guide plate having a plurality of grooves accommodating the light sources, light diffusing and reflecting means provided on one side of the light guide plate, light diffusing means provided on a side of the light guide plate opposite from the side on which the light diffusing and reflecting means is provided, and semi-transmissive reflecting means provided between the light sources and the light diffusing means, wherein the surface facing said light diffusing means is a flat surface, the sectional shape of the above light guide plate comprises an inclined surface forming a curve and growing thinner with an increasing distance from the light source, when the angles of inclination on the front surface of the light guide plate with respect to the rear surface at a position relatively closer to the light source and a like position relatively farther from the light source are θn2 and θf2, respectively, and the relation θn2 ≤ θf2 is satisfied and the inclination angle at the thinnest portion on the surface of the light guide plate is virtually 0°.

The light guide plates described in the above references aim to achieve some of a thinner design, a larger design, less power consumption, and reduced manufacturing costs for liquid crystal display devices. In all of these references, the light guide plate has one or more grooves formed at the center thereof to accommodate a linear light source therein, and the thickness of the plate preferably decreases from the groove toward the end surfaces to achieve a thinner design.

Patent Document 1: JP 05-4133 U
Patent Document 2: JP 11-288611 A
Patent Document 3: JP 09-304623 A
Patent Document 4: JP 08-62426 A
Patent Document 5: JP 10-133027 A
Patent Document 6: JP 05-249320 A
Patent Document 7: JP 2001-42327 A
Patent Document 8: JP 2002-75036 A

### DISCLOSURE OF THE INVENTION

### PROBLEMS TO BE SOLVED BY THE INVENTION

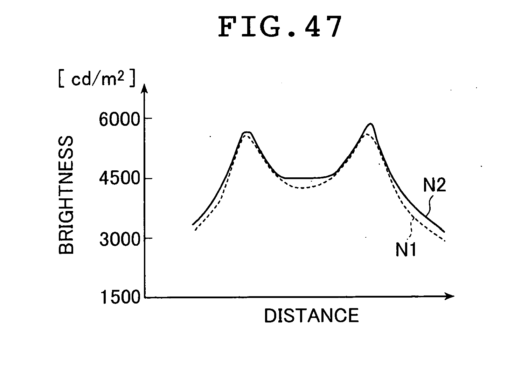

The light guide plate described in JP 09-304623 A has the light amount correction surface 100b, such as a rough surface or a microprism surface, formed on the light emitting plane except in areas located just above the light sources (fluorescent lamps) 102, to facilitate the emission of the illumination light incident on the light emitting plane at an angle not less than a critical angle with respect to the light emitting plane. As shown in Fig. 47, however, this configuration provided only a slight increase in brightness N2 of illumination light indicated by a solid line emitted from a light guide plate provided with the light amount correction surface 100b as compared with brightness N1 of illumination light indicated by a dotted line emitted from a light guide plate without a light amount correction surface. Thus, the light guide plate described in JP 09-304623 A has a shortcoming that the improvement in brightness of illumination light achieved by providing the light amount correction surface 100b is not significant, the use efficiency of the light emitted from the light sources is low, and the diffusion of the light emitted from the light sources is inadequate, failing to emit uniform and bright enough light from the light emitting plane.
The light guide plate 100 described in JP 09-304623 A has the light sources (fluorescent lamps) 102 fitted in the grooves 100a each with a circular cross section, whereby, as shown in Fig. 47, the peak of brightness provided by the light source 102 still remained. Thus, for this light guide plate to be used as a planar light source device, unnatural unevenness in brightness observed on the light emitting plane must be eliminated using, for example, a transmitted light amount correction sheet 106, the light diffusion plate 108, and the prism sheet 110 provided on the side of the light guide plate closer to the light emitting plane. This, however, results in increased costs for the manufacture of the planar light source device.

In the backlight unit for a liquid crystal display device described in JP 08-62426 A, space created by the inclined rear surfaces of the light guide plate is used to therein dispose component parts mounted on electronic circuit boards, thereby to provide a low-cost, low power-consumption backlight unit and achieve a smaller, thinner, and lighter design of a liquid crystal display device. No consideration, however, is given to address the unevenness in brightness of the illumination light emitted from the light emitting plane of the light guide plate.
The backlight unit for a liquid crystal display device described in JP 10-133027 A has the groove with the parabolic cross section formed in the light guide member (light guide plate) to admit light to the light guide member such that light is substantially uniformly diffused in the light guide plate to enhance the light use efficiency. No consideration, however, is given to address the unevenness of the light emitted from the light emitting plane of the light guide member.
The light guide plate described in JP 05-249320 A has a complicated structure with the laminated sheet-shaped lightwave guide plates to reduce attenuation of brightness and achieve uniform brightness as compared with the prior art, thereby purportedly offering enhanced illumination effects. However, the proposed light guide plate has a drawback of increased manufacturing costs.

With the light guide plate described in JP 2001-042327 A, brightness rises in areas located just above the linear light sources. Therefore, light transmittance inhibiting patterns must be provided to restrict the transmittance of source light from the linear light sources. Further, since the light emitted from the linear light sources travels inside the light guide plate from one end thereof to the other in the direction of the plane, the amount of light attenuated gradually and a sufficiently increased level of brightness could not be attained.
Further, the light guide plate for the lighting device disclosed in JP 2002-75036 A, having a drawback that the brightness increased just above the rod-type light sources, had like problems.

A first object of the present invention is to solve the problems presented by the above-mentioned prior art and provide a thin and lightweight light guide plate having a high light use efficiency (light emitting efficiency) of the light emitted from the light emitting plane and capable of emitting illumination light with an enhanced uniformity, a reduced unevenness, and a higher brightness.
Another object of the present invention in addition to the first object is to provide a light guide plate with a light emitting plane that can be enlarged.

A second object of the present invention is to solve the problems presented by the above-mentioned prior art and provide a thin and lightweight light guide plate that can be manufactured at lower costs, provides a high light use efficiency, can emit illumination light with an enhanced uniformity, reduced unevenness, and a higher brightness, and enables a large illuminating surface to be formed or can be applied as a backlight to a liquid crystal display device such as a wall-mounted television set.

### MEANS TO SOLVE THE PROBLEMS

To achieve the first object, a first embodiment of a first aspect according to the present invention provides a transparent light guide plate comprising: a rectangular light emitting plane; a thick portion parallel to one side edge of the rectangular light emitting plane and located substantially at a center of the rectangular light emitting plane; a pair of thin end portions formed substantially parallel to the thick portion; a parallel groove for accommodating a rod-type light source and formed substantially parallel to the one side edge at substantially a center of the thick portion and on a side opposite to the rectangular light emitting plane; and a pair of inclined rear portions formed such that a thickness of each of the pair of inclined rear portions decreases in a perpendicular direction substantially perpendicular to the one side edge from the thick portion toward each of the pair of thin end portions at both ends to form a pair of inclined rear surfaces on both sides of the parallel groove, wherein the parallel groove having a shape formed by a pair of contour lines approaching each other toward the rectangular light emitting plane to cross each other at a peak in cross section in the perpendicular direction, and each of the contour lines of the parallel groove in the cross section in the perpendicular direction comprises a part in which an inclination angle with respect to a line perpendicular to the rectangular light emitting plane changes such that the inclination angle of a base end side farther from the peak is smaller than the inclination angle of a tip end side closer to the peak.

To be brief, the light guide plate according to the present invention is a bridge type light guide plate in which the sectional shape of the parallel groove, which serves as a light admitting part, is defined by combined curves such that the lower portion of the light admitting part has a sectional shape with an increased inclination in relation to the inclination of the curves defining a part near a peak, the sectional shape of a lower portion of the light admitting part being formed by segments having the same angle as a tapered portion.
Preferably, the intermediate part of the joint between the tapered part and the parallel groove serving as the light admitting part in a sectional shape of the parallel groove serving as the light admitting part of the light guide plate is parallel to the light emitting plane.

Preferably, in the cross section of the parallel groove in the perpendicular direction, a tip end portion of the parallel groove has a shape defined by the pair of contour lines approaching each other toward the rectangular light emitting plane in accordance with to a ratio of a peak value of illuminance or brightness produced by light emitted from the rod-type light source accommodated in the parallel groove in a first portion of the rectangular light emitting plane corresponding to the parallel groove to a mean value of the illuminance or brightness produced by the emitted light in second portions corresponding to the pair of inclined rear portions.

Preferably, the pair of inclined rear portions are symmetrical with respect to a plane perpendicular to the rectangular light emitting plane and containing an axis of the rod-type light source, the pair of contour lines of the parallel groove are symmetrical with respect to a center line of the parallel groove perpendicular to the rectangular light emitting plane in the cross section in the perpendicular direction, and the tip end portion of the parallel groove narrows it's width toward the rectangular light emitting plane symmetrically with respect to the center line of the parallel groove perpendicular to the rectangular light emitting plane in cross section of the parallel groove in the perpendicular direction.

Preferably, the pair of contour lines forming the tip end portion of the parallel groove approach each other such that the peak value of the illuminance (relative illuminance) or brightness (relative brightness) in the first portion of the rectangular light emitting plane is not greater than 3 times the mean value of the illuminance (relative illuminance) or brightness (relative brightness) in the second portions.
Preferably, the peak value of the illuminance (relative illuminance) or brightness (relative brightness) in the first portion of the rectangular light emitting plane is not greater than twice the mean value of the illuminance (relative illuminance) or brightness (relative brightness) in the second portions.

Preferably, the pair of inclined rear portions have parallel portions parallel to the rectangular light emitting plane near the parallel grooves.
Preferably, plural small prisms are formed on the rectangular light emitting plane and/or the pair of inclined rear portions.

Preferably, plural small prisms are formed on the pair of inclined rear portions.
Preferably, the plural small prisms formed on the pair of inclined rear portions have different configurations in accordance with their positions in the perpendicular direction.
Preferably, each of the plural small prisms formed on the pair of inclined rear portions has an asymmetrical configuration with respect to the plane perpendicular to its base and passing through its apex.
Preferably, each of the plural small prisms formed on the pair of inclined rear portions has an asymmetrical configuration with respect to a plane passing through prism apexes of the plural small prisms and perpendicular to the pair of inclined rear portions without prisms provided thereon.
Preferably, each of the plural small prisms formed on the pair of inclined rear portions has an asymmetrical configuration with respect to the line perpendicular to the line connecting contact points of adjacent prisms and passing through its apex in cross section in the perpendicular direction.
Preferably, each of the plural small prisms formed on the pair of inclined rear portions has a configuration such that the length of one contour line connecting its apex and the end closer to the parallel groove is different from the length of another contour line connecting the apex and the end closer to the thin end portion in cross section in the perpendicular direction.

Preferably, each of the plural small prisms formed on the pair of inclined rear portions has a prism apex whose angle ranges between 70° inclusive and 140° inclusive.
Preferably, each of the plural small prisms formed on the pair of inclined surfaces are so configured that an angle formed by a plane being perpendicular to a prism base of each of the plural small prisms and passing through a prism apex of each of the plural small prisms, and one surface of each of the plural small prisms closer to the parallel groove ranges from 0° inclusive to 70° inclusive, and an angle formed by the plane being perpendicular to the prism base of each of the plural small prisms and passing through the prism apex of each of the plural small prisms, and one surface of each of the plural small prisms closer to the thin end portion ranges from 45° inclusive to 70° inclusive.
More preferably, each of the prisms formed on the pair of inclined surfaces are so configured that an angle formed by the plane perpendicular to its base and passing through its apex and its surface closer to the parallel groove ranges from 30° inclusive to 70° inclusive.
Preferably, each of the plural small prisms has a prism base not longer than 0.1 mm in the perpendicular direction.

Preferably, the pair of contour lines in the tip end portion form an angle of 90° or less in the cross section of the parallel groove.
Preferably, the pair of contour lines in the tip end portion form an angle of 60° or less in the cross section of the parallel groove.

Preferably, the pair of contour lines of at least the tip end portion of the parallel groove are segments of two straight or curved lines that cross each other to form an acute intersection and which are symmetrical with respect to the center line.
Preferably, the two curved lines defining the pair of contour lines of at least the tip end portion of the parallel groove are curved outward or inward with respect to the center of the parallel groove.
Preferably, the two contour lines defining the sectional shape of at least the tip end portion of the parallel groove can be approximated by a 10th-order function and are curved outward or inward with respect to the center of the parallel groove.
Preferably, the two curved lines defining the pair of contour lines of at least the tip end portion of the parallel groove or the pair of contour lines of the parallel groove are segments of a circle, an ellipse, a parabola, or a hyperbola curving outward or inward with respect to the center of the parallel groove.

Preferably, a sectional shape of at least the tip end portion of the parallel groove or the sectional shape of the parallel groove is a triangle.
Preferably, a sectional shape of a top of the tip end portion of the parallel groove has a configuration composed of connected straight or curved lines symmetrical with respect to the center line before the two symmetrical straight or curved lines cross each other.

Preferably, the sectional shape of the top of the tip end portion of the parallel groove has a configuration comprising a portion parallel to the light emitting plane formed by chamfering the acute intersection.
Preferably, the sectional shape of at least the tip end portion of the parallel groove or the sectional shape of the parallel groove is a triangle, and the sectional shape of the top of the tip or peak end portion of the parallel groove is a trapezoid symmetrical with respect to the center line.
Preferably, the sectional shape of the top of the tip end portion of the parallel groove is represented by the lines curving outward or inward with respect to the rectangular light emitting plane and symmetrical with respect to the center line.

Preferably, the sectional shape of the top of the tip end portion of the parallel groove is circular, elliptical, parabolic or hyperbolic as a result of rounding one acute intersection symmetrically with respect to the center line.
Preferably, the pair of contour lines of at least the tip end portion of the parallel groove are segments of an ellipse or a hyperbola.
Preferably, the top of the tip end portion of the parallel groove is a sand-rubbed surface.
Preferably, the rectangular light emitting plane has halftone dots in an area thereof corresponding to the top of the tip end portion of the parallel groove.

To achieve other objects in addition to the first object, a second embodiment of the first aspect according to the present invention provides a light guide plate comprising a plurality of light guide plate blocks, each light guide plate block being the light guide plate according to the first embodiment, wherein the plurality of light guide plate blocks are joined together at thin end surfaces of light guide plates.
Preferably, respective inclined rear surfaces of two light guide plate blocks joined together have portions inclined gently with respect to each other at joints of the respective inclined thin end surfaces.
Preferably, the light guide plates according to the first and the second embodiments are each composed of a material comprising at least a plasticizer mixed in a transparent resin.

To achieve the above second object, the second aspect according to the present invention provides a planar lighting device comprising: a light guide plate according to the above first aspect; a rod-type light source accommodated by the parallel groove of the light guide plate; a reflector provided behind the rod-type light source to close the parallel groove; a reflective sheet attached to the pair of inclined rear surfaces of the pair of inclined rear portions on both sides of the thick portion of the light guide plate; and a diffusion sheet disposed on the rectangular light emitting plane of the light guide plate.

Preferably, the planar lighting device according to the second aspect of the present invention further comprises a prism sheet disposed between the rectangular light emitting plane of the light guide plate and the diffusion sheet.
Preferably, the ratio of the peak value of the relative illuminance or the relative brightness observed in the first portion of the rectangular light emitting plane of the light guide plate to the average value of the relative illuminance or the relative brightness observed at the second portions is set according to an allowable space between the rectangular light emitting plane of the light guide plate and the diffusion sheet or an allowable thickness of the planar lighting device.

To achieve the above third object, a third aspect of the present invention provides a liquid crystal display device, comprising: a backlight unit consisting of the planar lighting device according to the above second aspect; a liquid crystal display panel disposed on a side of the backlight unit closer to the rectangular light emitting plane of the light guide plate; and drive units for driving the backlight unit and the liquid crystal display panel.

### EFFECTS OF THE INVENTION

According to the first aspect of the present invention, the light guide plate can be made thinner and more lightweight, and illumination light with an enhanced light use efficiency (light emitting efficiency) and an enhanced uniformity, hence a reduced unevenness, can be emitted from its light emitting plane.
Further, according to the first embodiment of the first aspect of the present invention, the peak of the illuminance or the brightness can be reduced whereas uniformity in illuminance or brightness on the light emitting plane can be enhanced so that the brightness distribution can be brought still closer to a flat distribution by tapering the sectional shape of the parallel groove in the direction of the peak end portion toward the light emitting plane according to the ratio of the peak of the illuminance or the brightness produced by light emitted from the rod-type light source accommodated in the parallel groove in the first portion of the light emitting plane corresponding to the parallel groove to the average value of the illuminance or the brightness in other areas. Further, the light use efficiency (light emitting efficiency) can be enhanced, and a high uniformity and a high light emitting efficiency required of the light emitting plane can be achieved by inclining the base end portion to a greater degree, e.g., more acutely, in cross section than the peak end portion.
Further, according to a preferred embodiment of the first aspect of the present invention, the peak of the illuminance or the brightness can be reduced, and uniformity in illuminance or brightness on the light emitting plane can be achieved by tapering the sectional shape of the parallel groove in the direction of the peak end portion toward the light emitting plane such that the peak of the illuminance or the brightness in the first portion of the light emitting plane is not greater than 3 times the average value of the illuminance or the brightness in other areas.

Further, the light guide plate having portions in the pair of inclined rear portions parallel to the light emitting plane is capable of a higher light use efficiency (light emitting efficiency).
Further, the light guide plate formed with the plurality of small prisms on at least one of the rectangular light emitting plane and the pair of inclined rear portions can, when used as a backlight, eliminate the need for prism sheets, enhance the light use efficiency (light emitting efficiency) of the backlight, be reduced in dimensions, and allow cost reductions.
Still further, according to the second embodiment of the first aspect of the present invention, the light emitting plane of the light guide plate can be enlarged by connecting light guide plates according to the above first aspect at their thin end portions.

Further, according to the second aspect of the present invention, the use of the light guide plates according to the first aspect enables providing a thin and lightweight planar lighting device that can be manufactured at lower costs; emit illumination light with a high light use efficiency, an enhanced uniformity, hence a reduced unevenness, and a higher brightness; and have a large illuminating surface or be applied to a liquid crystal display device for, e.g., a wall-mounted television set.
Further still, according to the third aspect of the present invention, the use of the planar lighting device according to the second aspect enables providing a thin and lightweight planar lighting device that can be manufactured at lower costs; display with a high light use efficiency, an enhanced uniformity, hence a reduced unevenness, and a higher brightness; and have a display screen that permits enlargement, or be a wall-mounted type such as a wall-mounted television set.

### BRIEF DESCRIPTION OF THE DRAWINGS

[Fig. 1] Fig. 1 is a schematic cross-sectional view illustrating a structure in which a plurality of light guide plates of the present invention are arranged in juxtaposition.
[Fig. 2] Figs. 2A and 2B are a schematic perspective view and a schematic cross-sectional view, respectively, of a liquid crystal display device using a backlight unit having a light guide plate of the present invention.
[Fig. 3] Fig. 3A is a schematic cross-sectional view illustrating how the prism sheet is disposed between the reflective sheet and the inclined surfaces of the light guide plate, Fig. 3B is a schematic top plan view of the prism sheet disposed between the reflective sheet and the inclined surfaces of the light guide plate as seen from the light guide plate, and Fig. 3C is a schematic cross-sectional view of the prism sheet.

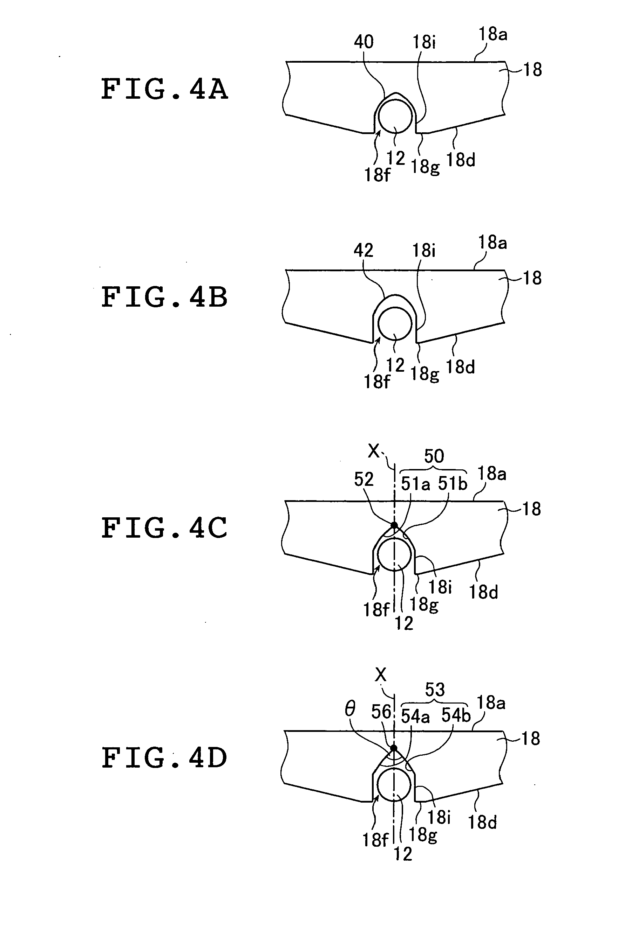

[Fig. 4] Fig. 4A is a schematic cross-sectional view of a periphery of the parallel groove of the light guide plate, wherein a pair of tip end surfaces of the parallel groove have a hyperbolic shape in cross section perpendicular to the lengthwise direction of the light guide plate, Fig. 4B is a schematic cross-sectional view of a periphery of the parallel groove of the light guide plate, wherein the pair of tip end surfaces of the parallel groove have an elliptic shape in cross section perpendicular to the lengthwise direction of the light guide plate, Fig. 4C is a schematic cross-sectional view of a periphery of the parallel groove of the light guide plate, wherein the pair of tip end surfaces of the parallel groove have a shape defined by segments of two arcs symmetrical with respect to the center line passing through the center of the parallel groove and perpendicular to the light emitting plane of the light guide plate in cross section perpendicular to the lengthwise direction of the light guide plate, and Fig. 4D is a schematic cross-sectional view of a periphery of the parallel groove of the light guide plate, wherein the pair of tip end surfaces of the parallel groove have a shape defined by segments of two parabolas symmetrical with respect to a center line passing through the center of the parallel groove and perpendicular to the light emitting plane of the light guide plate in cross section perpendicular to the lengthwise direction of the light guide plate.

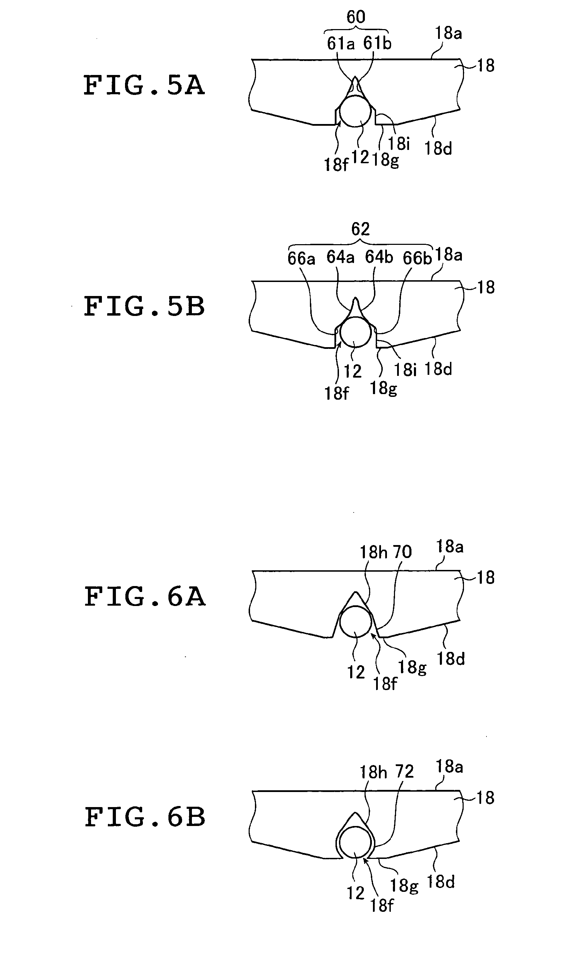

[Fig. 5] Fig. 5A is a schematic cross-sectional view of a periphery of the parallel groove of the light guide plate, wherein the pair of tip end surfaces of the parallel groove have a sectional shape defined by two curves curving outward with respect to the center of the parallel groove in cross section perpendicular to the lengthwise direction of the light guide plate, and Fig. 5B is a schematic cross-sectional view of a periphery of the parallel groove of the light guide plate wherein the pair of tip end surfaces of the parallel groove have a sectional shape defined by a combination of a curve curving outward and a curve curving inward with respect to the center of the parallel groove in cross section perpendicular to the lengthwise direction of the light guide plate.
[Fig. 6] Fig. 6A is a schematic cross-sectional view of a periphery of the parallel groove of the light guide plate, wherein a pair of base end surfaces of the parallel groove have a sectional shape defined by segments forming a sharper angle than the pair of tip end surfaces in cross section perpendicular to the lengthwise direction of the light guide plate, and Fig. 6B is a schematic cross-sectional view of a periphery of the parallel groove of the light guide plate wherein the pair of base end surfaces of the parallel groove have a sectional shape defined by curves curving inward with respect to the center of the parallel groove in cross section perpendicular to the lengthwise direction of the light guide plate.
[Fig. 7] Fig. 7 is a schematic cross-sectional view illustrating another embodiment of the inventive light guide plate.
[Fig. 8] Fig. 8 illustrates an example of a halftone dot pattern formed on a side of the light guide plate closer to the light emitting plane.

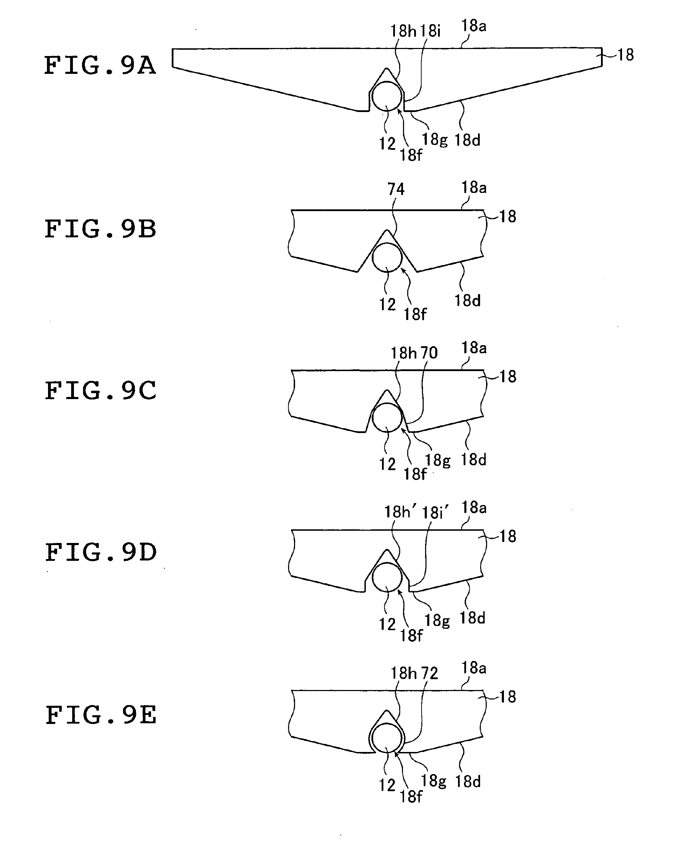

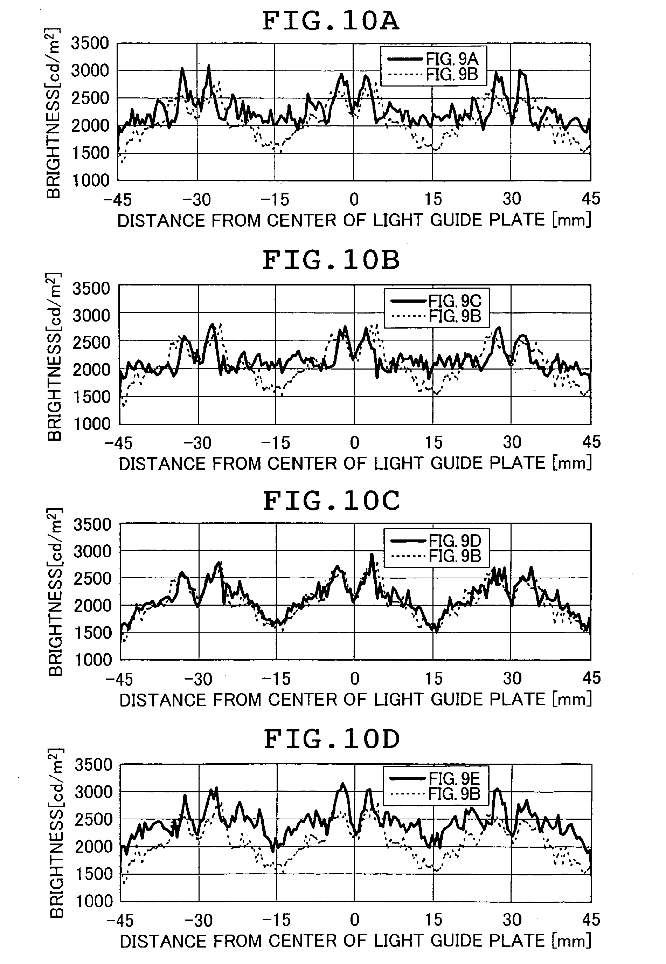

[Fig. 9] Fig. 9A is a schematic cross-sectional view of a periphery of the parallel groove of the light guide plate wherein the pair of tip end surfaces of the parallel groove has a sectional shape defined by oblique lines, and the pair of base end surfaces of the parallel groove have a sectional shape defined by segments perpendicular to the light emitting plane, Fig. 9B is a schematic cross-sectional view of a periphery of the parallel groove of the light guide plate wherein the pair of tip end surfaces of the parallel groove has a sectional shape defined by oblique lines, and the pair of base end surfaces of the parallel groove have a sectional shape defined by segments having a same inclination as the pair of tip end surfaces, Fig. 9C is a schematic cross-sectional view of a periphery of the parallel groove of the light guide plate wherein the pair of tip end surfaces of the parallel groove has a sectional shape defined by oblique lines, and the pair of base end surfaces of the parallel groove have a sectional shape defined by segments having a sharper inclination than the pair of tip end surfaces, Fig. 9D is a schematic cross-sectional view of a periphery of the parallel groove of the light guide plate wherein the joints between the pair of tip end surfaces and the pair of base end surfaces are located closer to parallel portions, Fig. 9E is a schematic cross-sectional view of a periphery of the parallel groove of the light guide plate wherein the pair of tip end surfaces of the parallel groove have a sectional shape defined by oblique lines, and the pair of base end surfaces of the parallel groove have a sectional shape defined by curves curving inward with respect to the center of the parallel groove.
[Fig. 10] Figs. 10A to 10D are graphs each illustrating brightness distributions of the light emitted from the light emitting planes of the light guide plates of Fig. 9A, Fig. 9C, Fig. 9D and Fig. 9E, respectively.
[Fig. 11] Figs. 11A to 11C are schematic views illustrating structures of peripheries of the light guide plates of Fig. 9A, Fig. 9C and Fig. 9D, respectively, without parallel surfaces.
[Fig. 12] Figs. 12A to 12C are graphs each illustrating brightness distributions of the light emitted from the light emitting planes of the light guide plates of Fig. 11A, Fig. 11B, and Fig. 11C, respectively.

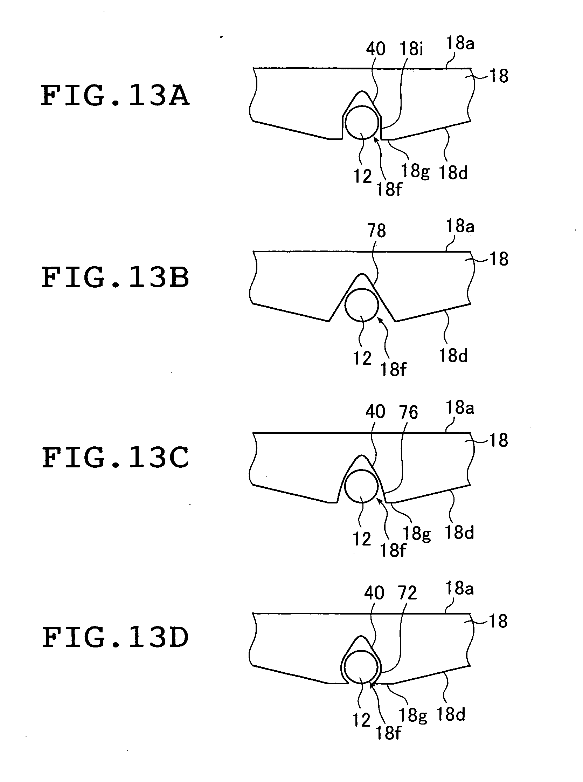

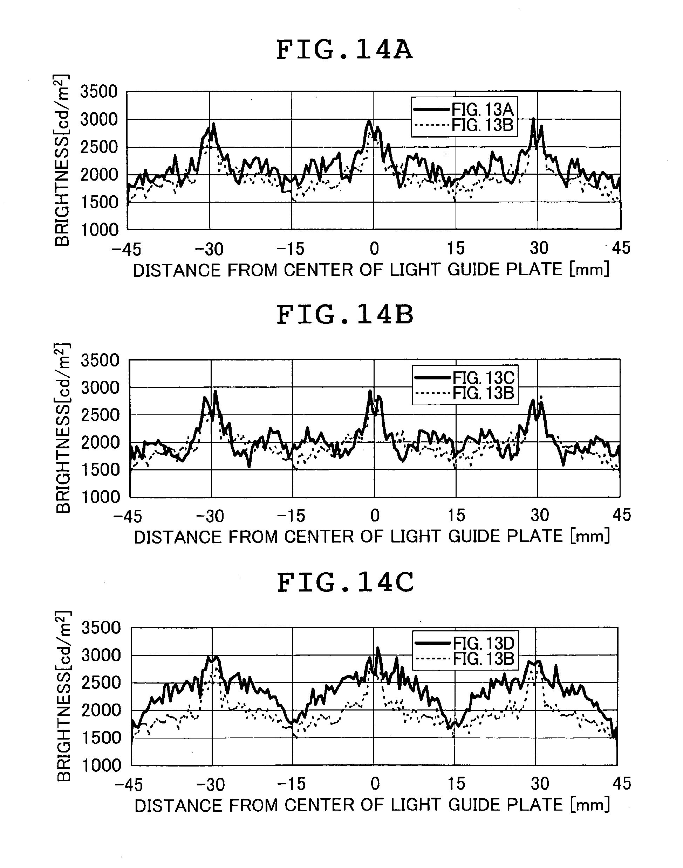

[Fig. 13] Fig. 13A is a schematic cross-sectional view of a periphery of the parallel groove of the light guide plate wherein the pair of tip end surfaces of the parallel groove have a sectional shape each defined by a hyperbola, and the pair of base end surfaces of the parallel groove have a sectional shape each defined by a segment perpendicular to the light emitting plane, Fig. 13B is a schematic cross-sectional view of a periphery of the parallel groove of the light guide plate wherein the pair of tip end surfaces of the parallel groove have a sectional shape each defined by a hyperbola, and the pair of base end surfaces of the parallel groove have a sectional shape each defined by the same hyperbola as the pair of tip end surfaces, Fig. 13C is a schematic cross-sectional view of a periphery of the parallel groove of the light guide plate wherein the pair of tip end surfaces of the parallel groove has a sectional shape each defined by a hyperbola, and the pair of base end surfaces of the parallel groove have a sectional shape each defined by a hyperbola inclined more sharply than that defining the pair of tip end surfaces, Fig. 13D is a schematic cross-sectional view of a periphery of the parallel groove of the light guide plate wherein the pair of tip end surfaces of the parallel groove have a sectional shape each defined by a hyperbola, and the pair of base end surfaces of the parallel groove have a sectional shape each defined by a curve curving inward with respect to the center of the parallel groove.
[Fig. 14] Figs. 14A to 14C are graphs each illustrating brightness distributions of the light emitted from the light emitting planes of the light guide plates of Fig. 13A, Fig. 13C, and Fig. 13D, respectively.
[Fig. 15] Figs. 15A and 15B are schematic views illustrating structures of peripheries of the light guide plates of Fig. 13A and Fig. 13C, respectively, without the parallel surfaces.
[Fig. 16] Figs. 16A and 16B are graphs each illustrating brightness distributions of the light emitted from the light emitting planes of the light guide plates of Fig. 15A and Fig. 15B, respectively.
[Fig. 17] Fig. 17 is a schematic cross-sectional view illustrating another embodiment of the inventive light guide plates arranged in juxtaposition.
[Fig. 18] Fig. 18A illustrates an embodiment of structure wherein reflective plates are provided on lateral sides of the light guide plate, and Fig. 18B illustrates an embodiment of structure wherein reflective plates are provided on lateral sides of light guide plates arranged in juxtaposition.
[Fig. 19] Fig. 19A is a schematic cross-sectional view illustrating how prisms are formed in the inclined surfaces of the light guide plate, and Fig. 19B is a schematic top plan view and a schematic transverse sectional view of the inclined surfaces of the light guide plate provided with prisms as seen from the light emitting plane.
[Fig. 20] Fig. 20 is a schematic cross-sectional view illustrating how prisms are formed in the inclined surfaces and the light emitting plane of the light guide plate.
[Fig. 21] Fig. 21A and Fig. 21B are schematic perspective views of a housing accommodating the backlight unit.
[Fig. 22] Fig. 22 is a schematic perspective view of a housing accommodating the backlight unit and the liquid crystal display panel.
[Fig. 23] Fig. 23 is a schematic cross-sectional view of a housing accommodating the backlight unit and the liquid crystal display panel.
[Fig. 24] Fig. 24 is a schematic cross-sectional view as enlarged illustrating both ends of the housing of Fig. 23.
[Fig. 25] Fig. 25A is a schematic cross-sectional view illustrating an embodiment of a light source used in the inventive backlight unit, Fig. 25B is a schematic perspective view illustrating an embodiment of positioning means for the light source, Fig. 25C and Fig. 25D are schematic cross-sectional views of the light source illustrated in Fig. 25A and Fig. 25B.
[Fig. 26] Fig. 26A is a schematic cross-sectional view illustrating another embodiment of the inventive light guide plate, and Fig. 26B is a bottom view of the light guide plate illustrated in Fig. 26A.

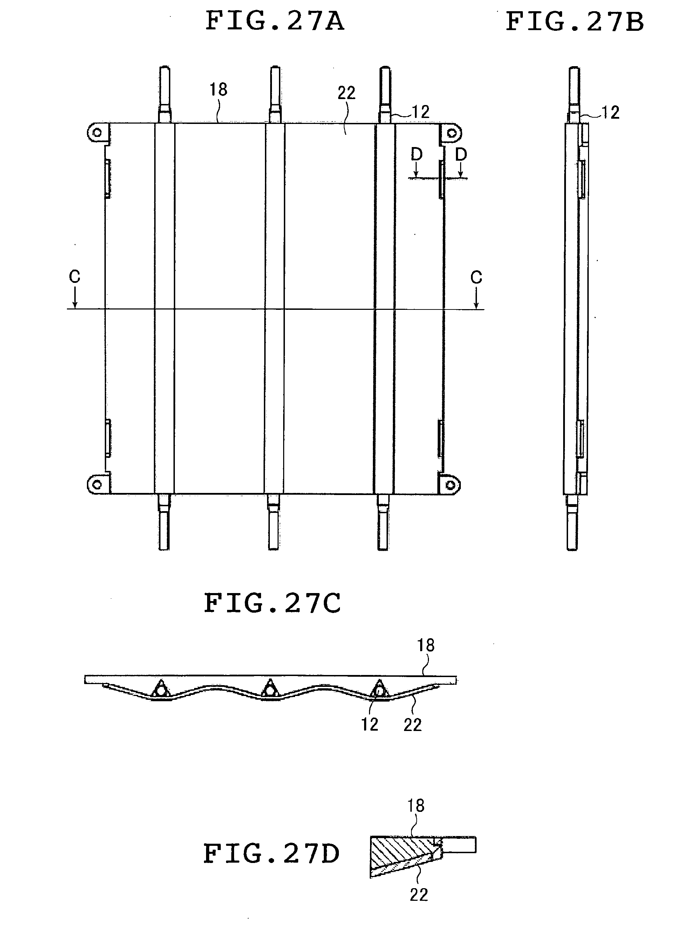

[Fig. 27] Fig. 27A and Fig. 27B are a top plan view and a lateral view, respectively, schematically illustrating a reflective sheet and a light guide plate comprising light sources formed into an integrated structure, Fig. 27C is a cross-sectional view taken along a line C-C in Fig. 27A, and Fig. 27D is a cross-sectional view taken along a line D-D in Fig. 27A. These are drawings for explaining the integral structure comprising the reflective sheet and the light guide plate including light sources.
[Fig. 28] Fig. 28 is a schematic view illustrating how a halftone dot sheet having halftone dots formed thereon is disposed to cover the light emitting plane formed by a plurality of connected light guide plates.
[Fig. 29] Fig. 29A illustrates an embodiment of structure wherein the reflective plates are provided on sides of the light guide plate of the present invention in a direction orthogonal to the longitudinal direction of the light sources, and Fig. 29B is a cross-sectional view of Fig. 29A.
[Fig. 30] Fig. 30A is a schematic perspective view illustrating another embodiment of the inventive light guide plate, Fig. 30B is a cross-sectional view taken along a line B-B in Fig. 30A, Fig. 30C is a cross-sectional view taken along a line C-C in Fig. 30A, and Fig. 30D is a cross-sectional view taken along a line D-D in Fig. 30A.
[Fig. 31] Fig. 31A and Fig. 31B are schematic cross-sectional views of other embodiments of light guide plates each illustrating one composed of a plurality of light guide plates each having an identical width and the other composed of a plurality of light guide plates each having different widths. [Fig. 32] Fig. 32 is a schematic cross-sectional view illustrating an embodiment of light guide plate whose light emitting plane has a round shape.
[Fig. 33] Fig. 33A is a schematic cross-sectional view illustrating an embodiment where the ends of the light guide plates in a longitudinal direction of the light sources each have a slope, Fig. 33B is a schematic perspective view of an embodiment wherein the ends of the light guide plates in a direction parallel to the light emitting plane and perpendicular to the longitudinal direction of the light sources each have a slope, and Fig. 33C is a cross-sectional view taken along a line C-C in Fig. 33B.
[Fig. 34] Fig. 34A is a schematic perspective view illustrating an embodiment of the light guide plate whose light emitting plane has a moderately rolling curved surface represented by a curved line in cross section in the longitudinal direction of the light sources, Fig. 34B is a schematic perspective view illustrating an embodiment of the light guide plate provided on its light emitting plane with ribs having a small height and extending in a direction perpendicular to the longitudinal direction of the light sources.
[Fig. 35] Fig. 35 is a schematic perspective view of the backlight unit as seen from the rear surface side.
[Fig. 36] Fig. 36A is a schematic view illustrating the parallel surface and the inclined surface of the light guide plate, Fig. 36B is a schematic view illustrating, as enlarged, prisms engraved on the parallel surface, Fig. 36C is a schematic view illustrating, as enlarged, prisms engraved on the inclined surface, and Figs. 36D to 36F illustrate other examples of prisms engraved on the inclined surface.
[Fig. 37] Fig. 37 is a schematic view illustrating the parallel surface and the inclined surface of the light guide plate, Fig. 37B is a schematic view illustrating prisms engraved on the parallel surface, Fig. 37C is a schematic view illustrating prisms engraved on a section A of the inclined surface, Fig. 37D is a schematic view illustrating prisms engraved on a section B of the inclined surface, Fig. 37E is a schematic view illustrating prisms engraved on a section C of the inclined surface.
[Fig. 38] Fig. 38 is a schematic view illustrating another embodiment wherein prisms are engraved with different configurations according to their positions in the inclined surface divided into sections in the perpendicular direction. [Fig. 39] Fig. 39 illustrates an embodiment of a structure wherein the halftone dot sheet is disposed on the light emitting plane of the light guide plate, and a halftone dot plate supported by raised strips is disposed thereon.
[Fig. 40] Fig. 40 is a schematic perspective view illustrating the exterior of an embodiment of the inventive planar lighting device as seen from the light emitting plane side.
[Fig. 41] Figs. 41A, 41B, 41C and 41D are a front view, a longitudinal lateral view, a widthwise lateral view, and a rear view, respectively, of the planar lighting device illustrated in Fig. 1.
[Fig. 42] Fig. 42 is a partial cross section of an embodiment of the planar lighting device illustrated in Fig. 1.
[Fig. 43] Fig. 43A is a schematic perspective view of a light guide plate used in the planar lighting device illustrated in Fig. 3, and Fig. 43B is a schematic view illustrating a sectional shape of one unit light guide plate of the main body of the planar lighting device of Fig. 4.
[Fig. 44] Fig. 44A is a wiring diagram of an embodiment of the drive unit for the linear light sources used in the planar lighting device illustrated in Fig. 2, and Fig. 44B is a block diagram of the drive unit for the linear light sources illustrated in Fig. 44A.
[Fig. 45] Fig. 45 is a schematic configuration view illustrating another embodiment of the inventive planar lighting device. [Fig.46] Fig. 46 is a schematic cross-sectional view illustrating a planar light source device having a conventional light guide plate.
[Fig. 47] Fig. 47 is a graph illustrating the brightness on the light emitting plane of the light guide plate of the planar lighting device of Fig. 46.

### LEGEND

- 2: backlight unit
- 4: liquid crystal display panel
- 6: drive unit
- 10: liquid crystal display device
- 12: light source
- 14: diffusion sheet
- 16, 17, 19: prism sheets
- 18: light guide plate
- 18a, 52: light emitting plane
- 18b: thick portion
- 18e, 80: inclined rear portions
- 18f: parallel groove
- 18g: parallel surfaces
- 18h, 18h, 40: a pair of tip end surfaces
- 18i, 18i, 70, 72, 76: a pair of base end surfaces
- 20: reflector
- 22: reflective sheet
- 24q: reflective plate
- 24: reflector
- 25, 26: prisms
- 54a, 54b: arcs
- 56: intersection
- 64a, 64b: parabolas
- 72a, 72b, 82a, 82b, 84a, 84b: curves
- 74, 78,: lateral surfaces
- 92: halftone dot pattern

### BEST MODE FOR CARRYING OUT THE INVENTION

Now, detailed description will be made of the inventive light guide plate and the planar lighting device and the liquid crystal display device using the light guide plate based on preferred aspects given in the accompanying drawings.

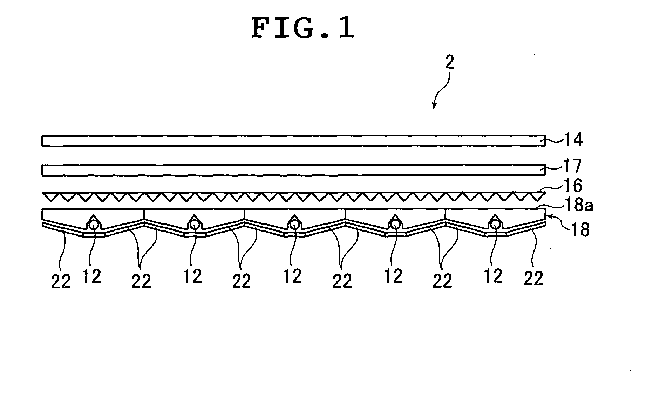

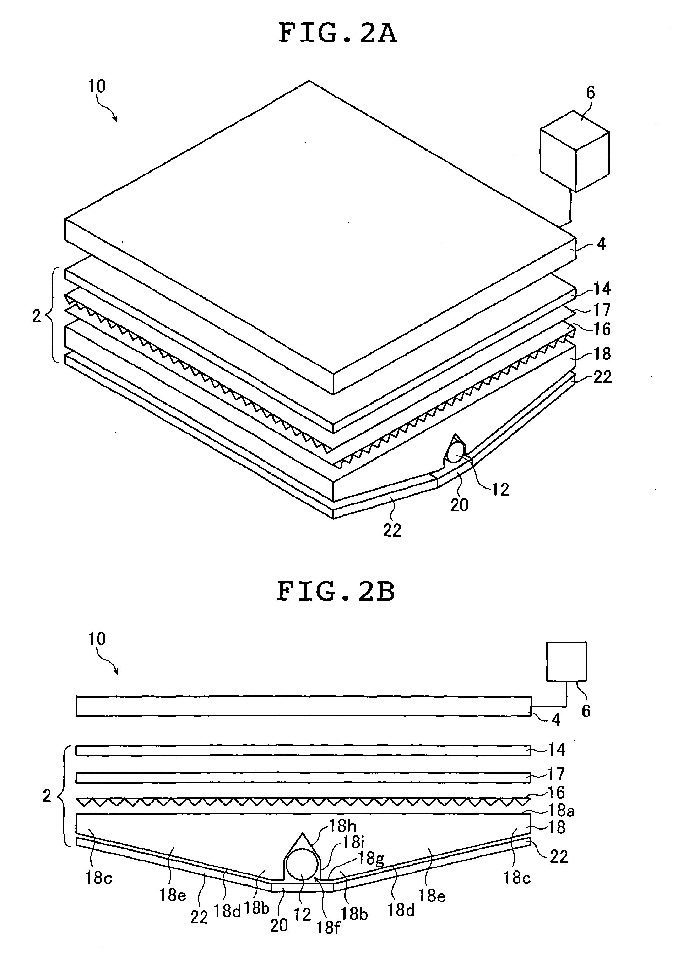

Fig. 1 illustrates a schematic sectional view of a planar lighting device 2 (referred to also as backlight below) according to the second aspect of the present invention formed by arranging a plurality of light guide plates 18 according to the first aspect of the present invention. The planar lighting device 2 as shown is used as a backlight unit for the liquid crystal display device according to the third aspect of the present invention. Figs. 2A and 2B are schematic partial perspective and a schematic partial cross section illustrating one light guide plate 18 from the backlight unit 2 shown in Fig. 1 and a liquid crystal display device 10 using the backlight unit 2. As illustrated in Figs. 2A and 2B, the liquid crystal display device 10 basically comprises the backlight unit 2, a liquid crystal display panel 4 disposed on a side of the backlight unit 2 closer to the light emitting plane, and a drive unit 6 for driving them. The backlight unit 2 comprises a cold cathode tube 12, a diffusion sheet 14, prism sheets 16 and 17, the light guide plate 18, a reflector 20, and a reflective plate 22.

In the liquid crystal display device illustrated in Figs. 2A and 2B, the liquid crystal display panel 4 may be one that follows liquid crystal display modes including GH, PC, TN, STN, ECB, PDLC, IPS (in-plane switching), varieties of the VA (vertical aligned) system (MVA, PVA and EVA), OCB, ferroelectric liquid crystal, anti-ferroelectric liquid crystal, etc. The drive method for the liquid crystal display panel 4 is also not limited specifically and any of known drive methods such as simple matrix driving and active matrix driving may be employed.

The backlight unit 2 is a planar lighting device for irradiating the entire surface of the liquid crystal display panel 4 with a uniform light from behind the liquid crystal display panel 4 and has a light emitting plane (light emission surface) substantially as large as an image display surface of the liquid crystal display panel 4. As illustrated in Fig. 2, the backlight unit 2 basically comprises a light source 12, the diffusion sheet 14, the two prism sheets 16 and 17, the light guide plate 18, the reflector 20, and the reflective plate 22.

The method for driving the backlight unit 2 is not limited specifically; it may be driven such that brightness modulation is made by monitoring the environment surrounding it. For example, an external light sensor may be used to detect ambient lightness or a temperature sensor may be used to detect ambient temperature in order that the brightness may be modulated according to the lightness or the temperature. The method for driving the backlight unit 2 is also not limited in any manner; for example, light sources having colors of red, green, and blue (e.g., LED light sources) may be used by a field sequential method whereby the light sources are lighted sequentially according to the display provided by the liquid crystal display panel 4, or by an intermittent lighting method whereby the light sources are turned on and off either sequentially or simultaneously according to the scan display of the liquid crystal. When the field sequential method is used to drive the backlight unit 2, the red, green, and blue color filters can be removed, thus preventing reduction of light amount caused by the use of color filters. When the light sources are turned on for a short time using the intermittent lighting method, the displaying performance of motion pictures can be enhanced.

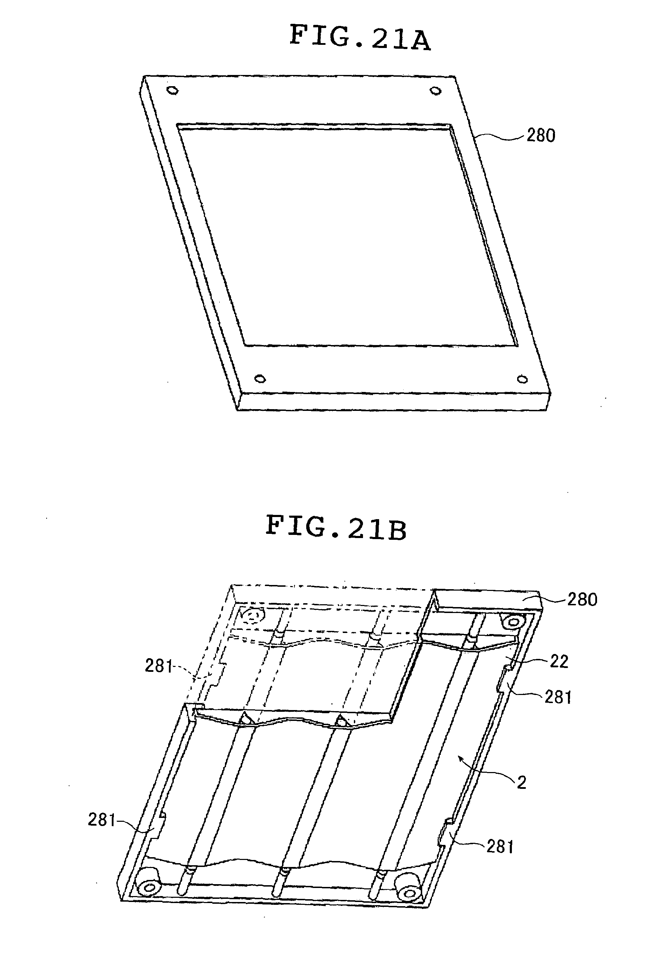

The above-mentioned component members of the backlight unit 2 are, as illustrated in Figs. 21A and 21B, arranged inside housing 280 and may be secured from the rear side of the backlight unit 2 to provide an integral structure. Fig. 21A is a schematic perspective view illustrating the backlight unit 2 as seen from the light emitting plane. Fig. 21B is a schematic perspective view illustrating the backlight unit 2 as seen from the rear side (a side opposite from the light emitting plane).
As illustrated in Fig. 21A, the housing 280 has a box-like structure with an opening side and is provided with a rectangular opening on the side on which the light emitting plane of the backlight unit is located.
The housing 280 may be, for example, a housing having a box-like structure formed of a resin or a metal, a frame having a skeleton structure formed of a metal, a housing having a box-like structure or a frame having a skeleton structure formed of a resin, not a metal, with a high rigidity, and a housing formed of a metal or a resin with a high rigidity and having ribs extending in a direction perpendicular to the parallel grooves of the light guide plate.
When the backlight unit 2 is incorporated in the housing 280 formed of a resin, claws 281 for holding the backlight unit as illustrated in Fig. 21B may be provided on the housing 280 to clip the reflective sheet 22 or other members.

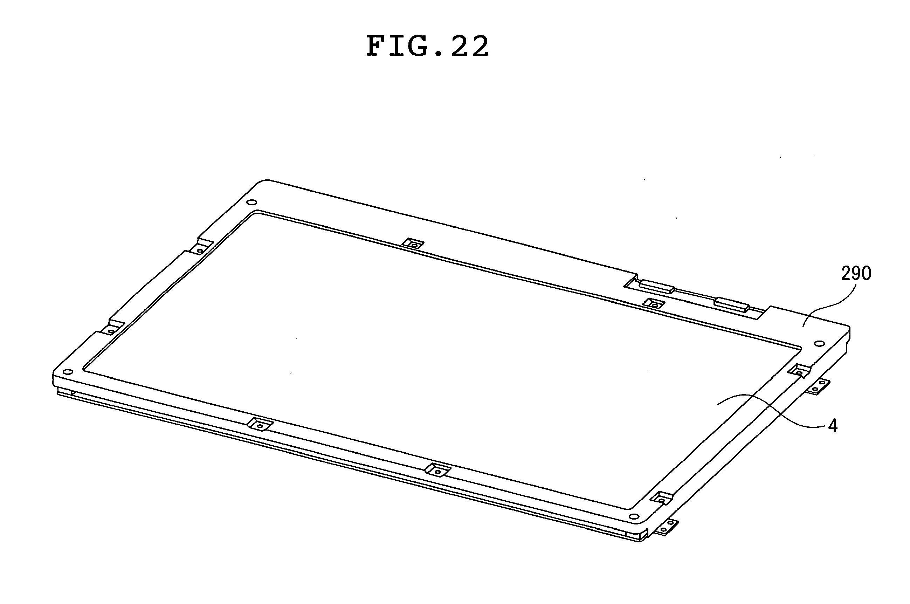

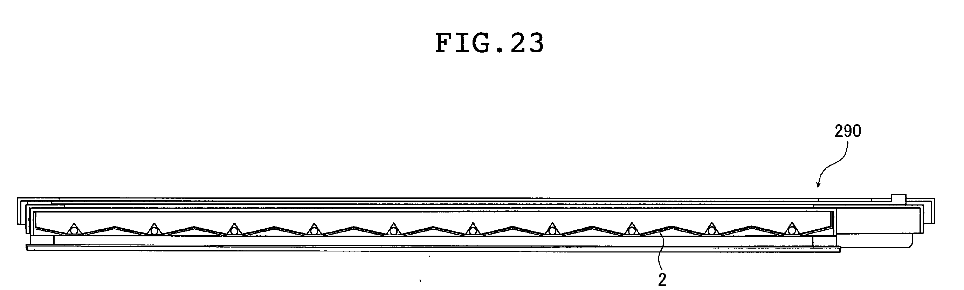

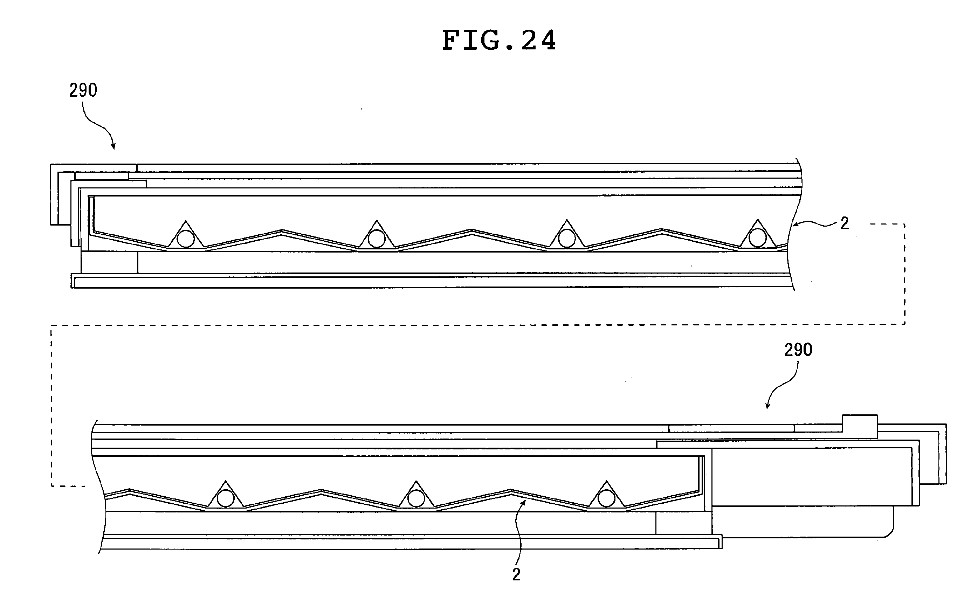

While Figs. 21A and 21B illustrate a structure in which the component members of the backlight unit 2 are arranged in the housing 280, an alternative structure may be used wherein both the backlight unit and the liquid crystal display panel are arranged in one housing. Figs. 22 to 24 illustrate an example of a structure of the housing accommodating both the backlight unit and the liquid crystal display panel. Fig. 22 is a schematic perspective view of a housing 290 accommodating the backlight unit (not shown) and the liquid crystal display panel 4; Fig. 23 is a schematic cross-sectional view of the housing 290 accommodating the backlight unit 2 and the liquid crystal display panel 4. Fig. 24 is an enlarged schematic cross-sectional view of the housing 290 illustrated in Fig. 23.
The housing for accommodating the backlight unit and the liquid crystal display panel may have a configuration whereby the backlight unit is contained in a case provided exclusively therefor such that the backlight unit housed in the case for housing the backlight unit and the liquid crystal display panel are accommodated in the housing, or may have a configuration whereby the backlight unit itself and the liquid crystal display panel are secured and accommodated without housing the backlight unit in its case.

The light source 12 is a thin-diameter rod-type cold cathode tube and used to illuminate the liquid crystal display panel 4. The light source 12 is disposed in a parallel groove 18f formed in the light guide plate 18 and is connected to a drive unit 6. Although the light source 12 is a cold cathode tube here, the present invention is not limited thereto and may be any rod-type light source. Examples of light sources that may be used for the light source 12 include ordinary fluorescent tubes, cold cathode tubes, hot cathode tubes, external electrode tubes, light emitting diodes (LEDs), and semiconductor lasers. In particular, cold cathode tubes, external cathode tubes or light emitting diodes are preferably used.
The light source 12 may be replaced with an LED light source using a transparent cylindrical or prism-shaped light guide member having a substantially same length as the parallel groove 18f of the light guide plate 18 and provided with LEDs on the top and bottom sides of the light guide member. Such LED light source can admit LED light from the top and bottom sides of the light guide member and emit the LED light from lateral sides of the light guide member.

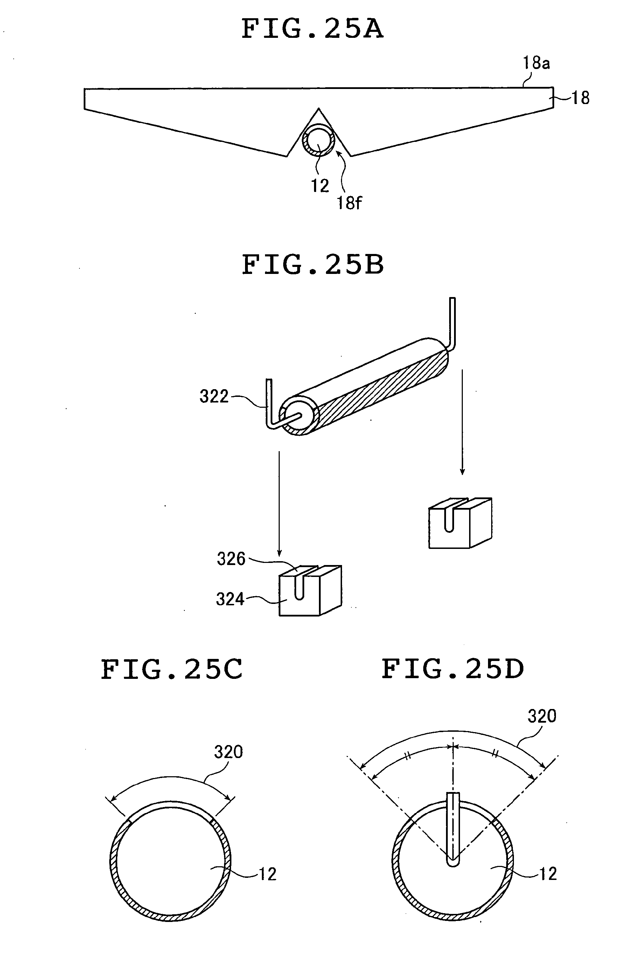

Alternatively, an apertured type lamp as illustrated in Fig. 25A may be used as a light source. The wording "apertured type lamp" as used in the present invention refers to a rod-type light source provided with a material having a high reflectance in areas excluding an area corresponding to an angle in which emission of light is to be allowed, i.e., in areas where light is not allowed to be emitted, to increase the amount of light emitted from a given angle. Fig. 25C illustrates a cross section of the apertured type lamp. In Fig. 25C, an area 320 is a light emitting area. Use of the apertured type lamp further increases the light use efficiency and, where appropriate, eliminates the need for the reflective sheet (reflector) that would be otherwise required to be disposed on the rear side of the light source, making the structure of the device simpler and preventing generation of uneven brightness due to errors in the installation of the reflective sheet.
The material having a high reflectance may be formed of any of various materials including metals and nonmetals, and, in particular, nonmetals are preferred. Use of a nonmetallic material to form a material having a high reflectance enables reduction of leak current.

When the apertured type lamp is used, positioning means is preferably provided in at least one location. The positioning means may be provided, for example, as illustrated in Fig. 25B such that bent members 322 are mounted to lamp terminals and support members 324 for supporting the lamp are each formed with a groove 326 such that the bent members 322 engage with the grooves 326 of the support members 324 to secure the lamp. An angle of the bent members 322 mounted to the lamp terminals may be any angle that the parallel groove of the light guide plate allows. Preferably, the bent members 322 are provided such that the light emitting area 320 of the apertured type lamp is bisected as illustrated in Fig. 25D. The bent members may have any shape, provided that the bent members can secure the lamp in its position and fix the direction in which the material with a high reflectance is positioned with respect to the parallel groove and that the placement of the lamp is not hindered.
Provision of the positioning means makes it easy to align the center of the aperture of the light source with the center of the parallel groove of the light guide plate and enables light to be admitted into the light guide plate with high efficiency.

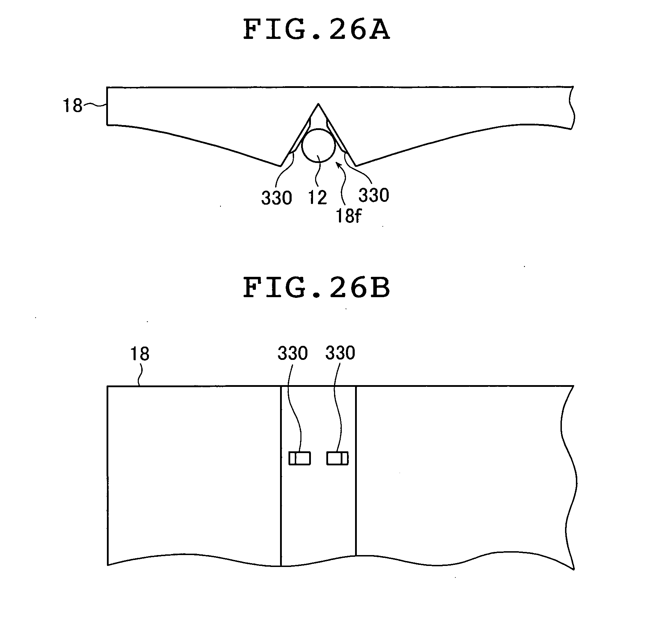

Fig. 26A is a schematic cross-sectional view illustrating another example of the inventive light guide plate; Fig. 26B is a bottom view of the light guide plate shown in Fig. 26A.
As illustrated in Figs. 26A and 26B, to place the light source 12 in the parallel groove 18f of the light guide plate 18, ribs 330 or other like members may be provided in part of the parallel groove 18f of the light guide plate such that the light source 12 does not come into direct contact with the parallel groove 18f formed in the light guide plate 18, thus disposing the light source in the parallel groove 18 of the light guide plate 18f.
Use of such structure inhibits the conduction of heat generated in the light source 12 to the light guide plate 18 and hence an excessive rise of the temperature of the light guide plate 18, and prevents partial cooling of the cold cathode tube serving as light source. The ribs 330 may be formed for example into a convex shape measuring 1 mm or less in width and about 0.5 mm in height. Preferably, ribs 330 are provided partially in the directions of the center line of the parallel groove 18f of the light guide plate 18.
Further, an opening is preferably provided in a location on a lateral side of the backlight unit lying on a line extending in the direction of the center line of the parallel groove of the light guide plate 18 to allow the light guide plate 12 to be replaced through the opening. This facilitates the replacement of the light guide plate made when the life of the light source 12 ends or in case of failure and eliminates the need for specially providing a guide member for the replacement of the light source 12.

To restrain the position of the light source 12 with respect to the reflective sheet 22, the reflective sheet 22 is preferably formed of a rigid metallic material or resin material in order to provide an integral structure of the reflective sheet 22 with the light guide plate 18 including the light source 12. To that end, one of the light guide plate 18 and the reflective sheet 22 may be provided, for example, with convex portions and the other with mating concave portions to engage or both members may be secured with screws to achieve an integral structure of the light guide plate 18 and the reflective sheet 22.

When the reflective sheet 22 is formed of a metallic material to secure a rigidity sufficient to achieve a thin design of the backlight unit, it is known that a floating capacitance is generated depending on the combination of the metallic material and the cold cathode tube. The floating capacitance can be reduced by providing a long hole in areas of the reflective sheet opposite the cold cathode tubes.

Referring to Fig. 2, the diffusion sheet 14 is provided to diffuse and make uniform the light emitted from a light emitting plane 18a of the light guide plate 18 and is formed by imparting a light diffusing property to a flat sheet material made of an optically transparent resin as exemplified by PET (polyethylene terephthalate), PP (polypropylene), PC (polycarbonate), PMMA (polymethyl methacrylate), benzyl methacrylate, an MS resin, and other acrylic resins and COP (cycloolefin polymer). The method of forming the diffusion sheet 14 is not limited specifically. For example, a surface of a flat sheet material may be roughened by machining to provide an asperity or by grinding (a surface subjected to such roughening is hereinafter referred to as "sand-rubbed surface") to impart the light diffusing property. The diffusion sheet may be alternatively formed by coating its surface with a material that diffuse light, such as a pigment as exemplified by silica, titanium oxide, or zinc oxide, a resin or beads of glass, zirconium together with a binder, or by kneading the above pigment or beads having a light diffusing property into the above resin. The diffusion sheet 14 in the present invention may be formed of a diffusion sheet of a mat type or a coating type.
In the present invention, it is also preferable to use the above material and a film material having a thickness of 500 µm or less and imparted with light diffusing property to form the diffusion sheet 14.

Preferably, the diffusion sheet 14 is disposed a given distance apart from the light emitting plane 18a of the light guide plate 18. The distance may be altered as appropriate according to the light amount distribution of light emitted from the light emitting plane 18a of the light guide plate 18. With the diffusion sheet 14 spaced apart a given distance from the light emitting plane 18a of the light guide plate 18, the light emitted from the light emitting plane 18a of the light guide plate 18 is subjected to further mixing (mixture) between the light emitting plane 18a and the diffusion sheet 14. This further enhances the uniformity of brightness of the light passing through the diffusion sheet 14 to illuminate the liquid crystal display panel 4. The diffusion sheet 14 may be spaced a given distance from the light guide plate 18a of the light guide plate 18 by, for example, providing a spacer between the diffusion sheet 14 and the light guide plate 18.
When, in particular, it is allowable to slightly increase the thickness of the backlight unit 2, the peak value of brightness on the light emitting plane 18a of the light guide plate 18 corresponding to the parallel groove 18f need not be reduced sufficiently by providing a certain sectional shape of the parallel groove 18f of the light guide plate 18; uniformity of the brightness distribution of the illumination light emitted from the diffusion sheet 14 may be achieved by reducing the peak value only partially and providing a gap between the diffusion sheet 14 and the light emitting plane 18a of the light guide plate 18. Also in cases where there is a limit to the improvement that can be made in the sectional shape of the parallel groove 18f of the light guide plate 18 (i.e., tapering of the tip end portion of the parallel groove) and hence the peak value of brightness in the area of the light emitting plane 18a of the light guide plate 18 corresponding to the parallel groove 18f cannot be fully or sufficiently reduced, a gap may be provided between the diffusion sheet 14 and the light emitting plane 18a of the light guide plate 18 to render uniform the brightness distribution of the illumination light emitted from the diffusion sheet 14.

The prism sheets 16 and 17 are transparent sheets formed by arranging a plurality of prisms in parallel and enhance the light harvesting property of the light emitted from the light emitting plane 18a of the light guide plate 18 to improve the brightness. One of the prism sheets 16 and 17 is disposed such that its prism array extends parallel to the parallel groove 18f of the light guide plate 18 whereas the other is disposed such that its prism array extends perpendicular to the parallel groove 18f of the light guide plate 18. In other words, the prism sheets 16 and 17 are disposed such that their respective prism arrays extend in directions normal to each other. The prism sheet 16 is provided such that the apexes of the prisms face the light emitting plane 18a of the light guide plate 18. The order of arranging prism sheets 16 and 17 may be such that the prism sheet 16 having prisms that extend in a direction parallel to the parallel groove of the light guide plate is provided immediately above the light guide plate and that the prism sheet 17 having prisms that extend in a direction normal to the parallel groove 18f of the light guide plate 18 is provided on top of the prism sheet 16. The order of arrangement of the two prism sheets may be reversed.

While prism sheets are used in the illustrated case, they may be replaced with sheets on which optical elements similar to the prisms are regularly arranged. Alternatively, sheets on which elements having lens effects, for example, lenticulated lenses, concave lenses, convex lenses, or optical elements in pyramidal shape are regularly arranged may be substituted for the prism sheets.

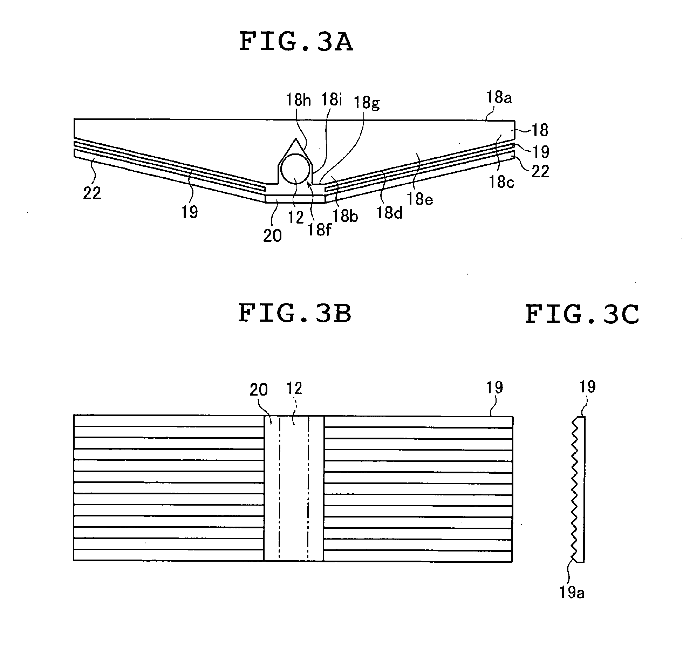

In the present invention, as Figs. 3A, 3B and 3C illustrate, it is preferable to interpose an additional prism sheet 19 between the reflective sheet 22 and each of inclined surfaces 18d located opposite from the light emitting plane 18a of the light guide plate 18. Fig. 3A is a schematic cross-sectional view illustrating how the prism sheet 19 is provided between the reflective sheet 22 and each of the inclined surfaces 18d of the light guide plate 18; Figs. 3B is a schematic top plan view illustrating the prism sheet 19 interposed between the reflective sheet 22 and each of the inclined surfaces 18d of the light guide plate 18 as seen from the light guide plate; and Fig. 3C is a schematic cross-sectional view of the prism sheet. The prism sheet 19 interposed between the reflective sheet 22 and each of the inclined surfaces 18d of the light guide plate 18 is preferably provided such that prisms 19a extend in a direction perpendicular to the parallel groove 18f of the light guide plate 18 and that the apexes of the prisms 19a face the inclined surfaces 18d of the light guide plate 18.

While prism sheets are used in the example under discussion, one may use an optical element having similar effect to the prism sheets; for example, a sheet on which optical elements having lens effects such as lenticulated lenses, concave lenses, convex lenses, or optical elements in pyramidal shape are regularly arranged may be provided.
While, in the illustrated case, the prism sheets 16 and 17 are used, preferably in combination with the prism sheet 19, if the brightness on the light emitting plane 18a as achieved by the parallel groove 18f of the light guide plate 18 is at a further enhanced level, the prism sheet 19 is of course unnecessary, and either the prism sheet 16 or 17 or both may be dispensed with. Using a smaller number of expensive prism sheets or dispensing with all these prism sheets contributes to reducing the costs for the device.

In Figs. 2A and 2B, the reflective sheet 22 is provided to reflect light leaking from the rear surface (the underside in the drawings) of the light guide plate 18 so that it will be admitted again into the light guide plate 18, thereby enhancing the light use efficiency. The reflective sheet 22 is so formed as to cover the underside (inclined surfaces) of the light guide plate 18. The reflector 20 is provided behind the light source 12 in such a way as to close the parallel groove 18f of the light guide plate 18. The reflector 20 reflects the light from the underside of the light source 12 so that it can be admitted through the sidewall surfaces of the parallel groove 18f of the light guide plate 18.

The reflective sheet 22 may be formed of any material that is capable of reflecting the light leaking from the rear surface (the underside in the drawings) of the light guide plate 18. It may be formed, for example, of a resin sheet whose reflectance has been enhanced by kneading PET, PP (polypropylene), etc. with a filler and then drawing the resultant mixture to form voids therein; a sheet obtained by depositing aluminum vapor or otherwise forming a specular surface on the surface of a transparent resin sheet or a white resin sheet of the type described above; a metal foil such as an aluminum foil or a resin sheet carrying a metal foil; and a metal thin plate having sufficient reflective property on the surface. The reflector 20 can also be formed of the same material as the above-described reflective sheet, namely, a resin material, a metal foil or a metal plate provided with sufficient reflective property on the surface.

The reflective sheet may be directly adhered to an area of the side of the light guide plate opposite from the light emitting plane excluding the parallel groove, e.g., the inclined surfaces. The present invention is not limited to directly adhering the reflective sheet to the light guide plate; a paint having substantially the same function as the reflective sheet may be directly applied to the light guide plate.
Thus, the light emitting efficiency can be enhanced by directly adhering the reflective sheet or directly applying the paint. In addition, generation of uneven brightness due to mounting errors made when installing the reflective sheet can be prevented.

Further, the backlight unit in the present invention is not limited to the structure illustrated in Figs. 2A and 2B. For example, there may be provided a brightness enhancing sheet such as a reflective polarizing film, a cholesteric type polarizing film, and a scattering type polarizing film to enhance the brightness of the light emitted from the light guide plate 18. Preferably, such brightness enhancing sheet is provided between the light guide plate 18 and the liquid crystal display panel 4 (underside polarizing plate) in Figs. 2A and 2B and, in particular, on a side of the liquid crystal display panel 4 (underside polarizing plate) from which the light is admitted.

The reflective polarizing sheet may be formed on the light emitting plane of the light guide plate by means of a birefringent material as described in JP 06-331824 A having a greater refractive index with respect to at least one plane of polarization than that of the light guide plate, and a smaller refractive index with respect to a plane of polarization perpendicular to the plane of polarization than a mean refractive index of the light guide plate.
A stretched film as described in JP 11-281975 A may also be used. When a stretched film is used, it is preferably attached to the light guide plate through an adhesive layer or a bonding layer to one surface of the light guide plate as described in JP 11-281975 A.
As described in JP 07-49496 A, one may alternatively use a multilayer structure, wherein layers of a transparent medium having a relatively great refractive index and layers of a transparent medium having a relatively small refractive index are disposed on one another alternately; a film comprising at least one layer of dielectric film preferably having a thickness of 1000 nm or less formed on at least one surface of a planar transparent support member; or a laminated film composed of two or more kinds of transparent polymers having different refractive indices.
Alternatively, one may use a polarization separator comprising at least one layer of dielectric film having a thickness substantially equal to or less than visible light wavelengths provided on a transparent support structure with a substantially W-shaped cross section, the polarization separator transmitting the p-polarized light component of light traveling in a direction close to a given incident direction and reflecting at least part of the s-polarized light component, as described in JP 07-72475 A.
Further, one may use a recursive reflective polarizer as described in JP 2004-78234 A comprising a structured surface consisting of linearly arranged prisms with a coefficient of a substantially rectangular isosceles triangle arranged in juxtaposition and consisting of a first material having a plane with a vertical coefficient forming an angle of about 45° with respect to the tangential plane to a smooth surface opposite from the structured surface, a second material that is virtually the same as the first material, and at least one optical deposition provided on a structured plane of at least one material and formed of layers each composed of a material having a selected optical thickness and a great refractive index and layers each composed of a material having a selected optical thickness and a small refractive index, these layers being alternately disposed on one another. The first and the second materials are all optically bonded to form a single unit. In the single unit, the refractive indices of the first and second materials and the refractive indices and optical thicknesses of layers of the optical deposition are all selected so as to produce selective reflections of the polarized light whereas inside of the optical deposition, incident rays of mixed polarized light are separated into an s-polarized light component and a p-polarized light component. Said s-polarized light component is reflected by another part of the optical deposition. In the another part, the s-polarized light component is reflected such that it is parallel to the incident light but travels in the opposite direction to the direction in which the incident light travels whereas the p-polarized light component is allowed to pass in parallel to the incident light.
Further, one may use a polarizing element as described in JP 61-262705 A having a dielectric multilayer film with a polarizing filter function or a retardation film function provided on a transparent material having a triangular waveform surface formed with alternating A-shaped ridges and V-shaped grooves.
Further, one may use a polarizing film formed with continuously laminated layers of birefringent materials each having a thickness of one quarter a wavelength from out of various wavelengths as described in the specification of US 3610729 B.
Still further, one may use an optical film formed of a polymer comprising a birefringent continuous phase and a small quantity of dispersion phase inside the continuous phase as described in the specification of US 5867316 B.
Further,one may use a polarization splitter film comprising a thin metal film using a surface plasmon sandwiched by transparent media having a small refractive index as described in JP 2003-295183 A.
Further still, the brightness can be further enhanced by a configuration of the light guide plate integrated with a polarization direction changing film for changing the polarization direction of light such as a λ/4 phase film having a slightly birefringent property causing a difference of λ/4 in optical thickness between mutually perpendicular polarized light components or a diffusing film, in addition to providing a polarization splitter film using the surface plasmon that transmits only the p-polarized light component parallel to the incident plane and reflects the s-polarized light component perpendicular to the incident plane.

The scattering type polarizing film may be formed for example of an anisotropic scatterer formed by stretching a compound material of liquid crystal and a polymer, as described in JP 08-76114 A.
Alternatively, one may use a haze anisotropic layer whose haze varies with the direction of vibration of a linear polarized light as described in JP 2001-343612 A. In this case, it is preferable to further attach a first retardation film to the surface opposite from the light emitting plane of the light guide plate and to provide a second retardation film between the light guide plate and the reflective plate.
Further, one may use for example a polarizing element comprising minute areas composed of a material different from that of the transparent polymer film evenly dispersed in a transparent polymer film, the polymer film and the minute areas having approximately a same refractive index with respect to one of the mutually perpendicular linear polarized rays of light and different refractive indices with respect to the other, as described in JP 09-274108 A.

The cholesteric polarizing film may be formed for example of a film wherein the axis of the molecular helix is so oriented as to extend across the film and the pitch of the molecular helix in the film varies by a difference of at least 100 nm between a maximum pitch and a minimum pitch, as described in JP 06-281814 A.

While the above embodiment has a configuration using the brightness enhancing film having a polarization separator function, the present invention is not limited thereto; alternatively, one may form a micro-asperity having a polarization separator function on the light emitting plane of the light guide plate to improve the brightness of the light emitted from the light emitting plane, as described in JP 2001-201746 A and JP 2001-228474.
Alternatively, the brightness can be improved also by disposing between the light guide plate and a reflective member (reflective plate) an anisotropic layer having a first refractive index virtually greater than that of the light guide plate and a second refractive index virtually smaller than that of the light guide plate and separating substantially the eintirety of a first polarized state from a second polarized state perpendicular to the first polarized state, as described in JP 09-134607 A.
The brightness can also be improved by forming a roughened surface pattern on the inclined rear surfaces of the light guide plate consisting of fine projections and having a polarization separator function, as described in JP 2004-363062 A.
As described in JP 10-508151 A, a light waveguide path (light guide plate) may be provided with recesses filled with a material different from that of the light waveguide path, one of these two materials being an isotropic material having a refractive index of np, the other being an anisotropic material having refractive indices of no and ne. The refractive indices of these materials are determined such that either no or ne is equal or virtually equal to np. Thus, the polarized rays of light can be separated at a boundary surface between the isotropic material and the anisotropic material such that a majority of the light radiated from the light source can be converted into light having a same polarization direction before leaving the light waveguide path. Thus, the brightness can also be improved by applying the configuration described in JP 10-508151 A to the present invention.
Further, the brightness can also be improved by forming the light guide plate with two or more layers having a light guiding function such that at least one of a first layer and a second layer has a birefringent property and an interface is provided between the first and the second layers, emitting light that is scattered, refracted or diffracted at the interface from a surface of the light guide plate, as described in JP 09-292530 A.

In the present invention, one may provide an optical compensation film to expand a view angle. The optical compensation film may be formed using, for example, an optical compensation film using discotheque liquid crystal or nematic liquid crystal or an optical compensation film using a collimating film. Preferably, the optical compensation film is provided such that it is adhered to the upper side or the underside of the liquid crystal display panel 4 in Figs. 2A and 2B.

Further, optical members having a diffusing, converging, scattering or diffracting function may be provided for example on the side of the light guide plate 18 closer to the light emitting side in Figs. 2A and 2B, e.g., on the light emitting plane of the light guide plate 18 or between the light guide plate 18 and the liquid crystal display panel 4. Only one of such optical parts having one of the functions may be provided or a plurality of optical parts having an identical function or different functions may be arranged in combination. When a plurality of such optical parts are used in combination, they may be arranged in any order, which may be adjusted as appropriate for an optical property desired.

One each of any of the above optical members such as a diffusing film, a prism sheet, and a brightness enhancing sheet may be provided or, alternatively, two or more of any of them may be provided. Such optical members may be adhered to one another when desired. Alternatively, they may be adhered directly to the light guide plate or adhered to a plane on the side of the liquid crystal display panel from which light is admitted. There is no specific limitation to the manner in which the prism sheet should be disposed. For example, suppose the light is emitted upwardly, the prisms may be disposed to face upward or downward or even two prism sheets may be superposed on each other.

While, as described above, optical parts such as the diffusion sheet 14 and the prism sheets 16, 17 are disposed between the light guide plate 18 and the liquid crystal display panel 4 in Figs. 2A and 2B, the manner the optical parts are configured is not limited to such example and may, for example, be as follows. One may provide, for example, a diffusion sheet on which halftone dots for inhibiting the generation of bright lines are formed by printing, a prism sheet, and the brightness enhancing sheet in order on the side of the light guide plate closer to the light emitting plane. In this case, the halftone dots are preferably formed on a surface on the side of the diffusion sheet from which the light is admitted, i.e., on the surface facing the light emitting plane of the light guide plate. Preferably, the prism sheet has the prism arrays provided on the light emitting side.
Another example of configuration may comprise the diffusion sheet formed with halftone dots by printing and the brightness enhancing sheet on the side of the light guide plate closer to the light emitting plane. In this case, the halftone dots are preferably formed on a surface on the side of the diffusion sheet from which the light is admitted as in the above-mentioned example. In still another example of the configuration, the light guide plate may be provided with halftone dots formed by printing on its light emitting plane, and the diffusion sheet and the brightness enhancing sheet may be disposed in this order on the side of the light guide plate closer to the light emitting plane. In this case, since, the halftone dots are provided on the light emitting plane of the light guide plate, the diffusion sheet without halftone dots is used.
Yet another configuration is possible wherein the light guide plate is provided with halftone dots formed by printing on its light emitting plane, and two diffusion sheets having an identical or different properties and one brightness enhancing sheet are disposed in order on the side of the light guide plate closer to the light emitting plane. In still another configuration, two diffusion sheets and one brightness enhancing sheet may be disposed on the side of the light guide plate closer to the light emitting plane. In this configuration, the halftone dots are preferably formed by printing on a plane of the diffusion sheet disposed closer to the light guide plate facing the light emitting plane of the light guide plate instead of forming the halftone dots on the light emitting plane of the light guide plate.
From a viewpoint of using a fewer parts and reducing the manufacturing costs, preferable is the configuration, from among the examples given above, wherein the light guide plate is provided with halftone dots formed by printing on its light emitting plane, and the diffusion sheet and the brightness enhancing sheet are disposed in this order on the side of the light guide plate closer to the light emitting plane.

In Fig. 2B, the light guide plate 18 includes the rectangular light emitting plane 18a, a thick portion 18b extending parallel to one side edge of the light guide plate 18, a pair of thin end portions 18c formed on both sides of the thick portion 18b also extending parallel to the one side edge, a pair of inclined rear portions 18e forming inclined surfaces 18d that grow thinner in a direction perpendicular to the one side edge from the thick portion 18b toward the thin end portions 18c, and the parallel groove 18f formed in the thick portion 18b parallel to the one side edge and accommodating the light source 12.
Briefly, the light guide plate 18 is a flat plate with a surface having a rectangular external shape and formed of a transparent resin. In the light guide plate 18, one of the surfaces is made flat to form the light emitting plane 18a, while the other surface is inclined with respect to the one surface such that the plate grows thinner from the thick portion 18b toward both sides to form a pair of inclined surfaces 18d. Here, the inclined surfaces 18d are flat surfaces but may be curved surfaces.
In the light guide plate 18 according to the embodiment under discussion, the other surface is provided with parallel surfaces 18g formed parallel to the light emitting plane 18a between the inclined surfaces 18d and base end surfaces 18i. In other words, the parallel surfaces 18g extending from the inclined surfaces 18d are provided in the thick portion 18b of the light guide plate 18. In the present invention, the parallel surfaces 18g need not necessarily be provided but are preferably provided because they serve to enhance the light use efficiency.

The light guide plate 18 may be produced using, for example, a method of forming a heated resin feed by extrusion or injection molding, or casting polymerization method of forming a monomer, oligomer or the like in a mold by polymerization. The material of the light guide plate 18 may be selected from among transparent resins including PET (polyethylene terephthalate), PP (polypropylene), PC (polycarbonate), PMMA (polymethyl methacrylate), benzyl methacrylate, MS resins, and other acrylic resins, and COP (cycloolefin polymer). The transparent resins may contain fine particles for scattering light mixed therein to further enhance the efficiency of light emission from the light emitting plane 18a. When fine particles for scattering light are mixed into the transparent resin, the fine particles may be isotropic or anisotropic.

Where desired, a color tone compensation agent may be mixed in the light guide plate to adjust the color tone of the emitted light. Alternatively, a color tone compensation filter may be provided to correct the color tone of the light admitted to the liquid crystal display panel instead of mixing the color tone compensation agent in the light guide plate. Alternatively, one may use both the light guide plate containing the color tone compensation agent mixed therein and the color tone compensation filter for correcting the color tone.

The transparent material used to form the light guide plate is preferably a material that easily transmits blue light. For example, when the light source is a rod-type light source such as a cold cathode tube, the color temperature of the light emitting plane of the liquid crystal display panel drops to a lower level than that of the color temperature of the light source depending upon the spectral characteristics of the transmitting material. Therefore, the color temperature of the light source needs to be previously set to a sufficiently high level. However, setting the color temperature of the light source to a high level can lower the brightness efficiency. The color temperature of the light source and the color temperature of the liquid crystal display surface can be made substantially equal by using a transparent material that easily transmits blue light to form the light guide plate. This enables a high-brightness light emitted from the light source to be emitted from the liquid crystal display panel without lowering the color temperature. The results are a lower power consumption, a longer life of the light source, and lower costs achieved by reducing the number of light sources and the number of inverters required.
An electricity removing material or a conductive material may be applied on the side of the light guide plate closer to the light emitting plan. This renders the inside of the backlight less vulnerable to dust accumulation caused by static electricity.

The light guide plate according to the present invention may be produced by mixing a plasticizer in the transparent resin.
The light guide plate formed by mixing a transparent resin and a plasticizer is flexible so that the light guide plate can be formed into various shapes. Hence, the surface of the light guide plate can be formed into various curved surfaces.
Thus, in cases where, for example, the light guide plate or the planar lighting device using the light guide plate is used as a display board employing illuminations, it can be mounted to a wall having a curvature. Thus, the light guide plate can be used for a wider variety of applications and in a wider application range including illuminations and POP (point-of-purchase) advertising.

The plasticizers that may be used include phthalates exemplified by dimethyl phthalate (DMP), diethyl phthalate (DEP), dibutyl phthalate (DBP), di(2-ethylhexyl) phthalate (DOP (DEHP)), di-n-octyl phthalate (DnOP), di-isononyl phthalate (DINP), dinonyl phthalate (DNP), diisodecyl phthalate (DIDP), phthalate mixed-base ester (C₆ to C₁₁) (610P, 711P, etc.), and butyl benzyl phthalate (BBP). The plasticizers other than phthalates may be exemplified by dioctyl adipate (DOA), diisononyl adipate (DINA), dinormal alkyl adipate (C₆, ₈, ₁₀) (610A), dialkyl adipate (C₇, ₉) (79A), dioctyl azelate (DOZ), dibutyl sebacate (DBS), dioctyl sebacate (DOS), tricresyl phosphate (TCP), acetyl tributyl citrate (ATBC), epoxidized soybean oil (ESBO),trioctyl trimellitate (TOTM), polyesters and chlorinated paraffin.

The parallel groove 18f for accommodating the light source 12 extends in a longitudinal direction in the thick portion 18b of the light guide plate 18 on the side opposite from the light emitting plane 18a. The depth of the parallel groove 18f is preferably determined such that no part of the light source 12 will protrude from the underside of the light guide plate 18; it is preferably determined in consideration of the size of the light source 12, as well as the mechanical strength and aging of the light guide plate 18. The thicknesses of the thick portion 18b and the thin end portions 18c of the light guide plate 18 can be altered freely in accordance with the size of the light source 12. The parallel groove 18f of the light guide plate 18 may be formed in a direction perpendicular to the longitudinal direction of the light guide plate 18, but it is preferably formed in the longitudinal direction in order to assure more efficient utilization of the light from the light source 12 accommodated in the parallel groove 18f.
In the embodiment under discussion, the parallel groove 18f is formed by a pair of tip end surfaces 18h forming the tip end portion and a pair of base end surfaces 18i forming the base end portion. The inclination angle of the base end surfaces 18i with respect to the light emitting plane 18a is sharper than the inclination angle of the tip end surfaces 18h. More specifically, the angle (inclination angle) Φₙ that the tangential plane to the base end surfaces 18i form with the light emitting plane 18a is greater than a maximum of the angle, i.e., a maximum inclination angle Φₘ formed by the tangential plane to the tip end surfaces 18h and the light emitting plane 18a.

In the light guide plate 18 structured as illustrated in Fig. 2B, part of the light emitted from the light source 12 arranged in the parallel groove 18f enters the light guide plate 18 through the lateral surfaces forming the parallel groove 18f, is reflected on the inclined surfaces 18d of the light guide plate 18 and then exits from the light emitting plane 18a. At this time, part of the light leaks from the lower surface of the light guide plate 18, but the leaked light is reflected on the reflective sheet 22 formed on the side of the light guide plate 18 closer to the inclined surface 18d to enter the light guide plate 18 again, and then exits from the light emitting plane 18a. Thus, the light is evenly emitted from the light emitting plane 18a of the light guide plate 18.
In the present invention, the angle of the inclined surfaces 18d (taper) is so limited that the light beam may travel in directions perpendicular to and parallel to the light emitting plane 18a (sideward) in order to render uniform the light emitted from the light emitting plane 18a. In other words, the angle (taper) of the inclined surfaces 18d is determined such that part of the light beam emitted from the light source 12 and admitted to the light guide plate 18 is reflected entirely by the light emitting plane 18a (back surface).

In Fig. 2B, the parallel groove 18f of the light guide plate 18 is formed such that the tip end portion is triangular and the base end portion is rectangular in cross section perpendicular to the longitudinal direction of the parallel groove 18f, providing as a whole a shape of a baseball home plate pointing in the direction of the light emitting plane 18a. Accordingly, the pair of tip end surfaces 18h, crossing each other at one end thereof, are symmetrically inclined with respect to a vertical plane perpendicular to the light emitting plane 18a and passing through the center of the light source; their sectional shape is formed by two segments (oblique lines) each having an inclination of a given angle and forming an apex of a triangle. Each of the pair of base end surfaces 18i of the parallel groove 18f of the light guide plate 18 has one end communicating with the other end of the corresponding one of the pair of tip end surfaces 18h; the base end surfaces 18i are parallel to and symmetrical with respect to the vertical plane. Their sectional shape is such that they are in contact with the other two remaining apexes of the triangle, respectively, and are formed by segments perpendicular to the light emitting plane 18a and communicating with the parallel surfaces 18g of the light guide plate 18.

While the parallel groove 18f has a sectional shape comparable to a home plate with a triangular tip end portion and a rectangular base end portion, the present invention is not limited to such configuration. It may be any shape, provided that the tip end portion is formed by crossed inclined surfaces, and the inclination of the base end portion, which communicates with the tip end portion, is steeper than the inclination of the tip end portion. More specifically, the sectional shape of the parallel groove 18 may be any shape provided that it is formed by a pair of contour lines approaching each other toward the light emitting plane 18a and crossing at the peak in the tip end portion, the contour lines each having a part whose inclination angle with respect to a line perpendicular to the light emitting plane 18a varies so as to be sharper on the base end side (base end surfaces 18i) of the parallel groove, which is located farther from the peak, than on the tip end side (tip end surfaces 18h) located closer to the peak. In other words, the inclination angle (inclination angle Φₙ) that the contour lines closer to the base end side (base end surfaces 18i) of the parallel groove form with the light emitting plane 18a is greater than the inclination angle (maximum inclination angle Φₘ) that the contour lines closer to the tip end side (tip end surfaces 18h) form with the light emitting plane 18a in the sectional shape of the parallel groove 18f. For example, a pair of tip end surfaces 40 of the parallel groove 18f may be hyperbolic as illustrated in Fig. 4A, or a pair of tip end surfaces 42 of the parallel groove 18f may be elliptic as illustrated in Fig. 4B. Alternatively, a pair of tip end surfaces of the parallel groove 18f of the light guide plate 18 may be catenarian.

According to the present invention, the parallel groove may have such a sectional shape that the peak, i.e., the deepest portion of the parallel groove (the joint of the sidewalls constituting the parallel groove) is a pointed end. To be more specific, the sectional shape of a pair of tip end surfaces of the parallel groove may be defined by segments of two curved or straight lines that cross each other to form an acute intersection and symmetrical with respect to a center line passing through the center of the parallel groove and extending perpendicular to the light emitting plane of the light guide plate. According to the present invention, the parallel groove of the light guide plate having any of the above sectional shapes enables uniform light to be emitted from the light emitting plane of the light guide plate.

Fig. 4C shows an example of the case where the sectional shape of tip end surfaces 50 of the parallel groove is defined by segments of two curved lines that cross each other to form an acute intersection and which are symmetrical with respect to the center line passing through the center of the parallel groove 18f and extending perpendicular to the light emitting plane of the light guide plate. In the light guide plate 18 illustrated in Fig. 4C, two curved lines 51a and 51b that form tip end surfaces 50 and are symmetrical with respect to a center line X passing trough the center of the parallel groove 18f and extending perpendicular to the light emitting plane 18a of the light guide plate 18 are arcs. In this case, as Fig. 4C illustrates, the center of the arc 51a corresponding to one of the sidewalls that form the parallel groove 18f does not coincide with the center of the arc 51b corresponding to the other sidewall. Consequently, a location 52 at which the two arc sidewalls cross assumes a pointed shape as illustrated in Fig. 4C.

Fig. 4D illustrates yet another example of the case where the sectional shape of a pair of tip end surfaces of the parallel groove is defined by segments of two curved lines that cross each other to form an acute intersection and which are symmetrical with respect to the center line passing through the center of the parallel groove and extending perpendicular to the light emitting plane of the light guide plate. In the light guide plate 18 illustrated in Fig. 4D, two curved lines 54a and 54b that form tip end surfaces 53 and are symmetrical with respect to the center line X passing trough the center of the parallel groove 18f and extending perpendicular to the light emitting plane 18a of the light guide plate 18 are parabolic. In Fig. 4D, a pair of tip end surfaces of the parallel groove 18f are formed such that the focal point of the parabola 54a corresponding to one of the sidewalls that form the parallel groove 18f does not coincide with the focal point of the parabola 54b corresponding to the other sidewall.

In the case as illustrated in Fig. 4D, where the sectional shape of the tip end surfaces 53 of the parallel groove 18 is defined by the two curved lines 54a and 54b that cross at the intersection 56, an angle θ formed between a tangent to the curved line 54a corresponding to one of the sidewalls of the parallel groove 18f at the intersection (pointed end) 56 and another tangent to the curved line 54b corresponding to the other sidewall at the intersection 56 is preferably 90° or less, more preferably 60° or less.

While Figs. 1 to 4D illustrate examples of the light guide plate in which the sectional shape of the parallel groove is such that the curved lines forming the pair of tip end surfaces of the parallel groove are curved inward with respect to the center of the parallel groove, other embodiments of the inventive light guide plate which are different from these are shown in Figs. 5A and 5B. Fig. 5A illustrates an example of the light guide plate in which a pair of tip end surfaces 60 of the parallel groove 18f has a sectional shape defined by two curved lines 61a and 61b curving outward with respect to the center of the parallel groove 18f; Fig. 5B illustrates an example of the light guide plate in which a pair of tip end surfaces 63 of the parallel groove 18f have a sectional shape defined by curved lines 64a and 64b curving outward with respect to the center of the parallel groove 18f combined respectively with curved lines 66a and 66b curving inward with respect to the center of the parallel groove 18f. The light guide plates having parallel grooves with the sectional shapes as illustrated in Figs. 5A and 5B are also capable of emitting light with sufficient brightness from the light emitting plane while inhibiting the occurrence of bright lines.

Referring to Figs. 1 to 5B, the pair of base end surfaces of the tip end portion of the parallel groove are defined by vertical segments parallel to and symmetrical with respect to the light emitting plane 18a and communicating with the tip end surfaces 18h and the parallel surfaces 18g in the sectional shape of the parallel groove. However, the cross section of the parallel groove 18 may have any shape provided that it is formed by a pair of contour lines approaching each other toward the light emitting plane 18a and crossing at the peak, the contour lines each having a part whose inclination angle with respect to a line perpendicular to the light emitting plane varies so as to be sharper on the base end side (base end surfaces) of the parallel groove located farther from the peak than on the tip end side (tip end surfaces) located closer to the peak. For example, when the sectional shape of a pair of tip end surfaces of the parallel groove is triangular (see Fig. 2), a pair of base end surfaces 70 of the parallel groove may have a sectional shape defined by segments (oblique lines) having an inclination that forms a given angle with a line perpendicular to the light emitting plane 18a and passing through the center of the light source, the given angle being sharper than the angle that the tip end surfaces form with that line, as illustrated in Fig. 6A. Further, the sectional shape of the base end surfaces of the parallel groove need not be linear and may be curves. As illustrated in Fig. 6B, the sectional shape of the base end surfaces of the parallel groove may be curved inward with respect to the center of the parallel groove 18f. Such curved lines that may be used include those that are used to form the pair of tip end surfaces of the parallel groove such as hyperbolae, ellipses, and parabolas.

The shape of the parallel groove is not limited to these and may be formed for example by combining the shape of the pair of tip end surfaces and the shape of the pair of base end surfaces mentioned above. The dimensions of the pair of tip end surfaces and the pair of base end surfaces need only be sufficiently great to accommodate the light source inside the parallel groove; the position of the border between the pair of tip end surfaces and the pair of base end surfaces (the position in which they contact) is not limited specifically.

Preferably, the joint (connection) between the pair of tip end surfaces and the pair of base end surfaces in the parallel groove, the joint between the pair of base end surfaces of the parallel groove and the parallel surfaces, and the joint between the parallel surfaces and the inclined surfaces represent smooth configurations having a radius of curvature R > 0.01 (mm). Smooth configuration at these joints prevents diffuse reflection of light at the joints, hence generation of bright lines and occurrence of uneven brightness.

Preferably, a plurality of small prisms having a given configuration are provided on surfaces of the light guide plate excluding the lateral surfaces of the parallel groove (the pair of tip end surfaces and the pair of base end surfaces), for example, on the light emitting plane and/or the inclined surfaces such that their apexes extend parallel to the axis of the rod-type light source. With a number of prisms having a given configuration provided on surfaces of the light guide plate excluding the lateral surfaces of the parallel groove (the pair of tip end surfaces and the pair of base end surfaces), the planar lighting device such as a backlight can be formed without the prism sheets, the light use efficiency of the planar lighting device can be enhanced, the device can be made smaller, and hence the costs can be reduced. While it is preferable to provide a number of small prisms having a given configuration either on the inclined surfaces or the light emitting plane, it is more preferable to provide such prisms on both the inclined surfaces and the light emitting plane.
When proving such prisms on the inclined surfaces, their apex θₚ₁ preferably satisfies 100° ≤ θₚ₁ ≤ 140°. When proving such prisms on the light emitting plane, their apex θₚ₂ more preferably satisfies 40° ≤ θₚ₂ ≤ 70°.

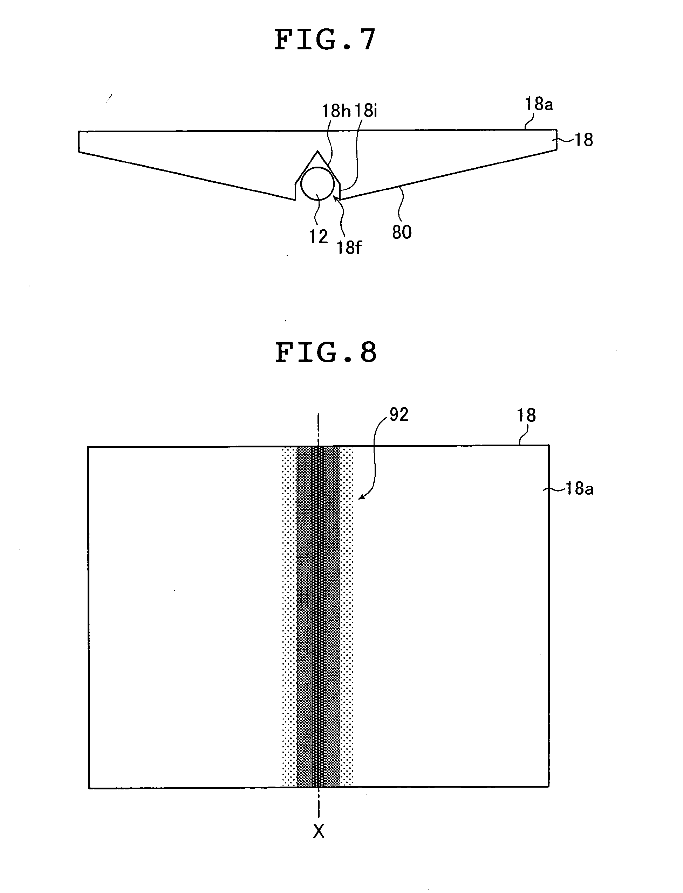

While the pair of parallel surfaces are provided between the pair of inclined surfaces and the pair of base end surfaces of the parallel groove illustrated in Figs. 1 to 6B, the parallel surfaces need not necessarily be provided in the present invention. As illustrated in Fig. 7, the inclined surfaces 80 and the base end surfaces 18i of the parallel groove 18f may communicate directly without providing the parallel surfaces.

The light guide plate of the present invention may, as illustrated in Fig. 8, have a halftone dot pattern 92 formed, typically by printing, on the light emitting plane 18a of the light guide plate 18 such that the density of dots is highest along a certain center line X and decreases progressively from the center line X toward either side (in a direction perpendicular to the center line). By forming the halftone dot pattern 92 on the light emitting plane 18a of the light guide plate 18 such that the center line X of the halftone dot pattern coincides with the position corresponding to the center line of the parallel groove of the light guide plate 18, the occurrence of bright lines or unevenness on the light emitting plane 18a of the light guide plate 18 can be inhibited. Instead of printing the halftone dot pattern 92 on the light guide plate 18, a thin sheet having the halftone dot pattern formed on it may be disposed on the light emitting plane. The halftone dots may be of any shape such as a rectangle, a circle and an ellipse, and the density of halftone dots can be chosen as appropriate for the intensity or spread of bright lines. In addition, instead of forming the halftone dot pattern by printing, the area corresponding to the halftone dot pattern may be roughened to produce a sand-rubbed surface. The sand-rubbed surface may be formed in the deepest portion or on the sidewalls of the parallel groove of the light guide plate.

Since the brightness distribution of the light emitted from the light emitting plane depends greatly on the shape of the tip end portion of the parallel groove of the light guide plate, the brightness on the light emitting plane of the light guide plate can be optimally adjusted for uniformity just by designing the shape of the parallel groove of the light guide plate such as described above according to the present invention.
For example, when the parallel groove of the light guide plate is formed into a hyperbolic shape in cross section, the peak value of the relative brightness in the portion corresponding to the parallel groove is not greater than 10 times the average value of the relative brightness provided by the light emitted from the inclined rear portions, making the brightness of light from the light emitting plane substantially even. On the other hand, in the conventional light guide plate where the parallel groove has a semicircular or parabolic sectional shape, the central portion of the parallel groove, that is, the position just above the light source exhibits a higher relative brightness, generating bright lines. In other words, in the conventional light guide plate where the parallel groove has a semicircular or parabolic sectional shape, the brightness on the light emitting plane is not even.

Since the relative brightness of the central portion is low in the light guide plate of which the parallel groove has a triangular sectional shape, the brightness on the light emitting plane can be made even by leveling the peak to have a given width or curving it to have a relatively small radius of curvature.
When the peak is leveled to have a given width, the relative brightness in the portion corresponding to the parallel groove of the light guide plate varies depending on the length of the leveled portion. Thus, in the present invention, increasing the length of the leveled portion at the deepest portion of the parallel groove increases the brightness according to the invention, but excessively elongating the leveled portion may generate a bright line. Hence, it is preferable to set the length of the leveled portion to 20% or less, more preferably 10% or less, of the diameter of the cold cathode tube.

. The brightness and illuminance on the light guide plate surface can be treated substantially equally. Thus, it is presumed in the present invention that the illuminance shows same tendencies as well. Therefore, it is conceivable that the illuminance on the light emitting plane of the light guide plate can also be made even by designing the shape of the parallel groove of the light guide plate as shown by the present invention.
The top (deepest portion) of the tip end portion of the parallel groove may of course not only have a flat shape or a rounded, circular shape as obtained by chamfering the top at the acute intersection so as to be symmetrical with respect to the center line of the parallel groove but may also have an elliptical, parabolic, or hyperbolic shape. In addition to this, the top (deepest portion) of the tip end portion of the parallel groove may be sand-rubbed as mentioned above to thereby reduce the peak value of illuminance or brightness.

Thus, in the light guide plate according to the present invention, the tip end portion of the parallel groove 18f of the light guide plate 18 is narrowed according to the ratio of the peak value of bright line (peak value of brightness) formed at a portion (first portion) of the light emitting plane 18a of the light guide plate 18 corresponding to the parallel groove 18f to the average value of brightness measured at a portion of the light emitting plane 18a of the light guide plate 18 other than the portion corresponding to the parallel groove 18f, that is, portions corresponding to the inclined surfaces 18d (second portions). Briefly, the degree to which the tip end portion of the parallel groove 18f of the light guide plate 18 is narrowed is controlled according to the ratio. In this case, as in the second embodiment to be described below, the ratio is preferably set to 3 or less, more preferably 2 or less.

Said ratio is preferably set according to the thickness of the backlight unit 2 (distance between the light emitting plane 18a of the light guide plate 18 and the diffusion sheet 14), the diffusion efficiency or the number of the diffusion sheets 14, or the diffusion efficiency or the number of the prism sheets 16, 17, and 19 used in the backlight unit 2. More specifically, in cases where the thickness of the backlight unit 2 (distance between the light emitting plane 18a of the light guide plate 18 and the diffusion sheet 14) can be increased (augmented) to some extent, where the diffusion efficiency of the diffusion sheet 14 used in the backlight unit 2 is high and the number of sheets used can be increased, or where the diffusion efficiency of the prism sheets 16, 17, and 19 is high, and the number of sheets used can be increased, illumination light emitted from the light emitting plane 18a of the light guide plate 18 can be sufficiently diffused (e.g., mixed), though the costs increase. Thus, the ratio of the peak value of brightness in the first portion of the light emitting plane 18a of the light guide plate 18 to the average value of brightness in the second portions of the light emitting plane 18a of the light guide plate 18 can be set to a fairly large value; otherwise, cost reduction is possible but the ratio needs to be set to a small value.

On the other hand, in the inventive light guide plate, the tip end portion of the parallel groove 18f of the light guide plate 18 is narrowed such that the peak value of brightness in the first portion of the light emitting plane 18a of the light guide plate 18 is not greater than three times, preferably not greater than twice the average value of brightness in the second portions of the light emitting plane 18a of the light guide plate 18. The peak value of the brightness in the first portion of the light emitting plane 18a of the light guide plate 18 is set to not greater than three times the average value of the brightness in the second portions of the light emitting plane 18a of the light guide plate 18 because the brightness distribution of the illumination light emitted from the light emitting plane 18a of the light guide plate 18 displays an enhanced uniformity as compared with conventional cases. Accordingly, the illumination light emitted from the light emitting plane 18a of the light guide plate 18 need not be diffused (e.g., mixed) thoroughly. Further, inexpensive diffusion sheets 14 having only a moderate diffusion efficiency may be used, and the number of sheets used may be reduced. In addition, expensive prism sheets 16, 17, and 19 may be dispensed with, inexpensive prism sheets 16, 17, and 19 having only a moderate diffusion efficiency may be used, or the number of sheets used may be reduced.

In the light guide plate 18 according to the present invention, the tip end portion of the parallel groove 18f to be narrowed is preferably defined such that the angles formed by the tip end portion on both sides of a perpendicular line (X) extending from the center of the rod-type light source 12 to the light emitting plane 18a in the sectional shape of the parallel groove 18f of the light guide plate 18 are 90° or less, more preferably 60° or less, altogether. Thus, only a given part of the tip end portion instead of the whole parallel groove 18f may be narrowed to reduce the peak value of the brightness in the first portion of the light emitting plane 18a of the guide plate 18 corresponding to the parallel groove 18f according to the present invention.

According to the present invention, the shape of the parallel groove is formed by a pair of contour lines approaching each other toward the light emitting plane and crossing at the peak in the tip end portion, the contour lines each having a part whose inclination angle with respect to the line perpendicular to the light emitting plane varies so as to be sharper on the base end side (pair of the base end surfaces) of the parallel groove, which is located farther from the peak, than on the tip end side (pair of the tip end surfaces) located closer to the peak. Thus, unevenness in brightness can be reduced and the light emitting efficiency can be enhanced. To be more specific, unevenness in brightness can be reduced and the light emitting efficiency can be enhanced by forming the parallel groove such that its sectional shape is formed by combined curves having another inclination angle Φₙ (>Φₘ) than a maximum inclination angle Φₘ of inclined segments of other hyperbolic, parabolic, or other curves.

The brightness distribution of light emitted from the light emitting plane of the light guide plate was examined by simulation as the sectional shape of the parallel groove of the light guide plate was changed to various configurations.
First, the brightness distribution of light emitted from the light emitting plane of the light guide plate 18 illustrated in Fig. 9A was examined as an example of the light guide plate according to the present invention. The parallel groove 18f of the light guide plate 18 illustrated in Fig. 9A is formed such that the tip end surfaces 18h have a sectional shape defined by segments (oblique lines) having an inclination that forms a given angle with a line perpendicular to the light emitting plane 18a and passing through the center of the light source 12 and that the base end surfaces 18i have a sectional shape defined by segments in contact with the tip end surfaces 18h and the parallel surfaces 18g and perpendicular to the light emitting plane 18a, the peak being formed by a curved surface. The parallel surfaces 18g are provided between the intersection of a line extending from each of the segments forming the tip end surfaces 18h of the parallel groove 18 and each of the lines parallel to the light emitting plane and lying on the underside of the light guide plate on the one hand and the lower ends of the pair of base end surfaces of the parallel groove on the other.
In the light guide plate 18 illustrated in Fig. 9A, the light source 12 has a diameter of 3 mm, the inclination angle that the tip end surfaces 18h form with a line perpendicular to the light emitting plane 18a and passing through the center of the light source 12 is 30°, the peak has a curved surface with a radius of curvature R = 0.25 mm, each of the joints between the tip end surfaces 18h and the base end surfaces 18i has a radius of curvature R = 15 mm.
For comparison was also examined the brightness distribution of light emitted from the light emitting plane 18a of the light guide plate 18 with the parallel groove 18f having a substantially triangular sectional shape as illustrated in Fig. 9B. The light guide plate 18 illustrated in Fig. 9B has substantially the same configuration as the light guide plate illustrated in Fig. 9A except that lateral surfaces 74, i.e., a pair of tip end surfaces and a pair of base end surfaces are only formed by oblique lines.

Fig. 10A shows brightness distributions each observed on a surface closer to the light emitting side of the light guide plates illustrated in Figs. 9A and 9B. In Fig. 10A, the vertical axis plots the brightness (cd/m²) and the horizontal axis plots the distance (mm) from the center of the light guide plate (central part of the parallel groove). The solid line indicates the brightness distribution observed on the light emitting plane of the light guide plate illustrated in Fig. 9A and the dotted line indicates the brightness distribution observed on the light emitting plane of the light guide plate having a configuration as illustrated in Fig. 9B.

As can be seen from Fig. 10A, the difference between a maximum and a minimum of the brightness observed on the light emitting plane of the light guide plate illustrated in Fig. 9A is smaller than the difference between a maximum and a minimum of the brightness observed on the light emitting plane of the light guide plate illustrated in Fig. 9B. This means that the light guide plate illustrated in Fig. 9A is capable of emitting light with unevenness in brightness further reduced as compared with the light guide plate illustrated in Fig. 9B. Briefly, enhanced uniformity of brightness on the light emitting plane can be achieved.
The light emitting efficiencies of the light guide plates were obtained from the calculated brightness distributions: the light guide plate having a configuration as illustrated in Fig. 9A was found to have a light emitting efficiency of 65.4 %; the light guide plate having a configuration as illustrated in Fig. 9B was found to have a light emitting efficiency of 59.7 %. Further, the light guide plate having a configuration as illustrated in Fig. 9A was found to have an incidence efficiency of 84.0 %; the light guide plate having a configuration as illustrated in Fig. 9B was found to have an incidence efficiency of 95.5 %. Thus, the light guide plate illustrated in Fig. 9A is capable of higher light emitting efficiency and incidence efficiency than the light guide plate illustrated in Fig. 9B.

Also examined was the brightness distribution of light emitted from the light emitting plane of another example of the light guide plate according to the present invention illustrated in Fig. 9C: the example has substantially the same configuration as the light guide plate illustrated in Fig. 9A except that a pair of base end surfaces 70 of the parallel groove each have half the inclination as compared with the tip end surfaces 18h, or more specifically, the base end surfaces 70 are defined by segments (oblique lines) having an inclination of 15° with respect to a line perpendicular to the light emitting plane 18a and passing through the center of the light source.
Fig. 10B illustrates a brightness distribution observed on a surface closer to the light emitting side of the light guide plates of Figs. 9C. In Fig. 10B, the vertical axis plots the brightness (cd/m²) and the horizontal axis plots the distance (mm) from the center of the light guide plate (central part of the parallel groove). The solid line indicates the brightness distribution observed on the light emitting plane of the light guide plate as illustrated in Fig. 9C and the dotted line indicates, for comparison, the brightness distribution observed on the light emitting plane of the light guide plate having a configuration as illustrated in Fig. 9B.

As can be seen from Fig. 10B, the difference between a maximum and a minimum of the brightness observed on the light emitting plane of the light guide plate illustrated in Fig. 9C is smaller than the difference between a maximum and a minimum of the brightness observed on the light emitting plane of the light guide plate illustrated in Fig. 9B. This means that the light guide plate illustrated in Fig. 9C is capable of emitting light with unevenness in brightness further reduced as compared with the light guide plate illustrated in Fig. 9B. To be brief, enhanced uniformity of brightness on the light emitting plane can be achieved.
The light emitting efficiency of the light guide plate was obtained from the calculated brightness distribution: the light guide plate having a configuration as illustrated in Fig. 9C was found to have a light emitting efficiency of 61.9 %. Thus, the light guide plate illustrated in Fig. 9C is capable of higher light emitting efficiency than the light guide plate illustrated in Fig. 9B.

Also examined was the brightness distribution of the light emitted from the light emitting plane of another example of the inventive light guide plate illustrated in Fig. 9D: the example has substantially the same configuration as the light guide plate illustrated in Fig. 9A except that a joint between the tip end surfaces 18h and the base end surfaces 18i of the parallel groove 18f is located closer to the parallel portions 18g as compared with the light guide plate illustrated in Fig. 9A.
Fig. 10C shows a brightness distribution observed on a surface closer to the light emitting side of the light guide plates illustrated in Figs. 9D. In Fig. 10C, the vertical axis plots the brightness (cd/m²) and the horizontal axis plots the distance (mm) from the center of the light guide plate (central part of the parallel groove). The solid line indicates the brightness distribution on the light emitting plane of the light guide plate as illustrated in Fig. 9D and the dotted line indicates, for comparison, the brightness distribution on the light emitting plane of the light guide plate having a configuration as illustrated in Fig. 9B.

As can be seen from Fig. 10C, the difference between a maximum and a minimum of the brightness observed on the light emitting plane of the light guide plate illustrated in Fig. 9C is substantially the same as the difference between a maximum and a minimum of the brightness observed on the light emitting plane of the light guide plate illustrated in Fig. 9B. This means that the light guide plate illustrated in Fig. 9D is capable of emitting light with unevenness in brightness reduced to substantially a same level as the light guide plate illustrated in Fig. 9B.
The light emitting efficiency of the light guide plate was obtained from the calculated brightness distribution: the light guide plate having a configuration as illustrated in Fig. 9D was found to have a light emitting efficiency of 61.5 %. Thus, the light guide plate illustrated in Fig. 9D is capable of higher light emitting efficiency than the light guide plate illustrated in Fig. 9B.

Also examined was the brightness distribution of light emitted from the light emitting plane of still another example of the light guide plate according to the present invention illustrated in Fig. 9E: the example has substantially the same configuration as the light guide plate illustrated in Fig. 9A except that base end surfaces 72 have a sectional shape defined by curves curving inward with respect to the parallel groove 18f.
Fig. 10D shows a brightness distribution observed on a surface closer to the light emitting side of the light guide plates illustrated in Figs. 9E. In Fig. 10D, the vertical axis plots the brightness (cd/m²) and the horizontal axis plots the distance (mm) from the center of the light guide plate (central part of the parallel groove). The solid line indicates the brightness distribution on the light emitting plane of the light guide plate as illustrated in Fig. 9E and the dotted line indicates, for comparison, the brightness distribution on the light emitting plane of the light guide plate having a configuration as illustrated in Fig. 9B.

As can be seen from Fig. 10D, the difference between a maximum and a minimum of the brightness observed on the light emitting plane of the light guide plate illustrated in Fig. 9E is smaller than the difference between a maximum and a minimum of the brightness observed on the light emitting plane of the light guide plate illustrated in Fig. 9B. This means that the light guide plate illustrated in Fig. 9E is capable of emitting light with unevenness in brightness further reduced as compared with the light guide plate illustrated in Fig. 9B. In brief, enhanced uniformity of brightness on the light emitting plane can be achieved.
The light emitting efficiency of the light guide plate was obtained from the calculated brightness distribution: the light guide plate having a configuration as illustrated in Fig. 9E was found to have a light emitting efficiency of 70.9 %. Thus, the light guide plate illustrated in Fig. 9E is capable of higher light emitting efficiency than the light guide plate illustrated in Fig. 9B.

Thus, it can be seen from Figs. 10A to 10C that by shaping the parallel groove of the light guide plate according to the present invention, unevenness in brightness can be reduced to substantially a same level as or even a lower level than can be achieved by a triangular parallel groove whereby unevenness in brightness can be already further reduced than is conventionally possible. Furthermore, the light emitting efficiency can be enhanced.

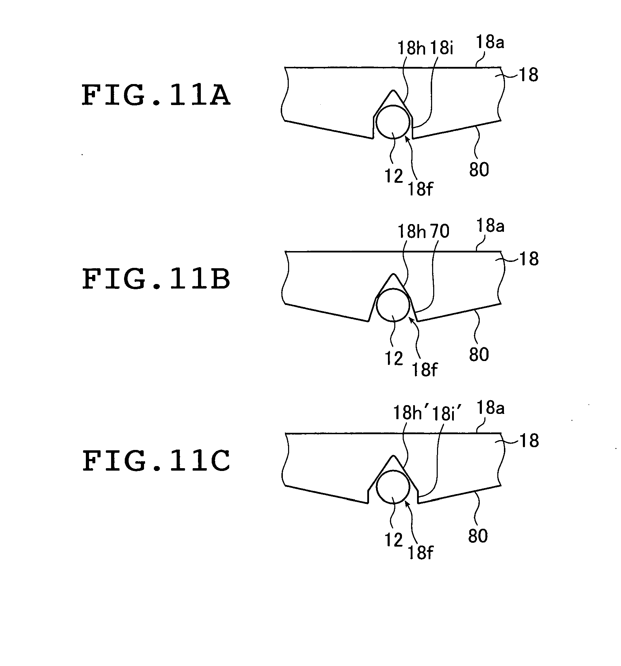

Subsequently examined were the brightness distribution of light emitted from the light emitting plane of light guide plates illustrated in Figs. 11A to 11C having various configurations such that the base end surfaces 18i and the inclined surfaces 80 of the parallel groove 18f directly communicate without the parallel surfaces provided.
The light guide plate illustrated in Fig. 11A has substantially the same configuration as the light guide plate illustrated in Fig. 9A except that the parallel surfaces are not provided and that the inclination angle of the inclined surfaces 80 is changed such that the base end surfaces 18i and the inclined surfaces 80 of the parallel groove 18f directly communicate. The light guide plates illustrated in Figs. 11B and 11C also have substantially the same configurations as the light guide plates illustrated in Figs. 9C and 9D, respectively, except that the parallel surfaces are not provided and that the inclination angle of the inclined surfaces 80 is changed such that the pair of base end surfaces 70 or 18i of the parallel groove 18f directly communicate with the inclined surfaces 80.

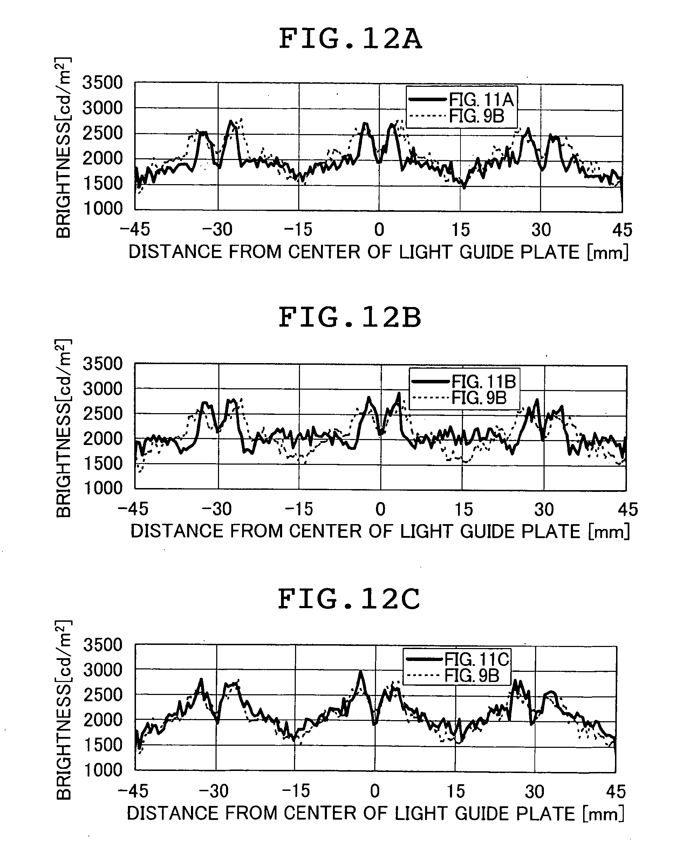

Figs. 12A to 12C each illustrate a brightness distribution observed on a surface closer to the light emitting side of the light guide plates of Figs. 11A to 11C. In Figs. 12A to 12C, the vertical axis plots the brightness (cd/m²) and the horizontal axis plots the distance (mm) from the center of the light guide plate (central part of the parallel groove). In Figs. 12A to 12C, the solid line indicates the brightness distribution on the light emitting plane of the light guide plate as illustrated in Figs. 11A to 11C and the dotted line indicates, for comparison, the brightness distribution on the light emitting plane of the light guide plate having a configuration as illustrated in Fig. 9B.
As illustrated in Figs. 12A to 12C, any of these light guide plates is capable of reducing unevenness in brightness to substantially a same level as or even to a lower level than that achieved by the light guide plate of Fig. 9B. Further, the light emitting efficiencies of the light guide plates were obtained from the calculated brightness distributions: the light guide plate as illustrated in Fig. 11A was found to have a light emitting efficiency of 61.5 %; the light guide plate illustrated in Fig. 11B was found to have a light emitting efficiency of 61.6 %; the light guide plate illustrated in Fig. 11C was found to have a light emitting efficiency of 62.0 %. Thus, it is apparent that any of these light guide plates is capable of enhanced light emitting efficiency as compared with the light guide plate illustrated in Fig. 9B.
Thus, it can be seen from Figs. 12A to 12C that by shaping the parallel groove of the light guide plate according to the present invention, unevenness in brightness can be reduced to substantially a same level as or even lower level than can be achieved by a triangular parallel groove whereby the unevenness in brightness can be already further reduced than is conventionally possible. Furthermore, the light emitting efficiency can be enhanced.

Examined next were brightness distributions of light emitted from the light emitting planes of light guide plates illustrated in Figs. 13A to 13D, wherein the tip end surfaces of the parallel groove are hyperbolic in cross section.
The light guide plate illustrated in Fig. 13A has substantially the same configuration as the light guide plate illustrated in Fig. 9A except that a pair of tip end surfaces 40 of the parallel groove 18f are hyperbolic in cross section. For comparison was also examined the brightness distribution of the light emitted from the light emitting plane 18a of the light guide plate 18 wherein the entire lateral surfaces 78 of the parallel groove 18f are solely defined each by a hyperbola in cross section as illustrated in Fig. 13B. The light guide plate illustrated in Fig. 13B has substantially the same configuration as the light guide plate illustrated in Fig. 13A except that each of the lateral surfaces 78, i.e., the tip end surface and the base end surface are formed by a single hyperbola in cross section.

Figs. 14A illustrates brightness distributions each observed on a surface closer to the light emitting side of the light guide plate of Fig. 13A and the light guide plate of Fig 13B. In Fig. 14A, the vertical axis plots the brightness (cd/m²) and the horizontal axis plots the distance (mm) from the center of the light guide plate (central part of the parallel groove). The solid line indicates the brightness distribution on the light emitting plane of the light guide plate as illustrated in Fig. 13A and the dotted line indicates, for comparison, the brightness distribution on the light emitting plane of the light guide plate having a configuration as illustrated in Fig. 13B.

As can be seen from Fig. 14A, the difference between a maximum and a minimum of the brightness observed on the light emitting plane of the light guide plate illustrated in Fig. 13A is smaller than the difference between a maximum and a minimum of the brightness observed on the light emitting plane of the light guide plate illustrated in Fig. 13B. This means that the light guide plate illustrated in Fig. 13A is capable of emitting light with unevenness in brightness further reduced as compared with the light guide plate illustrated in Fig. 13B. In brief, enhanced uniformity of brightness on the light emitting plane can be achieved.
Further, the light emitting efficiencies of the light guide plates were obtained from the calculated brightness distributions: the light guide plate having a configuration as illustrated in Fig. 13A was found to have a light emitting efficiency of 63.1 %; the light guide plate having a configuration as illustrated in Fig. 13B was found to have a light emitting efficiency of 56.6 %. Thus, the light guide plate illustrated in Fig. 13A is capable of higher light emitting efficiency than the light guide plate illustrated in Fig. 13B.

Still another example of the inventive light guide plate as illustrated in Fig. 13C was examined to observe the brightness distribution of the light emitted from its light emitting plane: the example has substantially the same configuration as the light guide plate illustrated in Fig. 9A except that a pair of base end surfaces 76 of the parallel groove 18f are hyperbolae in cross section having half the inclination as compared with hyperbolae forming the tip end surfaces 40, or, in other words, forming a smaller angle with a line perpendicular to the light emitting plane 18a and passing through the center of the light source than the hyperbolae forming the tip end surfaces 40.
Fig. 14B illustrates a brightness distribution observed on a surface closer to the light emitting side of the light guide plates of Figs. 13C. In Fig. 14B, the vertical axis plots the brightness (cd/m²) and the horizontal axis plots the distance (mm) from the center of the light guide plate (central part of the parallel groove). The solid line indicates the brightness distribution on the light emitting plane of the light guide plate as illustrated in Fig. 13C and the dotted line indicates, for comparison, the brightness distribution on the light emitting plane of the light guide plate having a configuration as illustrated in Fig. 13B.

As can be seen from Fig. 13C, the difference between a maximum and a minimum of the brightness observed on the light emitting plane of the light guide plate illustrated in Fig. 13C is substantially the same as the difference between a maximum and a minimum of the brightness observed on the light emitting plane of the light guide plate illustrated in Fig. 13B. This means that the light guide plate illustrated in Fig. 13C is capable of emitting light with unevenness in brightness reduced to substantially a same level as compared with the light guide plate illustrated in Fig. 13B.
Further, the light emitting efficiency of the light guide plate was obtained from the calculated brightness distribution: the light guide plate having a configuration as illustrated in Fig. 13C was found to have a light emitting efficiency of 59.1 %. Thus, the light guide plate illustrated in Fig. 13C is capable of higher light emitting efficiency than the light guide plate illustrated in Fig. 13B.

Yet another example of the inventive light guide plate as illustrated in Fig. 13D was examined to observe the brightness distribution of the light emitted from its light emitting plane: the example has substantially the same configuration as the light guide plate illustrated in Fig. 13A except that the pair of base end surfaces of the parallel groove has a sectional shape formed by curves curving inward with respect to the center of the parallel groove.
Fig. 14C shows a brightness distribution observed on a surface closer to the light emitting side of the light guide plates illustrated in Figs. 13D. In Fig. 14C, the vertical axis plots the brightness (cd/m²) and the horizontal axis plots the distance (mm) from the center of the light guide plate (central part of the parallel groove). The solid line indicates the brightness distribution on the light emitting plane of the light guide plate illustrated in Fig. 13D and the dotted line indicates, for comparison, the brightness distribution on the light emitting plane of the light guide plate having a configuration as illustrated in Fig. 13B.

As can be seen from Fig. 14C, the difference between a maximum and a minimum of the brightness observed on the light emitting plane of the light guide plate illustrated in Fig. 13D is smaller than the difference between a maximum and a minimum of the brightness observed on the light emitting plane of the light guide plate illustrated in Fig. 13B. This means that the light guide plate illustrated in Fig. 13D is capable of emitting light with unevenness in brightness further reduced as compared with the light guide plate illustrated in Fig. 13B.
Furthermore, the light emitting efficiency of the light guide plate was obtained from the calculated brightness distribution: the light guide plate having a configuration as illustrated in Fig. 13D was found to have a light emitting efficiency of 67.8 %. Thus, the light guide plate illustrated in Fig. 13D is capable of higher light emitting efficiency than the light guide plate illustrated in Fig. 13B.
Thus, it can be seen from Figs. 14A to 14C that by shaping the parallel groove of the light guide plate according to the present invention, unevenness in brightness can be reduced to substantially a same level as or even lower level than can be achieved by a hyperbolic parallel groove whereby the unevenness in brightness can be already further reduced than is conventionally possible. Furthermore, the light emitting efficiency can be enhanced.

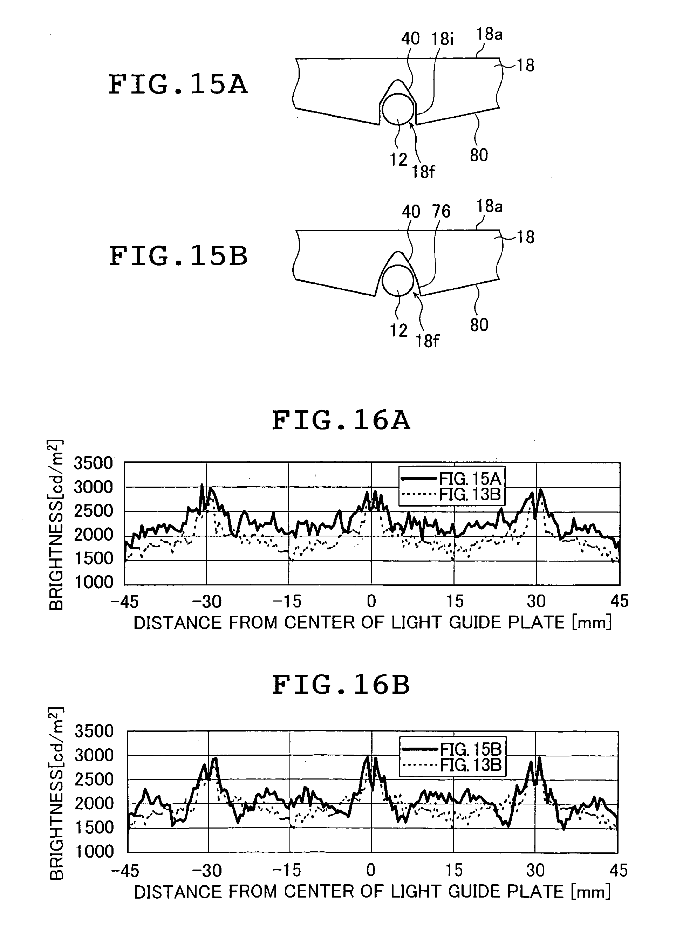

Next, yet other examples of the inventive light guide plate as illustrated in Figs. 15A and 15B were examined to observe the brightness distribution of the light emitted from their light emitting planes: these examples have substantially the same configuration as the light guide plate illustrated in Fig. 13A except that the parallel surfaces are not provided and that the inclination angle of the inclined surfaces is changed such that the pair of base end surfaces and the inclined surfaces of the parallel groove directly communicate. Likewise, the light guide plate illustrated in Fig. 15B has substantially the same configuration as the light guide plate illustrated in Fig. 13C except that the parallel surfaces are not provided and that the inclination angle of the inclined surfaces is changed such that the pair of base end surfaces and the inclined surfaces of the parallel groove directly communicate.

Figs. 16A and 16B each illustrate brightness distributions observed on the light emitting side of the light guide plates of Figs. 15A and 15B. In Figs. 16A and 16B, the vertical axis plots the brightness (cd/m²) and the horizontal axis plots the distance (mm) from the center of the light guide plate (central part of the parallel groove). In Figs. 16A and 16B, the solid line indicates the brightness distribution on the light emitting plane of the light guide plates as illustrated in Figs. 15A and 15B and the dotted line indicates, for comparison, the brightness distribution on the light emitting plane of the light guide plate having a configuration as illustrated in Fig. 13B.
As illustrated in Figs. 16A and 16B, any of these light guide plates is capable of reducing unevenness in brightness to substantially a same level as or even to a lower level than that achieved by the light guide plate of Fig. 13B. Further, the light emitting efficiencies of the light guide plates were obtained from the calculated brightness distributions: the light guide plate as illustrated in Fig. 15A was found to have a light emitting efficiency of 63.9 %; the light guide plate illustrated in Fig. 15B was found to have a light emitting efficiency of 58.9 %. Thus, it is apparent that any of these light guide plates is capable of enhanced light emitting efficiency as compared with the light guide plate illustrated in Fig. 13B.
Thus, it can be seen from Figs. 16A and 16B that by shaping the parallel groove of the light guide plate according to the present invention, unevenness in brightness can be reduced to substantially a same level as or even lower level than can be achieved by a hyperbolic parallel groove whereby the unevenness in brightness can be already further reduced than is conventionally possible. Furthermore, the light emitting efficiency can be enhanced.

Thus, light with enhanced uniformity can be emitted and the light emitting efficiency can be increased by shaping the parallel groove of the light guide plate such that the sectional shape of the parallel groove is formed by a pair of contour lines approaching each other toward the light emitting plane and crossing at the peak, the contour lines each having a part whose inclination angle with respect to a line perpendicular to the light emitting plane varies so as to be sharper on the base end side (a pair of base end surfaces) of the parallel groove, which is located farther from the peak, than on the tip end side (a pair of tip end surfaces) of the parallel groove located closer to the peak.

In the case where a halftone dot pattern is provided on the light emitting plane, the dynamic range of a halftone dot density can be made narrower, making it easier to design the halftone dot pattern. This in turn allows use of inks having various transmittances for the formation of the halftone dot pattern, widening the range of selection of ink used to form the halftone dots. In brief, a wide range of transmittance, which varies with the kind of ink, is usable.
Further, since the range of the halftone dot brightness adjustment control can be narrowed, the transmittance of the halftone dot film itself can be enhanced. In other words, since the light emitted from the light emitting plane is uniform, the brightness range to be adjusted can be narrowed. To be specific, the halftone dot distribution density can be lowered and the transmittance of the halftone dot pattern can be increased.
Thus, decrease of brightness of the light emitted from the light emitting plane is inhibited, hence, a high brightness is maintained even when the halftone dot pattern is provided, enabling light with enhanced uniformity to be emitted.

The light emitting efficiency can be further enhanced by providing parallel surfaces (parallel planes) parallel to the light emitting plane between the parallel groove and the inclined surfaces. The dimensions of the parallel surfaces are not limited specifically. Preferably, the parallel surfaces are provided between the intersection of a line extended from each of the cross-sectional lines forming the tip end surfaces of the parallel groove and each of the lines parallel to the light emitting plane and lying on the underside of the light guide plate on the one hand and the lower ends of the pair of base end surfaces of the parallel groove on the other.

While the light guide plate and the planar lighting device and the liquid crystal display device provided with the light guide plate according to the present invention have been described in detail, it is to be understood that the present invention is not limited to the above aspects and that numerous modifications and changes may be made therein without departing from the gist of the invention.

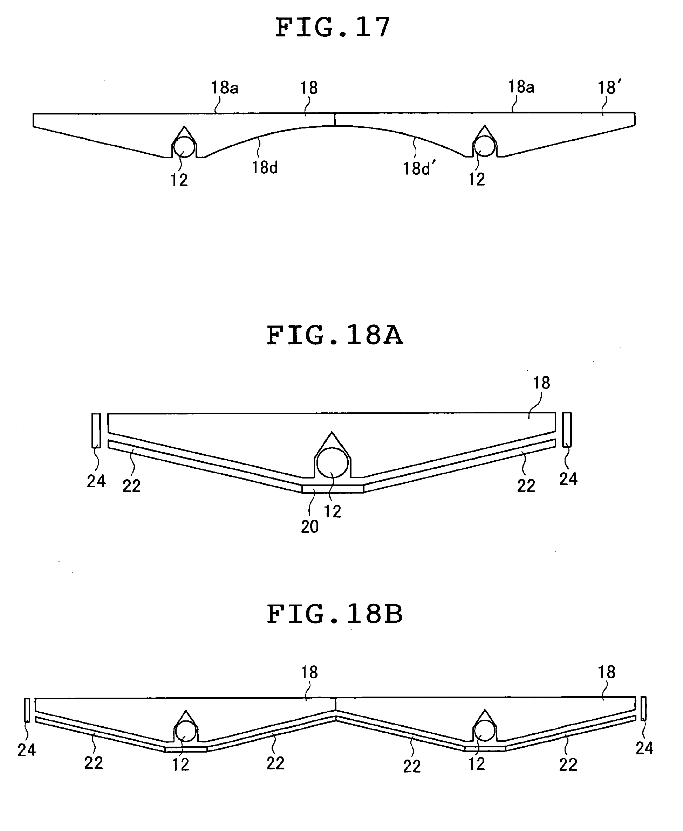

According to the present invention, when, for example, a plurality of light guide plates 18 are arranged in juxtaposition such that their light emitting planes 18a form one and the same plane to make a large light guide plate, the inclination angle of the inclined surfaces 18d of the light guide plate 18 may be adjusted such that, as illustrated in Fig. 17, a tangent to the inclined surface 18d of one light guide plate 18 and a tangent to an inclined surface 18d' of another light guide plate 18' to be connected therewith do not cross each other, the tangents touching their respective inclined surfaces at the contact point at which these inclined surfaces meet, or, in other words, such that these inclined surfaces so communicate with each other as to provide a smooth plane or a curved surface. In the light guide plates illustrated in Fig. 17, the inclined surfaces 18d and 18d' of the light guide plates 18 and 18', respectively, are shaped to form an arc together.
Such a light guide plate having a large light emitting plane can be made into a backlight unit having a large light irradiating surface and hence can be applied for example to a liquid crystal display device having a large display screen, in particular, a wall-mounted type liquid crystal display device such as a wall-mounted TV.
When a plurality of light guide plates 18 are disposed in juxtaposition, preferably the inclined surfaces are so shaped and the inclination angle is so determined that light is not emitted from one block but emitted from several blocks and that the light emitted from the light emitting plane has an even brightness distribution.
Thus, emission of light with enhanced uniformity is made possible whereas the light emission efficiency is increased as one light guide plate also emits light admitted into other, adjacent light guide plates from its light emitting plane.

Thus, when a plurality of light guide plates according to the present invention are connected to form a large light guide plate, inventive light guide plates each separately formed may be arranged or connected such that their thin portions contact each other. To increase the uniformity of the emitted light, two or more inventive light guide plates as connected are preferably formed into a single piece.
From a viewpoint of efficient manufacture, it is preferable to form a number of inventive light guide plates required to provide desired display screen dimensions in a single piece.

While, in the above embodiments, the connected light guide plates represent a flat light emitting plane, that is to say, individual light emitting planes are flush with each other, the entire light emitting plane formed by connected individual light guide plates need not necessarily be flat: the entire light emitting plane formed by connected light guide plates may represent an identical curved plane; or part of the light emitting plane may represent a curved plane. Alternatively, individual light guide plates may be so formed that the entire light emitting plane formed by a plurality of light guide plates connected represent a roll having a constant period. Alternatively, the light emitting plane may be entirely or partly sand-rubbed or provided with a number of dimples, a number of small projections, or a number of printed scatterers. Thus, generation of bright lines at the light emitting plane of the light guide plate can be inhibited by providing such sand-rubbed surface, a number of dimples, a number of small projections or a number of printed scatterers.

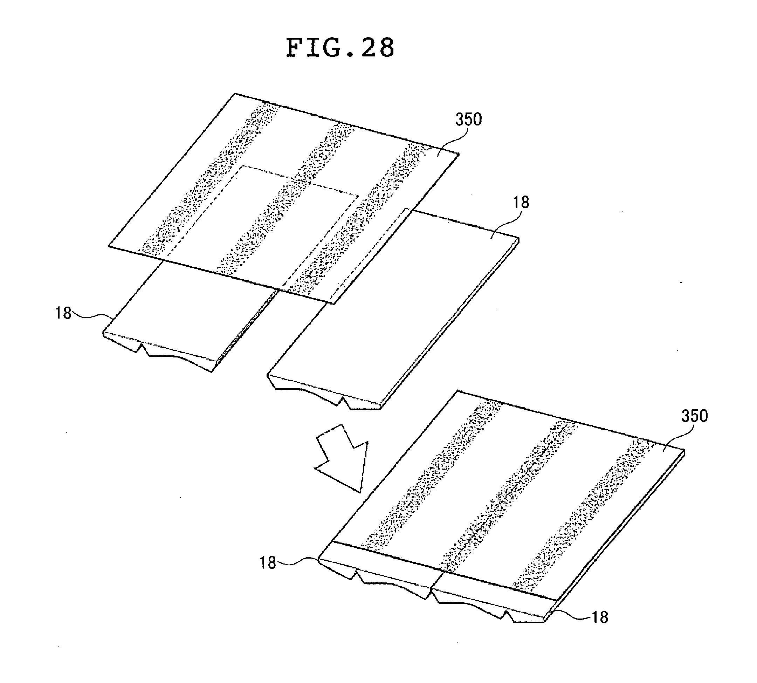

Further, when a large backlight unit is made by connecting a plurality of light guide plates 18, a halftone dot sheet 350 bearing halftone dots for inhibiting generation of uneven brightness on the light emitting plane of light guide plates 18 connected is preferably disposed so as to cover the light emitting plane formed by the plurality of light guide plates 18 connected as illustrated in Fig. 28. The halftone dot sheet 350 may vary in size according to the number of light guide plates 18 connected and the halftone dots of the halftone dot sheet 18 are positioned at locations where bright lines are generated in the light emitting plane formed by the light guide plates 18.
The halftone dot sheet 350 may be preferably formed, with a view to limiting the effects of thermal changes, of the same material or a material having substantially a same coefficient of thermal expansion as the light guide plate 18 and having a high transmittance and a diffusion efficiency. Providing the halftone dot sheet formed of such material reduces displacements, which are possibly caused by temperature and humidity changes in manufacturing and/or use environment, of the halftone dots of the halftone dot sheet from the locations in the light emitting plane formed by the light guide plates where bright lines are generated, and hence limits changes in the illuminance distribution of the light emitted from the light emitting plane formed by the light guide plate units.

The light guide plate may have a configuration such that, in the light guide plate 18 illustrated in Fig. 2B, it is divided along the center line of the parallel groove for accommodating the light source. When light guide plates having such a configuration is used, the light guide plates are connected at a joint, which corresponds to the parallel groove 18f of the light guide plate 18 illustrated in Fig. 2B. Accordingly, the halftone dot sheet is preferably disposed such that the joint coincides with the areas of the halftone dot sheet where the halftone dot density is highest. Further, when connecting a plurality of light guide plates some of which are so configured as to be divided along the center line of their parallel groove, with the others being so configured as illustrated in Fig. 2B, the halftone dot pattern of the halftone dot sheet is formed such that the dot density is high in its areas coinciding with the center lines of the parallel grooves of the light guide plates other than those where joints are located.
When a large backlight unit is manufactured by connecting a plurality of light guide plates, formation of such halftone dot pattern limits the generation of bright lines or uneven brightness at the joints of the plurality of light guide plates. The halftone dot sheet can be bonded to the light guide plates by disposing an adhesive layer on the back surface of the halftone dot sheet.

When disposing such halftone dot sheet on the light emitting plane of the connected light guide plates, positioning holes are preferably provided, for example, in any one location in areas of the light emitting plane formed by the connected light guide plates that are not used for light emission and the corresponding location in the halftone dot sheet to ensure accurate and infallible alignment of the halftone dot pattern formed on the halftone dot sheet with positions corresponding to the center lines of the parallel grooves of the connected light guide plates. By passing a fastener such as a pin through the positioning holes, the locations in the light guide plates where bright lines are generated can be aligned accurately and infallibly with the halftone dots on the halftone dot sheet. The location in which a positioning hole should be formed is not limited specifically, provided that it is formed in areas not used for light emission. To inhibit displacement of the halftone dot pattern from the positions corresponding to the center lines of the parallel grooves of the light guide plates caused by variation in temperature and humidity, however, the positioning hole is preferably made substantially at the center of the light emitting plane in the direction perpendicular to the center lines of the parallel grooves of the connected light guide plates and near the end of the connected light guide plates in a longitudinal direction of the parallel grooves.

Preferably, the halftone dot sheet has its position restricted in relation to the joined light guide plates near the center of the light guide plates and fitted to the light guide plate with a gap maintained only by the thickness in the periphery.

Further, the inventive light guide plate may be provided with reflective plates 24 on the areas of the lateral sides considering the areas of the lateral sides or the like, as illustrated by the light guide plate 18 shown in Fig. 18A. When a plurality of light guide plates 18 are arranged, the reflective plates 24 may be provided on the lateral sides of the light guide plates 18 located outermost as illustrated in Fig. 18B. The reflective plates 24 provided on the lateral sides prevent light from leaking from the lateral sides of the light guide plates 24 and hence further enhances the light use efficiency. The reflective plates 24 can be formed using any of the same materials as used for the reflective sheet and the reflector.

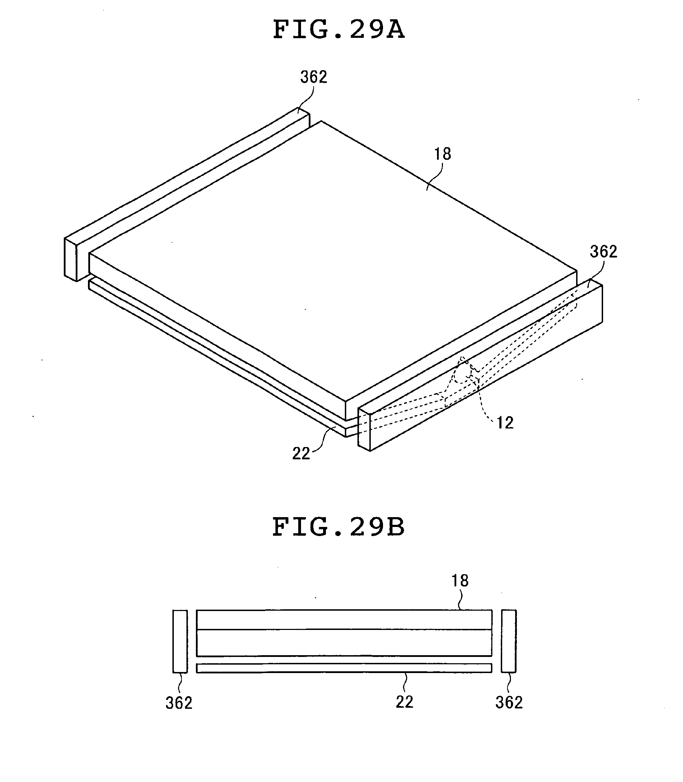

Further, reflective plates 362 formed of the same material as the reflective sheet 22 and the reflector may be provided on the sides of the light guide plate 18 in the direction orthogonal to the longitudinal direction of the light source 12 as illustrated in Figs. 29A and 29B. This enhances the light emitting efficiency and reduces uneven brightness at the ends of the light guide plate 18 in the direction orthogonal to the longitudinal direction of the light source 12.

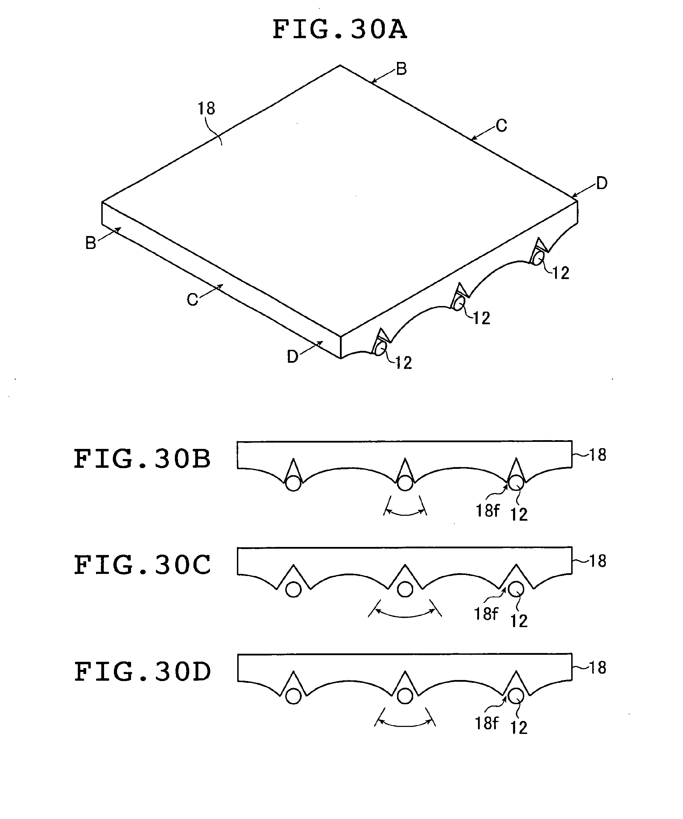

When the brightness distribution of the light source is not flat in the longitudinal direction of the light source, the shape of the parallel groove of the light guide plate, in particular the angle of the tip end portion, may be adjusted according to the position in the longitudinal direction of the light source. When, for example, the brightness of the light source increases in the longitudinal direction of the light source from its ends toward the center, the angle of the tip end portion of the parallel groove 18f of the light guide plate 18 may be increased as illustrated in Figs. 30A to 30D from the ends (see Figs. 30B to 30D) of the light guide plate 18 towards the center (see Fig. 30C) in the longitudinal direction of the light source 12.

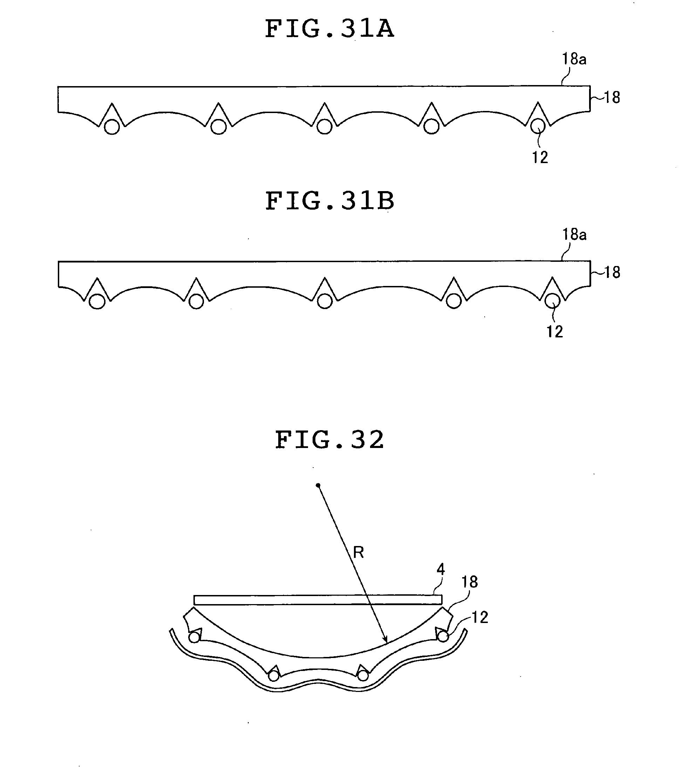

On the other hand, when, for example, the brightness distribution of the light sources is not flat, or the brightness distribution of the light emitted from the light emitting plane of the light guide plate is not flat in a direction parallel to the light emitting plane of the light guide plate and perpendicular to the longitudinal direction of the light sources, the intervals at which the light sources are disposed may be varied or, in other words, the widths of the individual light guide plates may be varied according to where they are located in the entire arrangement. For example, when the brightness increases from the lateral ends of the light guide plate towards its center in a direction parallel to the light emitting plane and perpendicular to the longitudinal direction of the light sources, the light sources may be disposed at decreasing intervals with an increasing distance from the center of the light guide plate 18 in a direction parallel to the light emitting plane and perpendicular to the longitudinal direction of the light sources 12 as illustrated in Fig. 31B rather than disposing the light sources at regular intervals as illustrated in Fig. 31A.

Further, the brightness distribution of the light sources or the brightness distribution of the light emitted from the light emitting plane of the light guide plate in a direction parallel to the light emitting plane and perpendicular to the longitudinal direction of the light sources may be flattened by forming the light emitting plane of the light guide plate into a curved plane that is represented by a curved line in a plane perpendicular to the longitudinal direction of the light sources. For example, when the brightness increases from the ends of the light guide plate toward its center in a direction parallel to the light emitting plane and perpendicular to the longitudinal direction of the light sources, the light guide plate 18 may be formed into a round shape as illustrated in Fig. 32 having a curved plane curving outward on the side on which the light sources 12 are located in cross section perpendicular to the longitudinal direction of the light sources such that the distance between the light sources provided in their respective light guide plates and the liquid crystal display panel 4 increases from the ends of the light guide plates toward their center in a direction parallel to the light emitting plane of the light guide plates 18 and perpendicular to the longitudinal direction of the light sources.

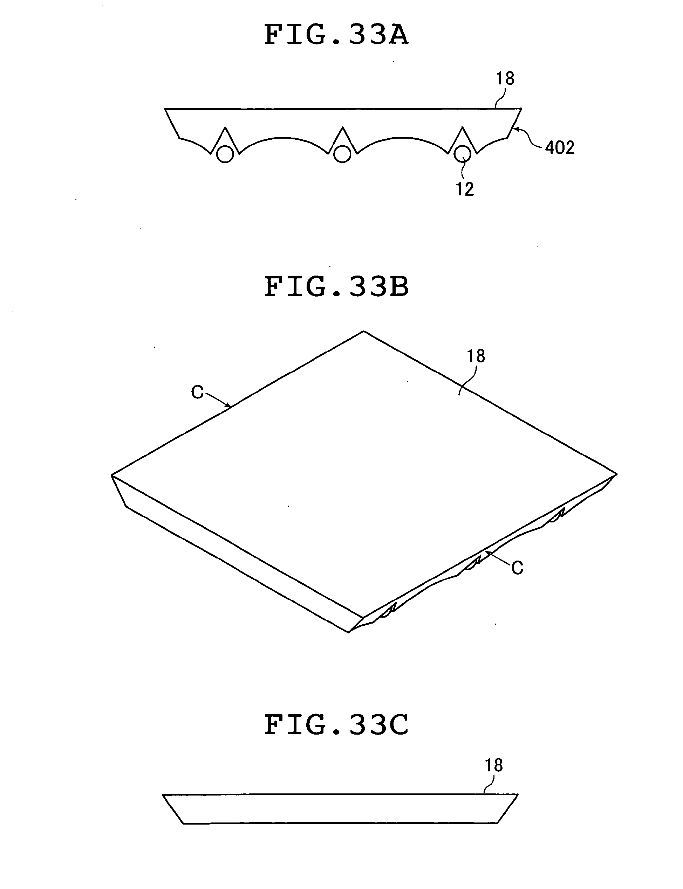

When the brightness distribution varies between part of the light guide plate near the ends thereof in the longitudinal direction of the light sources and the other parts, ends 402 of the light guide plate 18 in the longitudinal direction of the light sources 12 may have a configuration as illustrated in Fig.33A having an inclination with a given angle with respect to a direction perpendicular to the light emitting plane of the light guide plate 18. Further, when the brightness distribution varies between part of the light guide plate near the ends thereof in a direction parallel to the light emitting plane and perpendicular to the longitudinal direction of the light sources and other parts, the ends of the light guide plate in a direction parallel to the light emitting plane and perpendicular to the longitudinal direction of the light sources may have a configuration as illustrated in Figs.33B and 33C having an inclination with a given angle with respect to a direction perpendicular to the light emitting plane of the light guide plate 18.
Thus, adjustment of the configuration of the light guide plate according to the light sources enables emission of uniform light from the light emitting plane.

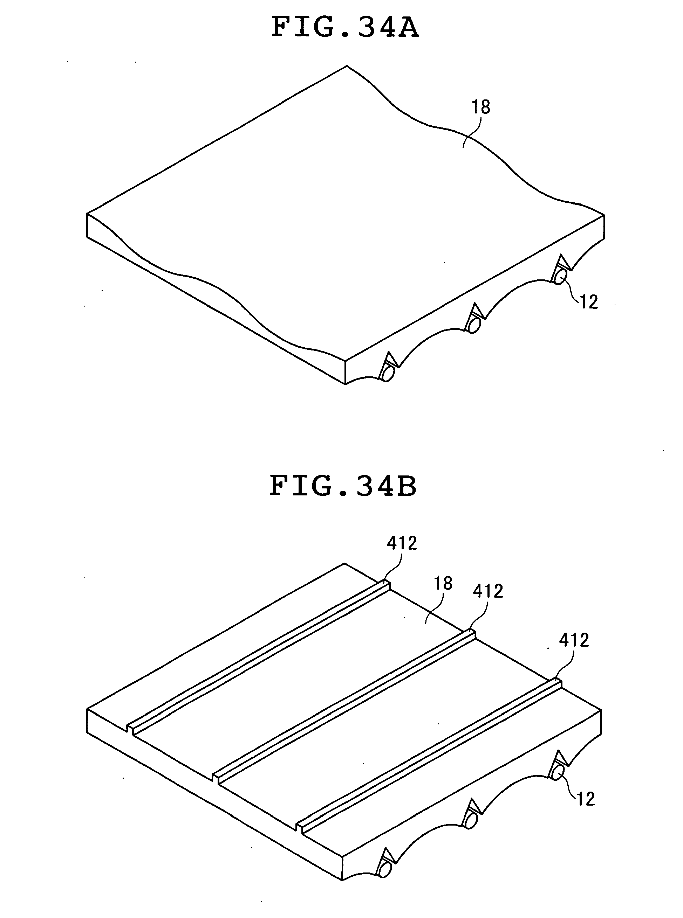

When it is allowable to increase the thickness of the backlight, the light emitting plane of the light guide plate 18 may be formed into a moderately rolling curved plane represented by a curved line in cross section in the longitudinal direction of the light sources 12 as illustrated in Fig. 34A or ribs 412 each having a small height and extending in a direction perpendicular to the longitudinal direction of the light sources 12 may be provided on the light emitting plane of a light guide plate 19 as illustrated in Fig. 34B. These configurations prevent deflection of the light guide plate in a direction perpendicular to the longitudinal direction of the light sources. Moreover, the ribs 412 also act as spacers to provide a gap between the light guide plate 18 and sheet members such as the diffusion sheet constituting the backlight and further enhance the uniformity of the illuminance of light that irradiates the liquid crystal display panel.

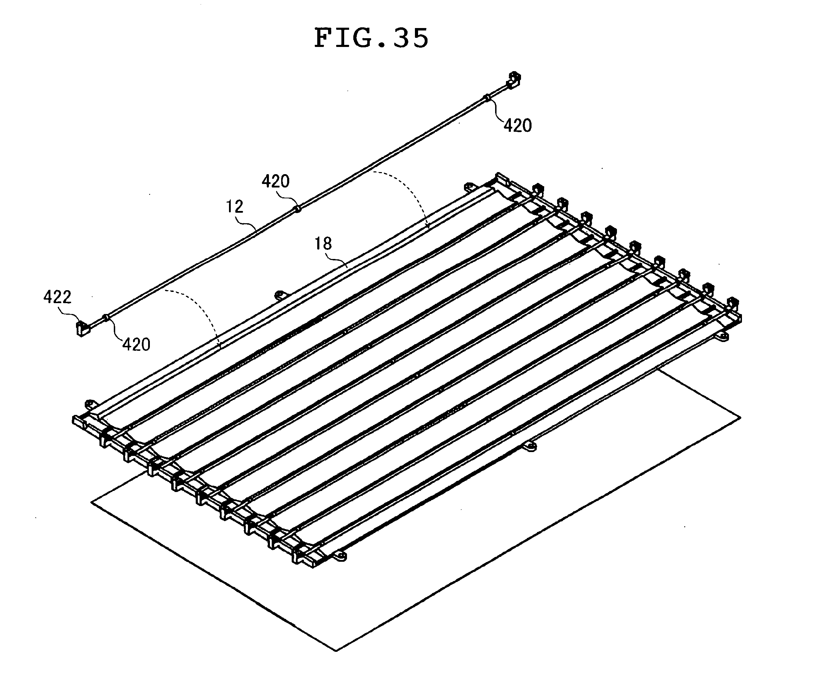

As illustrated in Fig. 35, a reflective sheet may be attached to the inclined surfaces of the light guide plate 18 such that the reflective sheet extends over the parallel grooves of the light guide plate to restrict or provisionally fix the position of the light sources.
With the position of the light sources restricted, the positions of the light sources are secured in relation to the light guide plate and thus the unevenness in brightness can be reduced. Further, with the light sources fixed provisionally, the ease with which the backlight unit is assembled increases.

When cold cathode tubes are used as the light sources, elastic members to hold a cold cathode tube, e.g., a transparent 0-ring 420 as illustrated in Fig. 35, may be provided near the ends and at the center of each cold cathode tube. Such elastic members act as cushioning material and prevent the cold cathode tubes from breaking as they hit the parallel grooves when they are disposed in the parallel grooves of the light guide plate. In addition, the elastic members attached to the cold cathode tubes enhance the ease with which the cold cathode tubes are assembled and handled in the manufacturing processes.

Further, entry of dust into the parallel grooves of the light guide plate from the outside can be prevented and partial cooling of the cold cathode tubes can be prevented by holding the longitudinal ends of the cold cathode tubes with electrode covers 422 such as sponges and thereby closing the longitudinal ends of the parallel grooves of the light guide plate.

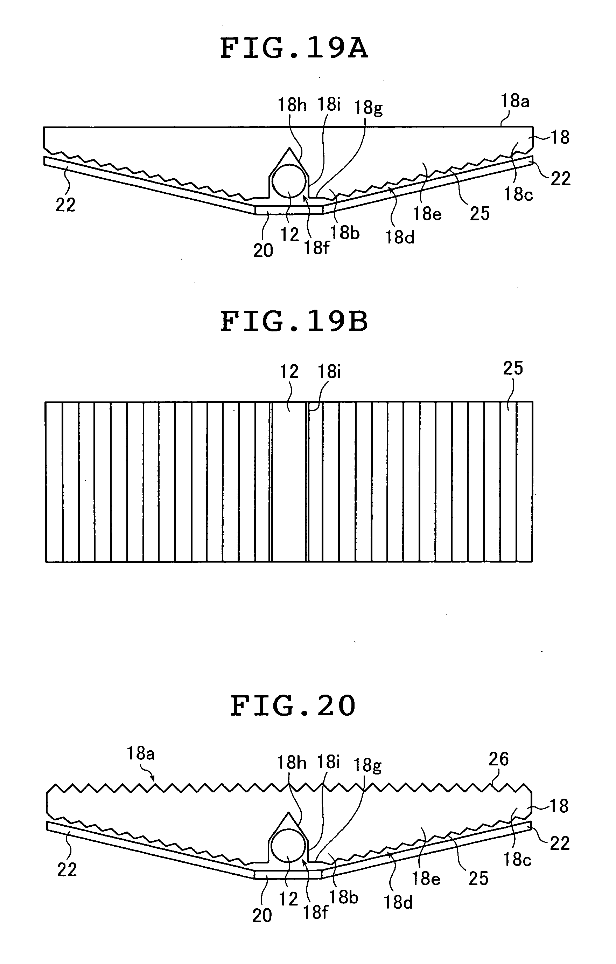

While, in the embodiments illustrated in Figs. 1 to 3, the prism sheets are provided on the light emitting side of the light guide plate and/or between the inclined surfaces of the light guide plate and the reflective sheet, the present invention is not limited to such configurations; prisms whose grooves extend parallel to the axes of the rod-type light sources may be engraved directly on surfaces of the light guide plate excluding the lateral surfaces (a pair of tip end surfaces and a pair of base end surfaces) of the parallel groove, e.g., on the light emitting plane and/or inclined surfaces.
For example, prisms 25 may be formed directly on the inclined surfaces 18d of the light guide plate 18 as illustrated in Figs. 19A and 19B. As illustrated in Fig. 20, prisms 26 may be formed on the light emitting plane 18a of the light guide plate 18 and prisms 25 may be formed on the inclined surfaces 18d. Prisms may also be formed on the parallel surfaces 18g.
Thus, prisms formed directly on surfaces of the light guide plate excluding the lateral surfaces (a pair of tip end surfaces and a pair of base end surfaces) of the parallel groove produce substantially the same effects as when the prism sheets are disposed. In addition, since the prism sheets may then be dispensed with, attenuation of light (lowering of brightness) caused by a gap formed when prism sheets are provided can be eliminated. As a result, the light use efficiency or light emitting efficiency of the planar lighting device can be enhanced as compared with a configuration where the prism sheets are disposed. Further, since the prism sheets need not be provided, the device can be made smaller (thinner).
The present invention uses a light guide plate having a configuration formed by a pair of contour lines approaching each other toward the light emitting plane and crossing at the peak, the contour lines each having a part whose inclination angle with respect to a line perpendicular to the light emitting plane varies so as to be sharper on the base end side (a pair of base end surfaces), which is located farther from the peak, than on the tip end side (a pair of tip end surfaces) of the parallel groove located closer to the peak. However, the present invention is not limited to such configuration; substantially the same effects can be produced by forming prisms on surfaces of the light guide plate excluding the lateral surfaces (a pair of tip end surfaces and a pair of base end surfaces) of the parallel groove also in cases where, for example, the parallel groove of the light guide plate used is triangular as illustrated in Fig. 9B, has a configuration where the inclination of the base end surfaces is not sharp in relation to the inclination of the tip end surfaces having for example a hyperbolic shape as illustrated in Fig. 13B, or has a configuration only defined by a sharpened tip end on the side closer to the light emitting plane.

Prisms engraved on the inclined surfaces preferably have a apex θₚ₁ satisfying 70° ≤ θₚ₁ ≤ 140°. Prisms formed in the light emitting plane preferably have a apex θₚ₂ satisfying 40° ≤ θₚ₂ ≤ 70°. When the apex θₚ₁ or the apex θₚ₂ of the prisms formed is set to the range, the light emitting efficiency of the planar lighting device can be enhanced in more preferable manner.

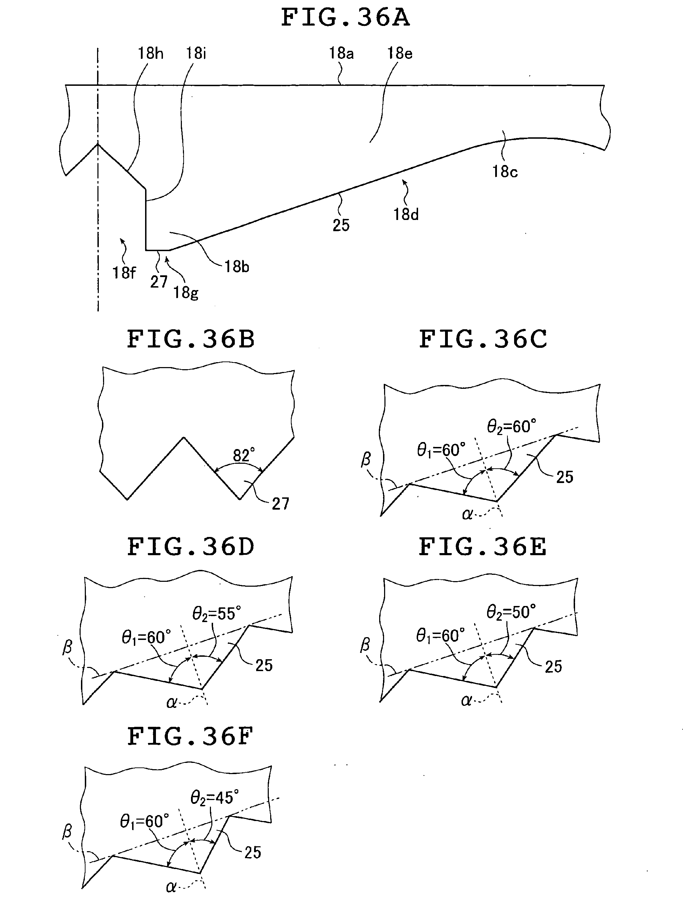

Figs. 36A to 36C illustrate examples of the light guide plate having prisms engraved on the inclined surfaces and the parallel surfaces. Fig. 36A is a schematic diagram illustrating the parallel surface and the inclined surface of the light guide plate 18; Fig. 36B is a schematic diagram illustrating prisms 27 engraved on the parallel surface 18g as enlarged; Fig. 36C is a schematic diagram illustrating prisms 27 engraved on the inclined surface 18d as enlarged. In Fig. 36A, the prisms are represented by a straight line without showing the ridges and grooves of prisms 25 and 27.
As illustrated in Fig. 36A, the light guide plate 18 has prisms 25 engraved on the inclined surfaces 18d and prisms 27 formed in the parallel surfaces 18g. As illustrated in Fig. 36B, each of the prisms 27 engraved on the parallel surfaces 18g has a shape of an isosceles triangle having a apex of 82° while as illustrated in Fig. 36C, each of the prisms 25 engraved on the inclined surfaces 18d has a shape of an isosceles triangle having a apex of 120°.
Thus, the light emitting efficiency can be enhanced by engraving prisms satisfying the range on the inclined surfaces. Forming prisms also on the parallel surfaces further increases the light emitting efficiency.

Although, in the above light guide plate, each of the prisms 25 formed in the inclined surfaces 18d is symmetrical with respect to a plane perpendicular to its base and passing through its apex or, more specifically, each of the prisms 25 formed in the inclined surfaces has surfaces that form an angle of 60° with that plane perpendicular to the base and passing through the apex. According to the present invention, however, each of the prisms formed in the inclined surfaces and the parallel surfaces is more preferably asymmetrical with respect to a plane perpendicular to its base and passing through its apex. In other words, it is more preferable that each of the prisms is asymmetrical with respect to a plane passing through its apex and perpendicular to the inclined rear portions without prisms or, otherwise described, asymmetrical with respect to a line perpendicular to a line connecting the contact points shared with adjacent prisms and passing through its apex in cross section in the perpendicular direction or, explained still otherwise, has a configuration such that the length of a contour line connecting its apex and its end closer to the parallel groove is different from the length of another contour line connecting its apex and its end closer to the thin end portion in cross section in the perpendicular direction.
The base of the prism herein is a virtual plane opposite the apex of the prism or a virtual plane connecting the contact points shared with adjacent prisms, that is, a virtual plane connecting the end of the prism closer to the parallel groove and its end closer to the thin end portion.

When the prisms formed on the inclined surfaces and the parallel surfaces each have a configuration asymmetrical with respect to a plane perpendicular to the base and passing through the apex, the angular distribution characteristics of the light emitted from the light emitting plane can be made uniform and the front brightness can be enhanced.
The angular distribution characteristics herein is brightness distribution characteristics of the light emitted from the backlight unit with respect to the view angle; when the light guide plate has even angular distribution characteristics at any point thereon, view angle-dependent unevenness in brightness is reduced.

Preferably, the prisms engraved on the inclined surfaces and the parallel surfaces are so configured that an angle (θ1) formed by a plane perpendicular to the base and passing through the apex and the surface closer to the parallel groove is not less than 0° and not greater than 70° or i.e., 0° ≤ θ1 ≤ 70° and that an angle (θ2) formed by a plane perpendicular to the base and passing through the apex and the surface closer to the thin end portion is not less than 45° and not greater than 70°, i.e., 45° ≤ θ2 ≤ 70°. More preferably, θ1 is not less than 30° and not greater than 70°, i.e., 30°≤θ1≤70°.
Examples of prism 25 engraved on the inclined surfaces 18d include one as illustrated in Fig. 36D, wherein the angle (hereinafter referred to as θ1) formed by a plane (line α in Fig. 36D) perpendicular to the base (line β in Fig. 36D) and passing through the apex and the surface closer to the parallel groove is 60° and an angle (hereinafter referred to as θ2) formed by a plane (line α) perpendicular to the base (line β) and passing through the apex and the surface closer to the thin end portion is 55°; another one as illustrated in Fig. 36E, wherein θ1 is 60° and θ2 is 50°; and yet another one, wherein θ1 is 60° and θ2 is 45°.
Thus, when prisms engraved on the inclined surfaces have a configuration satisfying the above ranges, the angular distribution characteristics of the light emitted from the light emitting plane can be made uniform and the front brightness can be enhanced. Further, when 30° ≤ θ1 ≤ 70° is satisfied, the apex θₚ₁ of the prism is 70° or greater; hence the light emitting efficiency of the planar lighting device can be enhanced in more preferable manner.
While, in the above embodiments, all the prisms formed in the inclined surfaces are asymmetrical with respect to a plane perpendicular to the base and passing through the apex, the invention is not limited thereto. To be specific, the angular distribution characteristics of the light emitted from the light emitting plane can be made uniform and the front brightness can be enhanced also by forming prisms asymmetrical with respect to a plane perpendicular to the base and passing through the apex only in part of the inclined surfaces and/or the parallel surfaces.

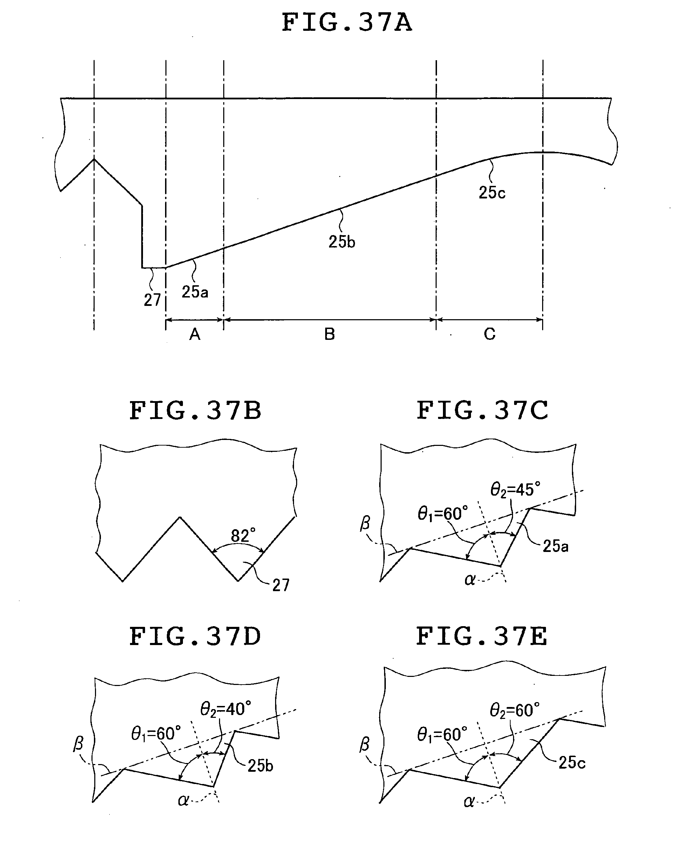

Figs. 37A to 37E illustrate other examples of the light guide plate having prisms engraved on the inclined surfaces and the parallel surfaces, wherein prisms are engraved on the inclined surfaces with different configurations according to their positions in the inclined surfaces in a direction perpendicular to the parallel groove. Fig. 37A is a schematic diagram illustrating the parallel surface and the inclined surface of the light guide plate 18.
The light guide plate 18 illustrated in Fig. 37A has prisms 27 engraved on the parallel surface 18g. The light guide plate 18 illustrated in Fig. 37A is further provided with prisms in three sections A, B, and C, the prisms being different among the sections, from a section of the inclined surface 18d adjacent the parallel surface 18g to a section connected with an inclined surface of an adjacent light guide plate. More specifically, prisms 25a are engraved in the section A close to the parallel surface, prisms 25b are engraved in the section B on a side of the section A closer to the thin end portion, and prisms 25c are engraved in the section C on a side of the section B closer to the thin end portion.

Figs. 37A to 37D illustrate configurations of the prisms engraved on the parallel surface, the section A, the section B, and the section C, respectively. Fig. 37B is a schematic diagram of the prisms 27 engraved on the parallel surface, Fig. 37C is a schematic diagram of the prisms 25a engraved in the section A of the inclined surface 18d, Fig. 37D is a schematic diagram of the prisms 25b engraved in the section B of the inclined surface 18d, and Fig. 37E is a schematic diagram of the prisms 25c engraved in the section C of the inclined surface 18d.
Each of the prisms 27 has a shape of an isosceles triangle or a bilaterally symmetrical shape having a apex of 82° as illustrated in Fig. 37B. Each of the prisms 25a has a triangular shape with θ1 of 60° and θ2 of 45° as illustrated in Fig. 37C; each of the prisms 25b has a triangular shape with θ1 of 60° and θ2 of 40°; and each of the prisms 25c has a triangular shape with θ1 of 60° and θ2 of 60°.

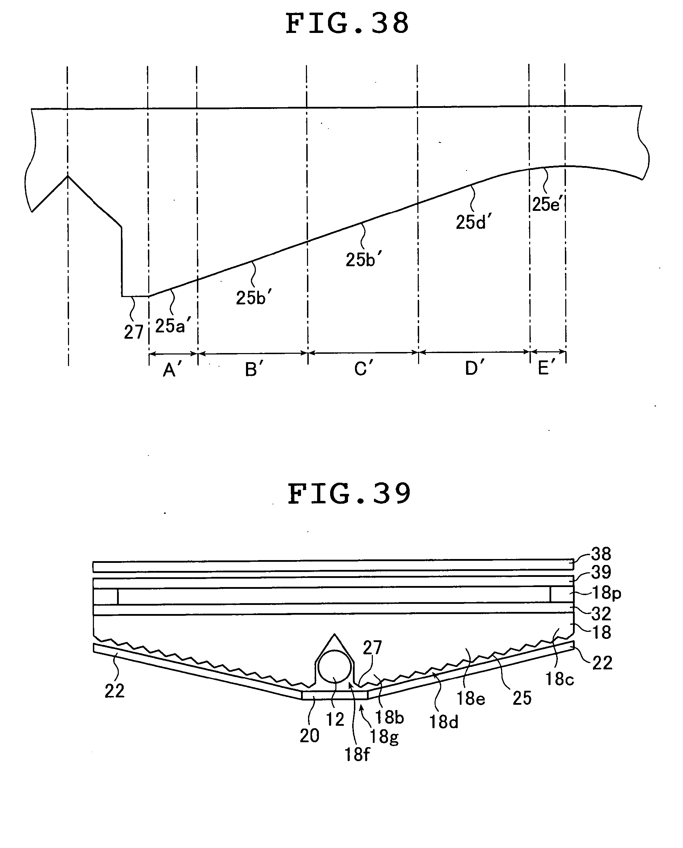

Fig. 38 illustrates another example wherein prisms are engraved on the inclined surfaces and the parallel surfaces with different configurations according to their positions in the inclined surfaces in a direction perpendicular to the parallel groove.
Each of the prisms 27 engraved on the parallel surface of the light guide plate has a shape of an isosceles triangle with a apex of 82° as in the above examples. Prisms 25a', 25b', 25c', 25d' and 25e' are engraved in five sections A', B', C', D', and E', from a section of the inclined surface 18d adjacent the parallel surface 18g to a section connected with the inclined surface of an adjacent light guide plate. Each of the prisms 25a' engraved has a triangular shape with θ1 of 60° and θ2 of 55°; each of the prisms 25b' engraved has a triangular shape with θ1 of 60° and θ2 of 50°; each of the prisms 25c' engraved has a triangular shape with θ1 of 60° and θ2 of 60°; each of the prisms 25d' engraved has a triangular shape with θ1 of 60° and θ2 of 50°; and each of the prisms 25e' engraved has a triangular shape with θ1 of 60° and θ2 of 60°.

With the prisms engraved with different configurations according to their positions in the inclined surfaces in a direction perpendicular to the parallel groove, uniformity of the angular distribution characteristics of the light emitted from the light emitting plane can be further enhanced and the front brightness can be further increased.

Preferably, each of the prisms has a base not longer than 0.1 mm in a direction perpendicular to the parallel groove.
With the base of each prism not longer than 0.1 mm, the viewability of the prism structure can be virtually ignored.
The number of sections of the prisms formed in the inclined surfaces and the parallel surfaces, their widths, and ratios are not limited specifically and the prisms may be provided with as many sections, widths and ratios as desired. While, in the above embodiments, each prism formed in the parallel surfaces has a shape symmetrical with respect to a plane perpendicular to its base and passing through its apex, each prism may of course has an asymmetrical shape.
Further, the pattern in which the prisms are disposed is not limited specifically and the prisms may of course be disposed in any pattern desired according to the requirements. While, in the above embodiments, different prisms are engraved in different sections, the present invention is not limited thereto; for example, prisms having a triangular shape with θ1 of 60° and θ2 of 50° may alternate with prisms having a triangular shape with θ1 of 60° and θ2 of 50°.

Preferably, the prisms engraved on the inclined surfaces and the parallel surfaces are engraved (formed) symmetrically on a pair of inclined surfaces and the parallel surfaces with respect to the center line passing through the center of the parallel groove and perpendicular to the light emitting plane.
The method of forming prisms is not limited specifically: the prisms may be formed by cutting the inclined surfaces, or attached; when the light guide plate is produced by extrusion or injection molding, a mold bearing a form of prisms may be used to produce a light guide plate having prisms formed thereon.

Preferably, the light guide plate 18 is provided with raised strips formed on the light emitting plane 18a. For example, a raised strip having a sectional shape with a rounded top comparable to an ellipse cut in half with a given height and a width may be positioned on a boundary between adjacent light guide plates. The height of the raised strips is not limited specifically, provided that they have a height such that unevenness in brightness on the light emitting plane 18a of the light guide plate 18 can be sufficiently reduced by a film material disposed thereon. The shape of the raised strips is not limited specifically and may for example be rectangular, trapezoidal, semicircular or triangular in cross section. The positions of the raised strips are also not limited specifically and they may be positioned in any location. Nor is the number of raised strips limited; three or more raised strips for example may be formed in a light guide plate.

The raised strips formed on the light emitting plane may be formed integrally with the light guide plate when the light guide plate is produced, or a light guide plate having a flat light emitting plane may be first produced and then raised strips may be disposed on the flat light emitting plane. For ease of production, raised strips are preferably formed integrally with the light guide plate.
Thus, the raised strips formed on the light emitting plane can be used as spacers to secure a gap between the optical members forming part of the light guide plate and the light emitting plane. Specifically, the raised strips can be used as spacers to separate the optical members in the form of film such as the prism sheets and the diffusion sheet provided on the light emitting plane from the flat areas of the light emitting plane by a given distance. Briefly, the raised strips formed on the light emitting plane serve to reduce unevenness in brightness.
Furthermore, when they are provided integrally with the light guide plate, the production is easy and alignment of the light guide plate with the raised strips is unnecessary.

Fig. 39 illustrates a preferred configuration comprising a halftone dot sheet 32 disposed on the light emitting plane of the light guide plate 18, a halftone dot plate 39 disposed thereon supported by raised strips 18p, and a brightness enhancing film 38 on the halftone dot plate 39.
In Fig. 39, the raised strips 18p formed on the light emitting plane 18a are distinct members not integrally formed with the light guide plate 18 and has a rectangular shape in cross section. The light guide plate 18 illustrated in Fig. 39 has prisms engraved on the inclined surfaces and the parallel surfaces as in the embodiment illustrated in Fig. 36.
In cases where, as illustrated in Fig. 39, a configuration with two different halftone dot patters arranged on the optical path of the light emitted from the light emitting plane 18a of the light guide plate 18 is used, it is preferable that the halftone dot pattern of the halftone dot sheet 32 disposed closer to the light emitting plane 18 of the light guide plate 18 is configured by a pattern for reducing unevenness in brightness due to high frequencies whereas the halftone dot pattern of the halftone dot plate 39 spaced from the light emitting plane 18a by a height of the raised strips 18p is configured by a pattern for reducing unevenness in brightness due to low frequencies. Such configuration effectively inhibits the generation of unevenness in illumination light.
Unevenness in brightness due to high frequencies herein means unevenness dB/dx in brightness that satisfies 5 < |dB/dx|, where dx (mm) is a distance between a given point x1 and another given point x2 on the light emitting plane of the light guide plate, and dB is a difference between a brightness B1 (cd/m²) at the point x1 and a brightness B2 (cd/m²) at the point x2, provided that the distance dx between the two points satisfies 0.1 mm < dx < 3 mm. Unevenness in brightness due to low frequencies means unevenness dB/dx in brightness that satisfies |dB/dx| ≤ 5 when the distance dx between the two points satisfies 3 mm ≤ dx.

While, in Fig. 39, only the brightness enhancing film 39 is provided on the surface of the halftone dot plate 39 from which light is emitted, it is preferable to provide other optical members as well such as the diffusion sheet, the optical compensation film, and the prism sheets to further diffuse light and/or enhance brightness.

While the above embodiments solely show examples wherein the planar lighting device is used as a backlight unit for the liquid crystal display device, the present invention is not limited thereto; the planar lighting device according to the present invention may also be used as a planar lighting device for indoor and outdoor illumination and as a planar lighting device for a backlight used in advertising boards, advertising towers, sign boards, and the like.

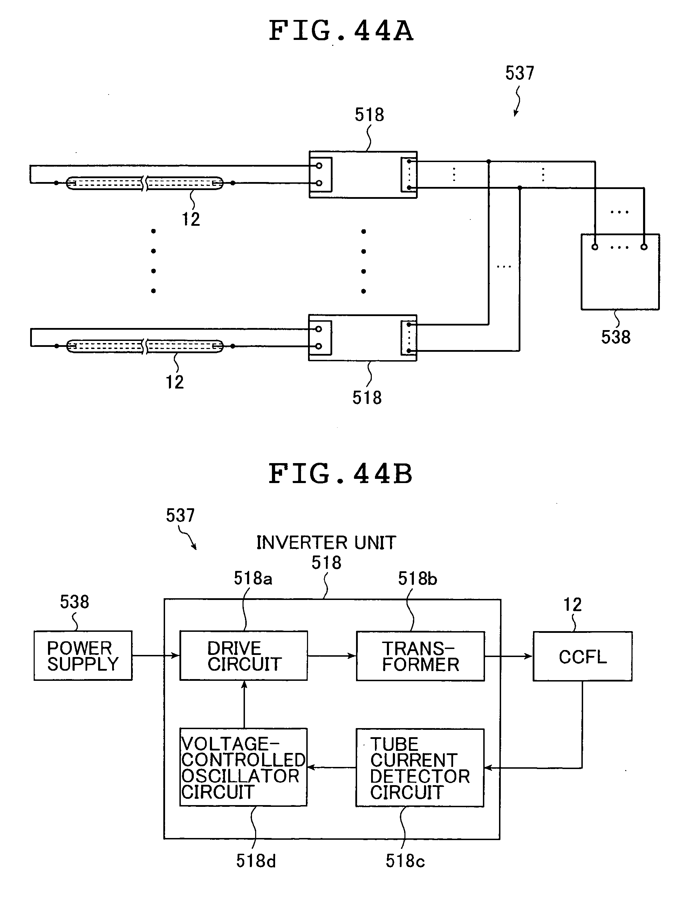

Specific embodiments of the planar lighting device used as indoor lighting device and lighting device for sign boards, etc., will now be described by way of example.

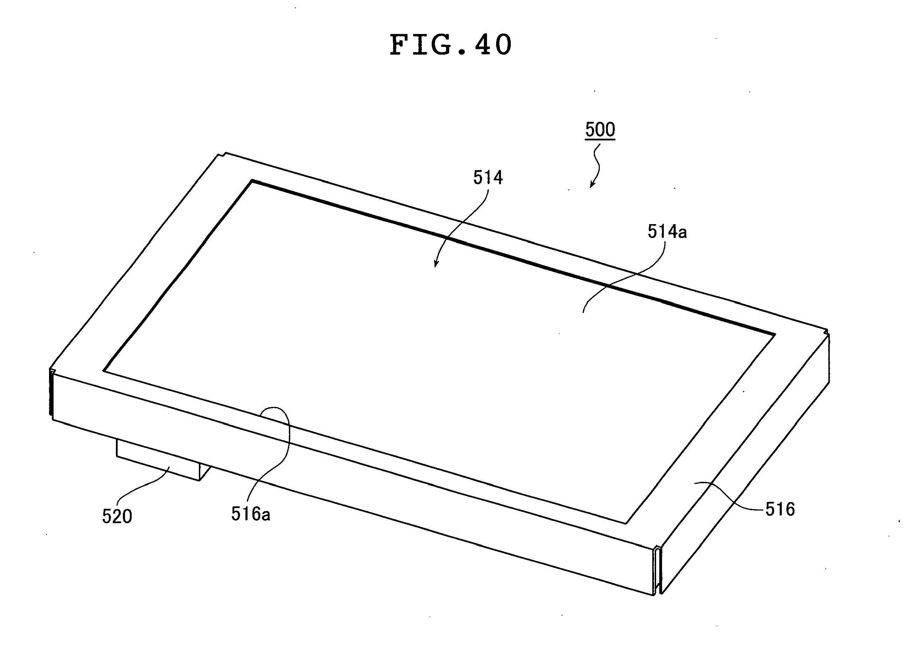

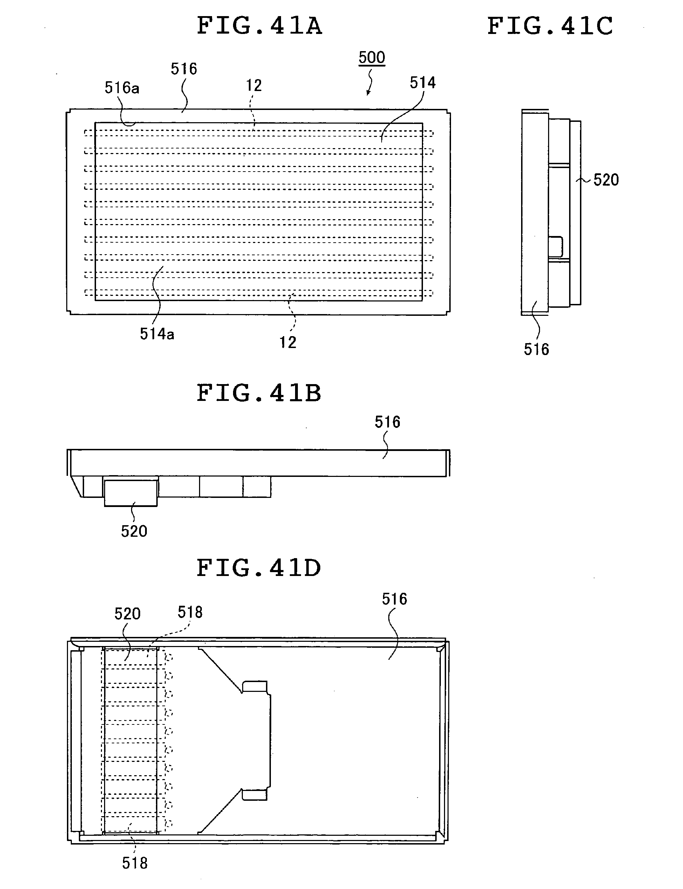

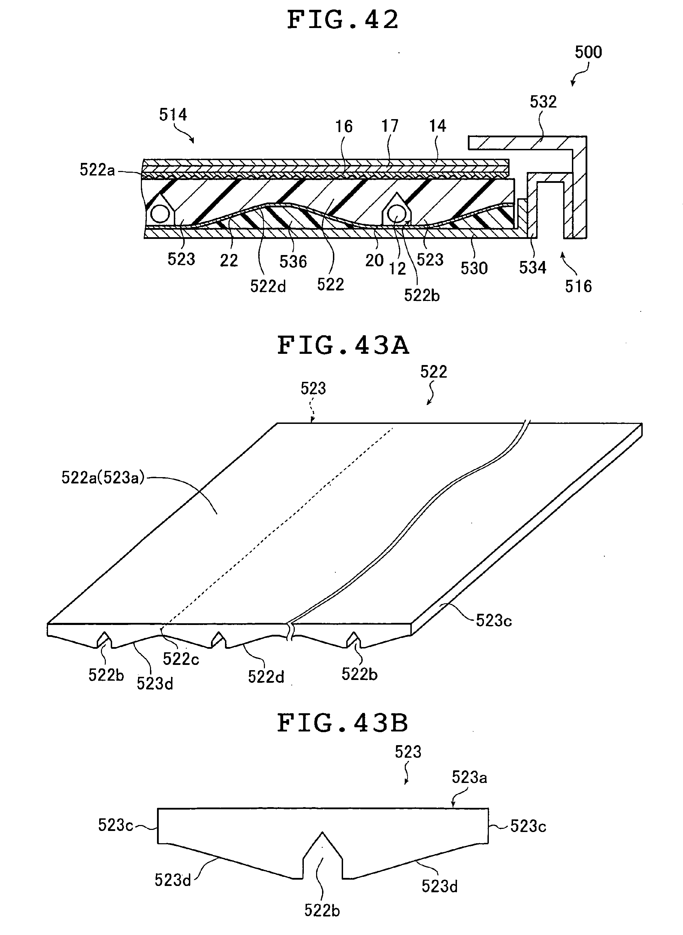

Fig. 40 is a schematic perspective view illustrating the exterior of an embodiment of the inventive planar lighting device as seen from the side thereof closer to the light emitting plane. Figs. 41A, 41B, 41C, and 41D are each a front view, a bottom view, a lateral view, and a rear view of the planar lighting device illustrated in Fig. 40. Fig. 42 is a partial cross section of the embodiment of the planar lighting device illustrated in Fig. 40. In these and other drawings that follow, the planar lighting device is shown enlarged widthwise for ease of understanding.
As illustrated in Fig. 40 and Figs. 41A to 41D, a planar lighting device 500 comprises a main body 514 of a lighting device for emitting a uniform light from a rectangular light emitting plane 514a, a housing 516 accommodating the main body 514 of the lighting device therein and having a rectangular opening 516a on a side closer to the light emitting plane 514a (front side), an inverter accommodating portion 520 provided on a side of the housing 516 opposite from the light emitting plane 514a (rear side) and accommodating a plurality of inverter units 518 used to turn on their respective linear light sources 512 housed in the main body 514 of the lighting device, and a power supply 538 connected to the inverter units 518 accommodated in the inverter accommodating portion 520 and turning on a plurality of linear light sources 512 (see Fig. 44).

As illustrated in Figs. 42 and 43A, the main body 514 of the lighting device comprises a plurality of light sources 12, the prism sheets 16, 17, a connected light guide plate 522, the reflector 20, and the reflective plate 22. The main body 514 of the lighting device has substantially the same configuration as the planar lighting device 2 illustrated in Figs. 1 and 2 except for the configuration of the connected light guide plate 522 comprising a plurality of light guide plates 523 connected, and therefore will not be described.

As illustrated in Fig. 43A, the connected light guide plate 522 has a plurality of light guide plates 523 connected. The plurality of light guide plates 523 are connected to form a one-piece connected light guide plate 522. The connected light guide plate 522 has such a structure that the light guide plates 523 arranged adjacent each other in a direction perpendicular to parallel grooves 522b are joined at their thin end portions 523c, the thin end portions 523c forming the thinnest portions 522 of the connected light guide plate 522. Light emitting planes 523a of the plurality of light guide plates 523 are joined flush to each other to form an even, flat light emitting plane 522a in the light guide plate 522.
Each one of the light guide plates 523 has substantially the same configuration as the above light guide plate 18 except that as illustrated in Fig. 43B, part of the inclined surfaces 23d closer to the thin end portion 23c is curved, and therefore will not be described in detail.

The embodiment illustrated in Fig. 43A is a sheet of connected light guide plate provided by forming the plurality of light guide plates 523 joined into a single piece of light guide plate. If desired, one may use a plurality of connected light guide plates, each of which is in turn formed by forming a plurality of light guide plates 523 as connected into a single piece, joined together to fabricate a large light guide plate array having a large-area light emerging surface 22a instead of using a connected light guide plate, with a view to achieving cost reduction, higher yield and easier production. In this case, to form a light guide plate array, thin end portions 523c of the light guide plates 523 of adjacent connected light guide plates may be joined in a direction perpendicular to the parallel grooves 522b, thereby achieving enlargement and hence increasing the area of the light emerging surface 522a; or sides perpendicular to the thin end portions 523c of adjacent connected light guide plates may be joined in a direction parallel to the parallel grooves 522b, thereby achieving enlargement, hence an increased area of the light emerging surface 522a; alternatively, as a combined form of these two configurations, connected light guide plates may be joined in directions both parallel to and perpendicular to the parallel grooves 522b, thereby achieving further enlargement, hence an increased area of the light emitting plane 522a. Needless to say, uniform planar light emitting planes of the individual connected light guide plates are joined flush to each other such that an even light emitting plane is formed in a completed light guide plate array.

A specific example of the light guide plate array may be one obtained as follows: 7 light guide plates 523 each with a light emitting plane 523a measuring 28 mm in a direction perpendicular to the longitudinal direction of the light sources 12 and a light emitting plane 522a measuring 560 mm in a direction parallel to the longitudinal direction of the light sources 12 are joined to make 3 connected light guide plates 522 each formed in one piece and having a light emitting plane 522a measuring 196 mm in a direction perpendicular to the longitudinal direction of the light sources 12 and 560 mm in a direction parallel to the longitudinal direction of the light sources 12; the 3 connected light guide plates 522 are joined in a direction perpendicular to the parallel grooves 522b to make a light guide plate array with a light emitting plane measuring 588 mm in a direction perpendicular to the longitudinal direction of the light sources 12 and 560 mm in a direction parallel to the longitudinal direction of the light sources 12.

Further, one may use a light guide plate array composed of connected light guide plates, of which one connected light guide plate consists of a different number of light guide plates than another.
Specifically, an example of such light guide plate array may be one obtained as follows: 12 light guide plates 523 each with a light emitting plane 523a measuring 28 mm in a direction perpendicular to the longitudinal direction of the light sources 12 and a light emitting plane 522a measuring 715 mm in a direction parallel to the longitudinal direction of the light sources 12 are joined to make 2 connected light guide plates 522 each formed in one piece and having a light emitting plane 522a measuring 336 mm in a direction perpendicular to the longitudinal direction of the light sources 12 and 715 mm in a direction parallel to the longitudinal direction of the light sources 12; 13 light guide plates 523 each with a light emitting plane 523a measuring 28 mm in a direction perpendicular to the longitudinal direction of the light sources 12 and a light emitting plane 522a measuring 715 mm in a direction parallel to the longitudinal direction of the light sources 12 are joined to make one connected light guide plate 522 formed in one piece and having a light emitting plane 522a measuring 364 mm in a direction perpendicular to the longitudinal direction of the light sources 12 and a light emitting plane 522a measuring 715 mm in a direction parallel to the longitudinal direction of the light sources 12; these 3 connected light guide plates 522 are joined in a direction perpendicular to the parallel grooves 522b to make a light guide plate array with a light emitting plane measuring 715 mm in a direction perpendicular to the longitudinal direction of the light sources 12 and 1036 mm in a direction parallel to the longitudinal direction of the light sources 12.
When joining the light guide plates, the inclined rear portions may be trimmed or a gap, if any, may be filled with a PMMA composite material, or other measures may be taken, to adapt to desired dimensions.

The housing 516 serves to support the main body 514 of the lighting device such that the latter is accommodated in the housing 516; the housing 516 also fixes the main body 514 by holding it on two sides, one facing the light emitting plane 514a and the other facing the reflector 20 and the reflective sheet 22. The housing 516 comprises a lower housing 530 that, open on the top, supports the main body 514 of the lighting device as the latter is placed in it from above and covers the four lateral sides of the main body 514; an upper housing 532 having on the top a rectangular opening 16a smaller than the rectangular light emitting plane 514a of the main body 514 of the lighting device, open on the bottom, and being slipped from above over the main body 514 of the lighting device and the lower housing 530 accommodating the main body 514 so as to cover the four lateral sides of both; a U-shaped turnup member 534 inserted between a sidewall of the lower housing 530 and a sidewall of the upper housing 532; and a light guide plate support member 536 provided on the bottom of the lower housing 530 to support the back surface 522d of the connected light guide plate 522 via the reflective sheet 22 and thereby support the main body 514 of the lighting device as a whole. Although not shown in Fig. 42, the inverter accommodating portion 520 (see Fig. 41) that accommodates a plurality of inverter units 518 is fitted on the rear side of the lower housing 530.

In order to join the lower housing 530 to the turnup member 534, and the turnup member 534 to the upper housing 532, various known methods can be employed, such as a method using bolts and nuts, and a method using an adhesive.
The upper housing 532 must be larger than the lower housing 530 and the turnup member 534 needs to be provided at least in the gap between the outer wall surfaces of the two lateral sides of the lower housing 530 parallel to the parallel grooves 522b. of the connected light guide plate 522 of the main body 514 of the lighting device or to the light sources 12 accommodated therein and the inner wall surfaces of the corresponding sides of the upper housing 532. When desired, the turnup member 34 may be provided on the four sides of the housing 516 between the sidewalls of the lower housing 530 and the side walls of the upper housing 532. It is preferable to attach a reinforcement member for reinforcing the recess of the U-shaped turnup member 534.
The provision of the turnup member 534 serves to increase the rigidity of the housing 516 and enables efficient emission of uniform light. Specifically, even though the connected light guide plate 522 may be liable to warp because of the parallel grooves 522b, the warp can be corrected or the warping of the connected light guide plate 522 can be prevented so that desirable optical characteristics can be obtained without developing unevenness in brightness or the like. Further, with the reinforcement member for reinforcing the recess of the turnup member 534 provided, the rigidity of the housing 516 can be increased and the warping of the connected light guide plate 522 can be prevented in a more desirable manner. Thus, more desirable optical characteristics can be obtained. To convert the color temperature, one may use commercially available filters for converting the color temperature.

The light guide plate support member 536 is formed of a resin such as polycarbonate. In the illustrated case, the light guide plate support member 536 is a member having convex configuration with a profile that is an inverse of the profile of the part corresponding to the back surface 522d of the thinnest portion 522c of the connected light guide plate 522, i.e., an inverse of the profile defined by the inclined surfaces 523d of two light guide plates connected. The light guide plate support member 536 is provided on the bottom of the lower housing 530 across the back surface 522d of the connected light guide plate 522 at given intervals for every thinnest portion 522c of the connected light guide plate 522. However, the present invention is not limited thereto; the light guide plate support member 536 may be a continuous member of which the convex portions having a profile that is an inverse of the profile of the back surface 522d of the connected light guide plate 522 are provided at given intervals.
Note also that the housing 516 may be provided with optional members including fasteners such as L-shaped fittings for joining its four corners, an elastic member that is formed of an elastic material such as rubber fitted between the diffusion sheet 514 in the main body 514 of the lighting device and the periphery of the opening 514a of the upper housing 530, and a protective member that protects the whole top surface of the diffusion sheet 14 in the main body 514 of the lighting device.
This is the basic composition of the housing 516.

Now the drive unit for driving a plurality of linear light sources 12 accommodated inside the parallel grooves 522b of the connected light guide plate 522 in the main body 514 of the lighting device will be described.
The drive unit generally indicated by 537 in Figs. 44A and 44B drives, namely, turns on and off, the plurality of linear light sources 12 such as CCFLs, thereby driving the illuminating action of a planar lighting device 500. The drive unit 537 comprises a plurality of inverter units 518 that are connected to the respective linear light sources 12 such as CCFLs and a power supply 538 that is connected to the plurality of inverter units 518. Note that the block diagram of Fig. 44B represents the drive unit 537 as for turning on a single linear light source 12 such as a CCFL in order to show details of the composition of the inverter units 518.
The power supply 538 is a DC power supply for outputting a DC voltage, say, at 24 volts. This DC voltage is supplied to each of the inverter units 518 connected to the power supply 538.

The inverter unit 518 comprises a drive circuit 518a for generating a primary AC signal of a given frequency at a given voltage (e.g., 650 Vp-p) from the DC voltage supplied from the power supply 538, a transformer 518b connected to the linear light source 12 to boost the primary AC signal generated in the drive circuit 518a to a secondary AC signal having a sufficiently high voltage (e.g., 6500 Vp-p and 1,000 to 2,400 Vrms) to turn on the linear light source 12 such as a CCFL, a tube current detector circuit 518c also connected to the linear light source 12 such as a CCFL to detect a tube current flowing through it, and a voltage-controlled oscillator circuit 518d for receiving a feedback of the tube current delivered from the tube current detector circuit 518c and, in accordance with the tube current thus fed back, generating a clock (fundamental wave) of a given frequency for generating the primary AC signal in the drive circuit 518a.

With the drive unit 537 for the linear light source 12 thus configured in the present invention, the plurality of linear light sources 12 can be lighted simultaneously and uniformly with high efficiency in a consistent and stable manner, thereby enabling emission of light with uniform brightness.
In the foregoing description, the plurality of linear light sources 12 are lighted simultaneously; however, the inverter units 518 may be adapted to operate such that only some of the linear light sources are turned on, or linear light sources may be turned on selectively.
Described above are the basic compositions of the drive unit for the linear light sources and the planar lighting device.

Note that with the inverters 518 provided on the rear side of the housing 516 as in the embodiments under discussion, the area of the periphery of the housing 516 can be reduced.

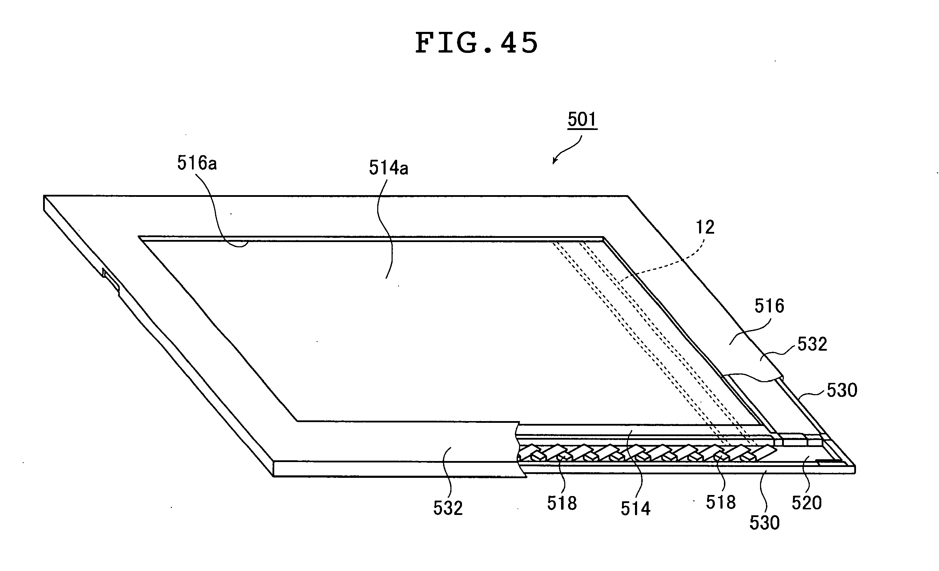

In the planar lighting device 500 according to the embodiment described above, the inverter accommodating portion 520 is provided on the rear side of the housing 516 to accommodate the plurality of inverter units 518. However, the present invention is not limited thereto; the planar lighting device may be modified as a planar lighting device generally indicated by 501 in Fig. 45, where a space is provided between the lower housing 530 and the upper housing 532 in an area adjacent a side of the opening 516a of the housing 516 that is perpendicular to the linear light sources 12, so as to provide the inverter accommodating portion 520 for accommodating the plurality of inverter units 518. Thus, the back surface of the planar lighting device 501, i.e., the back surface of the housing 516, is made sufficiently flat that it can be mounted on a ceiling or a wall more easily. Further, the planar lighting device can be made thinner.

The various aspects (e.g., configurations of the light guide plates and embodiments of the planar lighting device) described above can also be applied to light guide plates having various configurations of which the parallel grooves are described in JP 2005-234397 A, and can be applied suitably to, in particular, light guide plates with a light guide plate having a hyperbolic shape.

## Claims

1. A transparent light guide plate comprising:
a rectangular light emitting plane;
a thick portion parallel to one side edge of said rectangular light emitting plane and located substantially at a center of said rectangular light emitting plane;
a pair of thin end portions formed substantially parallel to said thick portion;
a parallel groove for accommodating a rod-type light source and formed substantially parallel to said one side edge at substantially a center of said thick portion and on a side opposite to said rectangular light emitting plane; and
a pair of inclined rear portions formed such that a thickness of each of said pair of inclined rear portions decreases in a perpendicular direction substantially perpendicular to said one side edge from said thick portion toward each of said pair of thin end portions at both ends to form a pair of inclined rear surfaces on both sides of said parallel groove,
wherein said parallel groove having a shape formed by a pair of contour lines approaching each other toward said rectangular light emitting plane to cross each other at a peak in cross section in the perpendicular direction, and
each of said contour lines of said parallel groove in the cross section in the perpendicular direction comprises a part in which an inclination angle with respect to a line perpendicular to said rectangular light emitting plane changes such that said inclination angle of a base end side farther from said peak is smaller than said inclination angle of a tip end side closer to said peak.

2. The light guide plate according to claim 1, wherein, in the cross section of said parallel groove in the perpendicular direction, a tip end portion of said parallel groove has a shape defined by said pair of contour lines approaching each other toward said rectangular light emitting plane in accordance with to a ratio of a peak value of illuminance or brightness produced by light emitted from said rod-type light source accommodated in said parallel groove in a first portion of said rectangular light emitting plane corresponding to said parallel groove to a mean value of the illuminance or brightness produced by the emitted light in second portions corresponding to said pair of inclined rear portions.

3. The light guide plate according to claim 1 or 2, wherein
said pair of inclined rear portions are symmetrical with respect to a plane perpendicular to said rectangular light emitting plane and containing an axis of said rod-type light source,
said pair of contour lines of said parallel groove are symmetrical with respect to a center line of said parallel groove perpendicular to said rectangular light emitting plane in the cross section in the perpendicular direction, and
said tip end portion of said parallel groove narrows it's width toward said rectangular light emitting plane symmetrically with respect to the center line of said parallel groove perpendicular to said rectangular light emitting plane in cross section of said parallel groove in the perpendicular direction.

4. The light guide plate according to claim 2 or 3, wherein said pair of contour lines forming said tip end portion of said parallel groove approach each other such that said peak value of the illuminance or brightness in said first portion of said rectangular light emitting plane is not greater than 3 times said mean value of the illuminance or brightness in said second portions.

5. The light guide plate according to any one of claims 1 to 4, wherein said pair of inclined rear portions have parallel portions parallel to said rectangular light emitting plane near said parallel grooves.

6. The light guide plate according to any one of claims 1 to 5, wherein plural small prisms are formed on said rectangular light emitting plane.

7. The light guide plate according to any one of claims 1 to 6, wherein plural small prisms are formed on said pair of inclined rear portions.

8. The light guide plate according to claim 7, wherein said plural small prisms formed on said pair of inclined rear portions have different configurations in accordance with their positions in the perpendicular direction.

9. The light guide plate according to claim 7 or 8, wherein each of said plural small prisms formed on said pair of inclined rear portions has an asymmetrical configuration with respect to a plane passing through prism apexes of said plural small prisms and perpendicular to said pair of inclined rear portions without prisms provided thereon.

10. The light guide plate according to any one of claims 7 to 9, wherein each of said plural small prisms formed on said pair of inclined rear portions has a prism apex whose angle ranges between 70° inclusive and 140° inclusive.

11. The light guide plate according to any one of claims 7 to 10, wherein each of said plural small prisms formed on said pair of inclined surfaces are so configured that an angle formed by a plane being perpendicular to a prism base of each of said plural small prisms and passing through a prism apex of each of said plural small prisms, and one surface of each of said plural small prisms closer to said parallel groove ranges from 0° inclusive to 70° inclusive, and an angle formed by said plane being perpendicular to said prism base of each of said plural small prisms and passing through said prism apex of each of said plural small prisms, and one surface of each of said plural small prisms closer to said thin end portion ranges from 45° inclusive to 70° inclusive.

12. The light guide plate according to any one of claims 7 to 11, wherein each of said plural small prisms has a prism base not longer than 0.1 mm in the perpendicular direction.

13. The light guide plate according to any one of claims 1 to 12, wherein said pair of contour lines in said tip end portion form an angle of 90° or less in the cross section of said parallel groove.

14. The light guide plate according to any one of claims 1 to 13, wherein said pair of contour lines of at least said tip end portion of said parallel groove are segments of two straight or curved lines that cross each other to form an acute intersection and which are symmetrical with respect to the center line.

15. The light guide plate according to claim 14, wherein said two curved lines defining said pair of contour lines of at least said tip end portion of said parallel groove are curved outward or inward with respect to the center of said parallel groove.

16. The light guide plate according to claim 14 or 15, wherein said two curved lines defining said pair of contour lines of at least said tip end portion of said parallel groove or said pair of contour lines of said parallel groove are segments of a circle, an ellipse, a parabola, or a hyperbola curving outward or inward with respect to the center of said parallel groove.

17. The light guide plate according to any one of claims 1 to 14, wherein a sectional shape of at least said tip end portion of said parallel groove or the sectional shape of said parallel groove is a triangle.

18. The light guide plate according to any one of claims 14 to 17, wherein a sectional shape of a top of said tip end portion of said parallel groove has a configuration composed of connected straight or curved lines symmetrical with respect to the center line before the two symmetrical straight or curved lines cross each other.

19. The light guide plate according to claim 18, wherein the sectional shape of the top of said tip end portion of said parallel groove has a configuration comprising a portion parallel to the light emitting plane formed by chamfering the acute intersection.

20. The light guide plate according to claim 18, wherein the sectional shape of the top of said tip end portion of said parallel groove is circular, elliptical, parabolic or hyperbolic as a result of rounding one acute intersection symmetrically with respect to the center line.

21. The light guide plate according to any one of claims 1 to 12, wherein said pair of contour lines of at least said tip end portion of said parallel groove are segments of an ellipse or a hyperbola.

22. A light guide plate comprising a plurality of light guide plate blocks, each light guide plate block being the light guide plate according to any one of claims 1 to 21, wherein said plurality of light guide plate blocks are joined together at thin end surfaces of light guide plates.

23. The light guide plate according to claim 22, wherein respective inclined rear surfaces of two light guide plate blocks joined together have portions inclined gently with respect to each other at joints of said respective inclined thin end surfaces.

24. The light guide plate according to any one of claims 1 to 23 being composed of a material comprising at least a plasticizer mixed in a transparent resin.

25. A planar lighting device comprising:
a light guide plate according to any one of claims 1 to 24;
a rod-type light source accommodated by said parallel groove of said light guide plate;
a reflector provided behind said rod-type light source to close said parallel groove;
a reflective sheet attached to said pair of inclined rear surfaces of said pair of inclined rear portions on both sides of said thick portion of said light guide plate; and
a diffusion sheet disposed on said rectangular light emitting plane of said light guide plate.

26. The planar lighting device according to claim 25, further comprising a prism sheet disposed between said rectangular light emitting plane of said light guide plate and said diffusion sheet.

27. A liquid crystal display device, comprising:
a backlight unit consisting of the planar lighting device according to claim 25 or 26;
a liquid crystal display panel disposed on a side of said backlight unit closer to said rectangular light emitting plane of said light guide plate; and
drive units for driving said backlight unit and said liquid crystal display panel.
